# EUROPEAN PATENT APPLICATION

(11) **EP 1 746 773 A1**
(43) Date of publication of application: **24.01.2007**
(21) Application number: 05745684.0
(22) Date of filing: 01.06.2005
(51) Int. Cl.: H04L 12/28, H04L 1/16, H04L 12/56

(54) **RADIO TRANSMISSION METHOD**

(30) Priority: 02.06.2004 JP 2004164202; 16.06.2004 JP 2004177857; 17.12.2004 JP 2004365685
(71) Applicant: MATSUSHITA ELECTRIC INDUSTRIAL CO., LTD., Osaka 571-8501 (JP)
(72) Inventor: HAMAMOTO, Yasuo Matsushita Electric Indust. Co, Chuo-ku, Osaka-shi, Osaka 540-6319 (JP); HAYASHINO, Hiroshi Matsushita Electric Indust. Co, Chuo-ku, Osaka-shi, Osaka 540-6319 (JP); OHTA, Kazuhiro Matsushita Electric Indust. Co, Chuo-ku, Osaka-shi, Osaka 540-6319 (JP); UENO, Norihito Matsushita Electric Indust. Co, Chuo-ku, Osaka-shi, Osaka 540-6319 (JP); OHTA, Yoshitaka Matsushita Electric Indust. Co, Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2005/010055
(87) International publication number: WO 2005/119969

(57) **Abstract**

Retransmission control and retransmission are performed at a lower priority than the transmission of multicast packets from a transmission apparatus to two or more reception apparatuses. A communication apparatus performs wireless multicast transmission to reliable transmit packets. In a transmission side terminal, sequence numbers are attached at a layer higher than the Mac layer to each of secured-bandwidth or priority control-type Mac layer multicast packets, and in a plurality of reception side terminals, missing packets are detected using the sequence numbers, and bandwidth other than the secured bandwidth or lower priority packets are used to perform retransmission requests. The transmission terminal retransmits data using bandwidth other than the secured bandwidth or lower priority packets, thereby enabling favorable reception of audio, video and data when transmitting the audio, video and data in real-time to the reception terminals using wireless secured bandwidth-type or priority control-type Mac layer multicast transmission.

## Description

### TECHNICAL FIELD

The present invention relates to a wireless transmission method that improves a reliability of a transmission by using retransmission processing, in particular when using a wireless technology to multicast or broadcast transmit audio and video data.

### BACKGROUND ART

There is a conventional wireless transmission method that repeatedly transmits multicast packets from the beginning a number of times in order to improve the reliability of the wireless multicast transmission (e.g., see patent document 1). Fig. 55 is a transmission time chart of a conventional wireless transmission apparatus disclosed in patent document 1.

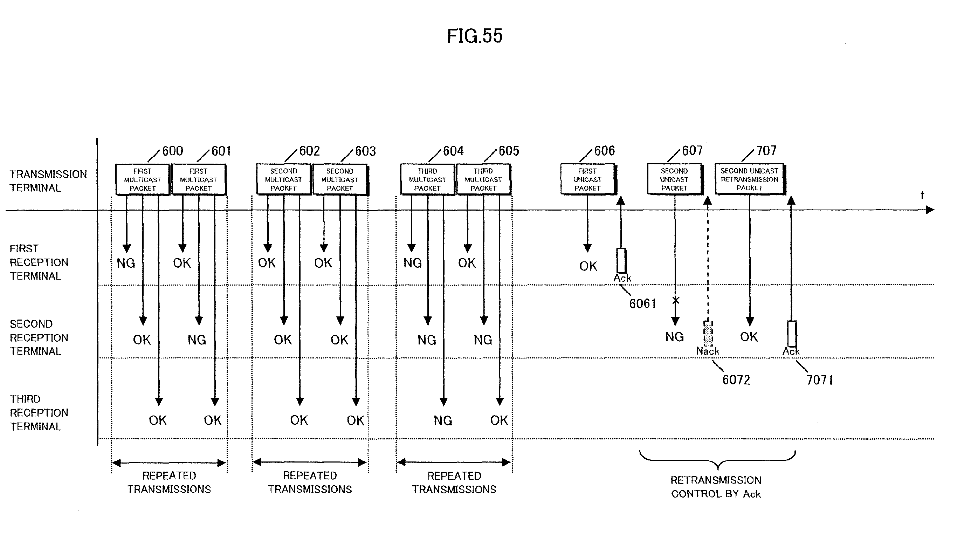

In Fig.55, a left column indicates types of terminals, and a horizontal line indicates a time axis. In this figure, 600, 601, 602, 603, 604 and 605 are multicast packets transmitted simultaneously from a transmission terminal to a first reception terminal, a second reception terminal and a third reception terminal. 606 and 607 are unicast packets transmitted from the transmission terminal to the first reception terminal and the second reception terminal respectively. 707 is the unicast packet 607 that has been retransmitted. 6061 is an Ack packet confirming successful reception of the unicast packet 606. 6072 is a Nack packet confirming failed reception of the unicast packet 607. 7071 is an Ack packet confirming successful reception of the unicast packet 707.

In the former half of the time chart, wireless multicast transmission is performed to simultaneously transmit the multicast packets from the transmission terminal to the first, second, and third reception terminals. In the latter half of the time chart, wireless unicast transmission is performed to individually transmit the unicast packet 606 from the transmission terminal to the first reception terminal, and the unicast packet 607 from the transmission terminal to the second reception terminal.

Next is a description of operations of multicast transmission and unicast transmission performed by the wireless transmission apparatus, with reference to the aforementioned transmission time chart.
Generally, in multicast transmission, a reception terminal does not transmit an Ack packet, which is a packet confirming successful reception of a MAC layer packet, (or a Nack packet, which is a packet confirming failed reception) to a transmission terminal. For this reason, retransmission control using an Ack packet (or Nack packet) cannot be performed in multicast transmission, making it difficult to ensure the reliability of the transmission. While there may not be any problems in wired transmissions even without performing retransmission control using Ack packets (or Nack packets) since transmission quality is superior to wireless transmission, multicast on a wireless transmission path is often not practical due to low transmission quality.

In wireless multicast transmission performed by conventional wireless transmission apparatuses, there is a method of raising reception probability by repeatedly transmitting the multicast packets 600, 602 and 604 in the former half of the time chart a number of times from the beginning, in order to improve the above situation. In Fig.55, the multicast packets 600, 602 and 604 are each transmitted twice. 601, 603 and 605 are repeated packets of the multicast packets 600, 602 and 604 respectively.

In Fig.55, the first reception terminal fails to receive the multicast packet 600 in the first instance of transmission, but properly receives the repeated packet 601 in the second instance of transmission. Similar circumstances follow for the second and third reception terminals, and the broadcast packets 602, 603, 604 and 605.
Generally, assuming the probability of a reception error occurring in a first instance of transmission is Pe, then whereby the transmission is repeated n times, P=1-Pe^n is the probability that reception will be performed properly at least one out of the n times. When the probability of proper reception is calculated using Pe=0.1 and n=1,2,3,
when n=1, P=1-0.1^1=0.9
when n=2, P=1-0.1^2=0.99
when n=3, P=1-0.1^3=0.999
whereby the reception probability is improved by repeated transmission.

Given that retransmission control using Ack packets (or Nack packets) is performed in the unicast transmission in the latter half of the time chart, even if packet transmission fails such as in, for example, the case of the second unicast packet (transmitted from the transmission terminal to the second reception terminal) in Fig.55, the reception probability is improved by transmitting a second unicast packet retransmission packet 707. Also, whether or not to perform retransmission is judged by whether a Nack packet 6072 has been received from the transmission terminal, or whether an Ack packet has not been received. Ultimately, retransmission control ends when the transmission terminal receives an Ack packet 7071.
*Patent document 1:* Japanese Patent Application Publication No. H10-173668 *(pages 1 to 8, and Fig.6)*

### DISCLOSURE OF THE INVENTION

### PROBLEMS SOLVED BY THE INVENTION

However, with the conventional structure, multicast packets or broadcast packets are repeatedly transmitted over from the beginning, thereby requiring a massive transmission bandwidth commensurate with the number of repetitions in order to improve the reception probability of all the multicast packets or broadcast packets. In particular, when securing transmission bandwidth in advance for multicast or broadcast packet transmission, it is necessary to secure an amount of bandwidth which equals the minimum required transmission bandwidth times the number of repetitions, thereby diminishing the transmission/reception bandwidth of other packets.

The present invention solves these conventional problems, and aims to provide a wireless transmission method that increases bandwidth utilization efficiency in wireless multicasts or broadcasts, as well as improves reception probability.

### MEANS TO SOLVE THE PROBLEMS

In order to achieve the above aim, a first invention is a wireless transmission method for performing Mac layer multicast or broadcast transmission between a transmission terminal and a reception terminal, including the steps of: in the transmission terminal, temporarily storing a plurality of data clusters that are higher than a Mac layer; attaching sequence numbers to the plurality of data clusters in one-to-one correspondence; and transmitting the plurality of data clusters, to which the sequence numbers have been attached, with use of secured bandwidth-type or high priority-type multicast packets or broadcast packets; in the reception terminal, receiving and temporarily storing the plurality of data clusters that have been transmitted in the transmission step; detecting that a data cluster from among the received data clusters is missing by referring to the sequence numbers attached in the transmission terminal; requesting retransmission of the missing data cluster; and in the transmission terminal, retransmitting the missing data cluster.

### EFFECTS OF THE INVENTION

This wireless transmission method enables the realization of an improvement in the reliability of conventionally low-quality wireless multicast or broadcast transmission, while maintaining a good bandwidth utilization efficiency when performing bandwidth securement-type or priority control-type wireless transmission.
Here, in the retransmission step, the missing data cluster may be transmitted at a priority that is equal to a priority of the secured bandwidth-type or high priority-type multicast packets or the broadcast packets, a next lower priority, or a further lower priority.

Also, the retransmission step may include one of a first substep of performing the retransmission with use of a unicast packet, and a second substep of performing the retransmission to a plurality of reception terminals with use of a multicast or broadcast packet.
In the first substep, at least part of the plurality of data clusters may be combined, and the combined part of the data clusters may be retransmitted with use of the unicast packet

Moreover, in the retransmission request step, retransmission request data may be transmitted at a priority that is equal to a priority of the secured bandwidth-type or high priority-type multicast packets or the broadcast packets, a next lower priority, or a further lower priority.
Also, the retransmission request step may include one of a first substep of transmitting retransmission request data with use of a unicast packet, and a second substep of transmitting the retransmission request data with use of a multicast or broadcast packet.

Also, in the retransmission step, a time for retransmission may be restricted.
Moreover, in the retransmission step, the transmission terminal may retransmit, with use of a single unicast packet, retransmission request data that includes a plurality of sequence numbers of data clusters that have been detected as missing.

Also, a multicast transmission system pertaining to the present invention is used in a network communication system for transmitting intermixed stream data and asynchronous data between a transmission terminal and a plurality of reception terminals, the stream data being audio, video or the like, and asynchronous data being Internet data or the like, wherein a stream transmission period in which the stream data is transmitted in a necessary transmission bandwidth that has been secured in advance, and an asynchronous transmission period in which the asynchronous data is transmitted are provided in a communication cycle, the transmission terminal multicast-distributes the stream data to the plurality of reception terminals in the stream transmission period, each of the reception terminals receives the stream data, performs error judgment on the received stream data, and, if the stream data has not been received properly, transmits a retransmission request for the stream data to the transmission terminal in the asynchronous transmission period, and on receipt of the retransmission request, the transmission terminal multicast-retransmits the stream data in the stream transmission period of a next instance of the communication cycle.

Here, the transmission terminal and each of the reception terminals may transmit asynchronous data including the retransmission request in the asynchronous transmission period after waiting a respective time period obtained as a product of a predetermined time period and a randomly selected natural number.
Also, the natural number randomly selected before transmission of the asynchronous data that includes the transmission request may be smaller than a natural number randomly selected before transmission of other asynchronous data.

Moreover, a multicast communication method pertaining to the present invention is used in a transmission terminal that multicast-distributes stream data to a plurality of reception terminals, including the following steps performed in a given cycle: a multicast transmission step of transmitting the stream data with use of multicast packets; an arrival confirmation step of confirming whether distribution of the stream data to each of the reception terminals was successful, and obtaining a result of the confirmation as an arrival confirmation result; and a retransmission step of, in accordance with the arrival confirmation result, retransmitting the stream data whose distribution failed, wherein in the given cycle, steps performed in the transmission terminal before the arrival confirmation step are ended if a remaining time of the given cycle is anticipated to be less than or equal to a threshold, and processing of the transmission terminal moves to a next step.

Here, the retransmission step may include: a multicast retransmission step of multicast-retransmitting the stream data whose distribution failed, and the multicast retransmission step may be performed before the multicast transmission step in the given cycle.
Moreover, the retransmission step may include: a unicast retransmission step of unicast-retransmitting the stream data whose distribution failed, and the unicast retransmission step may be performed after the multicast transmission step and the arrival confirmation step in the given cycle.
Moreover, the retransmission step may include: a multicast retransmission step of multicast-retransmitting the stream data whose distribution failed; and a unicast retransmission step of unicast-retransmitting the stream data whose distribution failed, the multicast retransmission step is performed first in the given cycle, the multicast transmission step is performed second, the arrival confirmation step is performed third, the unicast retransmission step is performed fourth, and the unicast retransmission step ends if the given cycle has passed, and processing moves to a next instance of the given cycle.

Also, the multicast retransmission step may prioritize retransmission of, from among the multicast packets, a multicast packet that many of the reception terminals failed to receive, and end retransmission when retransmission of all of the stream data whose distribution failed is complete or the remaining time of the given cycle is less than or equal to the threshold, and the unicast retransmission step may prioritize retransmission of, from among the multicast packets, a multicast packet that few of the reception terminals failed to receive, and end retransmission when retransmission of all of the stream data whose distribution failed is complete or the given cycle has ended.
Here, the arrival confirmation step may individually inquire of each of the reception terminals by unicast whether distribution was successful, or collectively inquire of the plurality of reception terminals by multicast whether distribution was successful.

Here, the retransmission step may include: a multicast retransmission step of multicast-retransmitting the stream data whose distribution failed, the multicast retransmission step and the multicast transmission step may be performed before the arrival confirmation step in the given cycle, and the arrival confirmation step may begin when the remaining time of the given cycle is less than or equal to the threshold.

### BRIEF DESCRIPTION OF THE DRAWINGS

Fig.1 is a time chart of a wireless transmission apparatus according to embodiment 1 to 3 of the present invention;
Fig.2 is a system diagram of the wireless transmission apparatus according to embodiments 1 to 4 of the present invention;
Fig.3 is a time chart of the wireless transmission apparatus according to embodiment 1 of the present invention;
Fig.4 is a bock diagram of a wireless transmission terminal according to embodiments 1 to 5 of the present invention;
Fig.5 is a block diagram of a wired transmission unit according to embodiments 1 to 5 of the present invention;
Fig.6 shows a structure of a wired ethernet packet according to embodiments 1 to 4 of the present invention;
Figs.7A and 7B show states of a memory according to embodiments 1 to 4 of the present invention;
Fig.8 is a block diagram of the wireless transmission unit according to embodiments 1 to 5 of the present invention;
Fig.9 is a block diagram of a buffer unit according to embodiments 1 to 5 of the present invention;
Fig.10 shows a structure of a wireless multicast data packet according to embodiments 1 to 5 of the present invention;
Fig.11 is a block diagram of a wireless reception terminal according to embodiments 1 to 5 of the present invention;
Fig.12 shows states of a memory according to embodiments 1 to 5 of the present invention;
Fig.13 shows a structure of a retransmission request packet according to embodiments 1 to 5 of the present invention;
Fig.14 shows a structure of a retransmission packet according to embodiments 1 to 5 of the present invention;
Fig.15 is a time chart of the wireless transmission apparatus according to embodiment 1 of the present invention;
Fig.16 is a time chart of the wireless transmission apparatus according to embodiment 1 of the present invention;
Fig.17 is a time chart of the wireless transmission apparatus according to embodiment 1 of the present invention;
Fig.18 is a time chart of the wireless transmission apparatus according to embodiment 1 of the present invention;
Fig.19 shows a structure of a reception terminal according to embodiment 2 of the present invention;
Fig.20 shows a structure of a transmission timing adjustment unit in the reception terminal;
Fig.21 is a view showing a frame format of asynchronous data transmission timing in an asynchronous;
Fig.22 is a time chart showing an exemplary packet sequence in the wireless transmission apparatus according to embodiment 3 of the present invention;
Fig.23 shows states of a memory;
Fig.24 shows a structure of a retransmission request packet;
Fig.25 is a time chart of the wireless transmission apparatus;
Fig.26 shows a structure of a retransmission packet;
Fig.27 is a time chart of the wireless transmission apparatus;
Fig.28 is a time chart of the wireless transmission apparatus;
Fig.29 is a time chart of the wireless transmission apparatus;

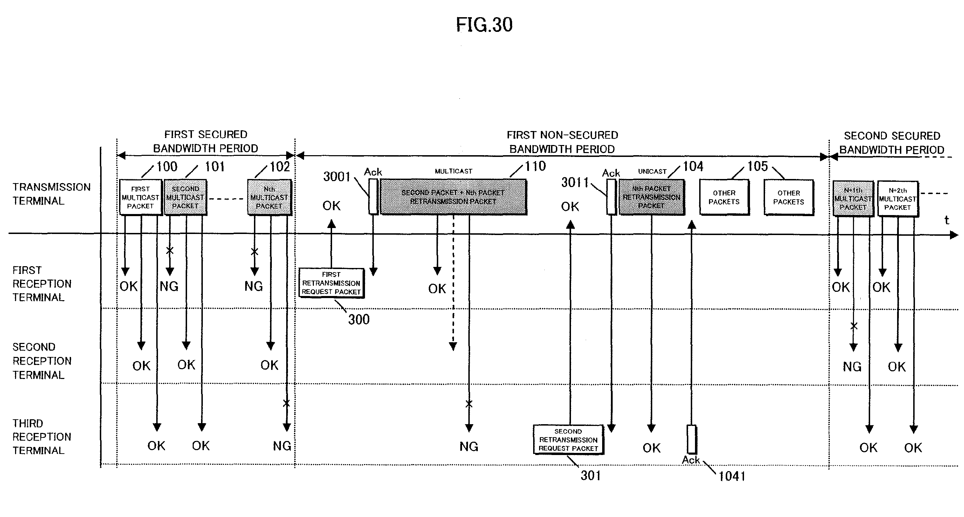

Fig.30 is a time chart of the wireless transmission apparatus;
Fig.31 is a view showing a frame format of a wireless multicast retransmission method of embodiment 5;
Fig.32 shows a structure of a wireless network to which the method of Fig.31 has been applied;
Fig.33 shows an apparatus structure of a wireless base station 100;
Fig.34 shows an apparatus structure of a wireless child station;
Fig.35 shows a detailed structure of an asynchronous data transmission buffer 340 of the wireless child station;
Fig.36 shows an exemplary asynchronous data transmission timing in the asynchronous transmission period;
Fig.37 is a time chart showing an exemplary packet sequence of a wireless transmission apparatus according to embodiment 6;
Fig.38 shows an exemplary method assigning priorities to packet transmissions;
Fig.39 shows a structure of a transmission buffer according to embodiment 6;
Fig.40 shows a structure of a multicast communication system according to embodiment 7;
Fig.41 shows an internal structure of a parent station communication apparatus;
Fig.42 shows a frame structure of a wireless signal 1416;
Fig.43 shows a structure of a buffer 14152;
Fig.44 shows a structure of a wireless unit 14155;
Fig.45 shows an internal structure of child communication apparatuses 1432 to 1435;
Fig.46 shows conditions of a wireless signal at points 1 to 5;
Fig.47 shows a structure of a parent station communication apparatus according to embodiment 8;
Fig. 48 is a system embodiment anticipated by embodiment 9;
Fig.49 shows a structure of a buffer of a second transmission terminal;
Fig.50 is a flowchart showing operations performed by the buffer 14152;
Fig.51 is a flowchart showing operations performed by an arrival confirmation processing unit 14156;
Fig.52 is a flowchart showing operations performed by a unicast retransmission processing unit 14157;
Fig.53 is a flowchart showing operation performed by a multicast retransmission processing unit 14158;

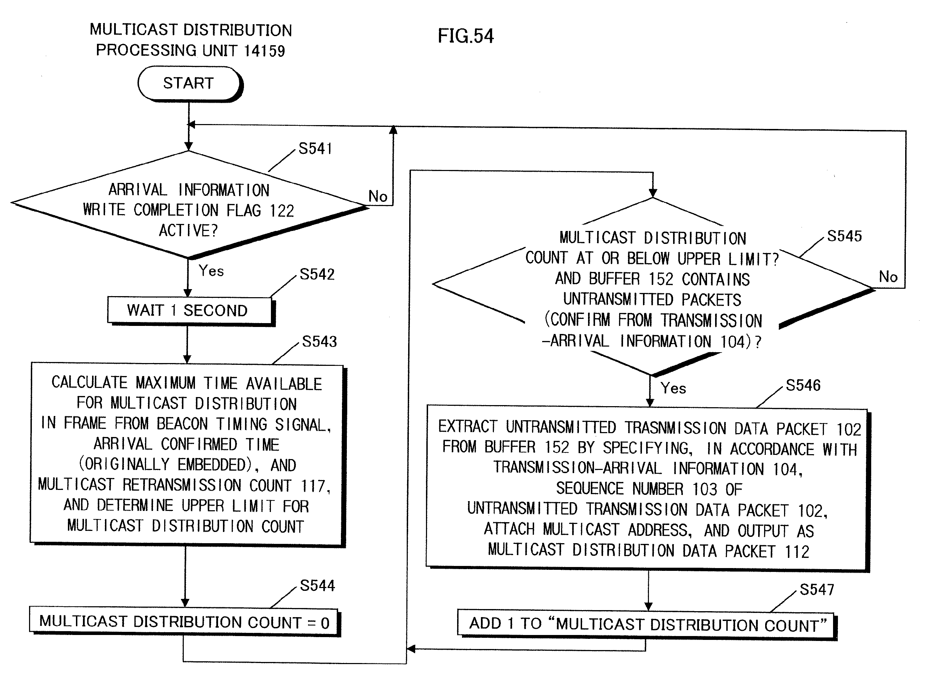

Fig.54 is a flowchart showing operations performed by a multicast distribution processing unit 14159; and
Fig.55 is a transmission time chart of a conventional wireless transmission apparatus.

### DESCRIPTION OF THE CHARACTERS

(04-164202 First Embodiment)

### BEST MODE FOR CARRYING OUT THE INVENTION

Embodiments of the present invention are described below with reference to the drawings.

### Embodiment 1

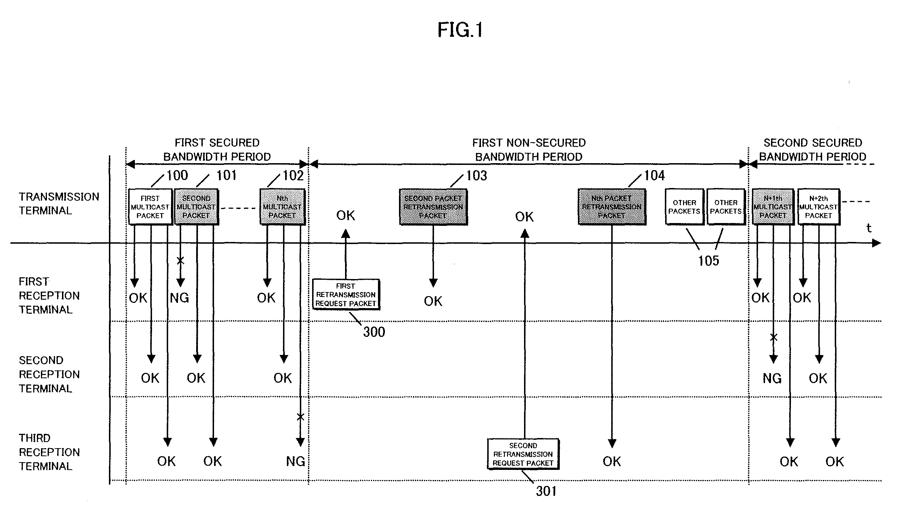

Fig.1 is a time chart showing a basic packet sequence of a wireless transmission apparatus in embodiment 1 of the present invention.

### Basic sequence

First is a description of basic concepts of the present invention with reference to Fig.1.

In Fig.1, 100, 101 and 102 are first to Nth multicast packets that are simultaneously transmitted from a transmission terminal to a first reception terminal, a second reception terminal, and a third reception terminal. Also, 103 and 104 are a second packet retransmission packet and an Nth packet retransmission packet respectively. Also, 105 are other packets. Also, 300 and 301 are retransmission request packets that make a retransmission request when a reception terminal fails to receive a multicast packet.

This time chart is divided into time slots, and secured bandwidth periods and non-secured bandwidth periods are alternately repeated to give a sequence such as first the first secured bandwidth period, next the first non-secured bandwidth period, then the second secured bandwidth period, and so on.
In a secured bandwidth period, the first multicast packet 100, the second multicast packet 101, ..., and the Nth multicast packet are transmitted from the transmission terminal to the reception terminals. Given that bandwidth has been allocated to the transmission terminal for the secured bandwidth period, this usable bandwidth will not be reduced by interruption by another terminal. In other words, this period is secured for the transmission of the first to the Nth multicast packets, and packets other than these are not transmitted from another terminal during this period.

In contrast to the aforementioned secured bandwidth period, a non-secured bandwidth period is a period in which terminals on a network may freely transmit packets. As such, when a certain terminal attempts to transmit a packet, it is possible for the packet transmission to fail due to on-going transmission by another terminal, or due to a collision between the packet being sent and a packet transmitted from another terminal.

The secured bandwidth period is suitable for when there is a need to consistently transmit data at a constant rate (e.g., prioritized transmission of audio and video in realtime), while the non-secured bandwidth period is suitable for when there is not a need to send data at a constant rate, and for the transmission of data with a low transmission priority.
In the present embodiment, audio and video data is transmitted in the secured bandwidth period, the non-secured bandwidth period is used for the transmission of retransmission data and other data, and a packet that fails to be received in the secured bandwidth period is retransmitted in the non-secured bandwidth period.

### Overall structure

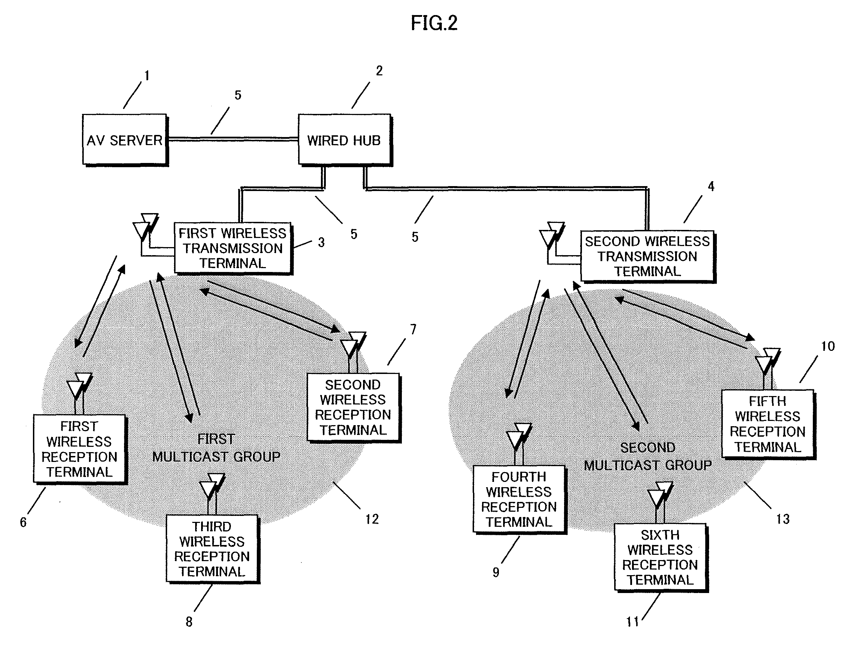

Next is a description of an intended system embodiment with reference to Fig.2.
Fig.2 is a system diagram pertaining to embodiment 1 of the present invention.
In Fig. 2, 1 is an AV server, 2 is a wired ethernet HUB, 3 is a first wireless transmission terminal, 4 is a second wireless transmission terminal, and 5 is a wired ethernet connecting the aforementioned 1, 2, 3 and 4. Also, 6 is a first wireless reception terminal, 7 is a second wireless reception terminal, 8 is a third wireless reception terminal, 9 is a fourth wireless reception terminal, 10 is a fifth wireless reception terminal, and 11 is a sixth wireless reception terminal.

The first wireless transmission terminal 3 is in a parent-child relationship with the first wireless reception terminal 6, the second wireless reception terminal 7, and the third wireless reception terminal 8, where wireless communication is performed using IEEE802.11 wireless LAN technology. Specifically, the first wireless transmission terminal 3 is an AP (access point: parent device), and the first, second and third wireless reception terminals 6, 7 and 8 are STAs (station: child device). Also, the first, second and third wireless reception terminals 6, 7 and 8 constitute a first multicast group 12 that receives the same multicast packets.

Similarly, the second wireless transmission terminal 4 is in a parent-child relationship with the fourth wireless reception terminal 9, the fifth wireless reception terminal 10, and the sixth wireless reception terminal 11, where wireless communication is performed using IEEE802.11 wireless LAN technology. Specifically, the second wireless transmission terminal 4 is an AP (access point: parent device), and the fourth, fifth and sixth wireless reception terminals 9, 10 and 11 are STAs (station: child device). Also, the fourth, fifth and sixth wireless reception terminals 9, 10 and 11 constitute a second multicast group 13 that receives the same multicast packets.

The following describes operations of the transmission system with the aforementioned structure.
An audio and video packet is input to the wired ethernet HUB 2 by the AV server 1 via the wired ethernet 5. The packet input to the wired ethernet HUB 2 is repeated and distributed to the first and second wireless transmission terminals 3 and 4. The wired ethernet HUB 2 performs either an operation for repeating all input packets to all outputs, or a switching operation for repeating only specified packets to a specified terminal. For example, in the case of performing the switching operation, the wired ethernet HUB 2 repeats a packet to be transmitted only to the first multicast group 12 to only the first wireless transmission terminal 3, and repeats a packet to be transmitted only to the second multicast group 13 to only the second wireless transmission terminal 4.

The first and second wireless transmission terminals 2 and 4 receive, from the wired ethernet HUB 2, the audio and video data to be distributed to their respective managed wireless reception terminals, and multicast-distribute the received audio and video data to their respective managed wireless reception terminals.
Specifically, in Fig. 2, since all the terminals managed by the first wireless transmission terminal 3 (the first, second and third, wireless reception terminals 6, 7 and 8) belong to the first multicast group 12, the first wireless transmission terminal 3 receives audio and video packets addressed to the first multicast group 12, and distributes the received audio and video packets to the first multicast group 12. Since all the terminals managed by the second wireless transmission terminal 4 (the fourth, fifth and sixth, wireless reception terminals 9, 10 and 11) belong to the second multicast group 13, the second wireless transmission terminal 4 receives audio and video packets addressed to the second multicast group 13, and distributes the received audio and video packets to the second multicast group 13.

Whereas basic concepts when performing the above wireless multicast distribution were described using Fig.1, the following describes more specific exemplary operations.

### Operations during multicast distribution

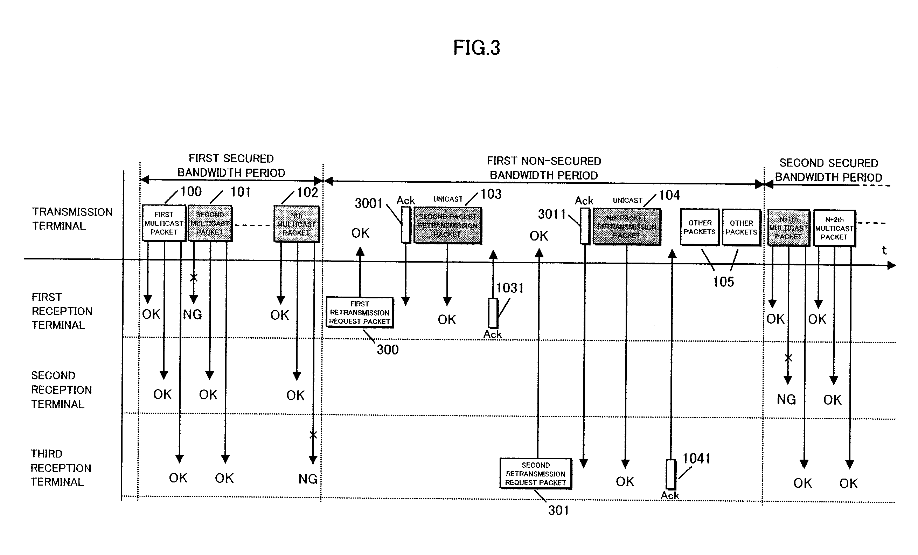

Fig.3 is a time chart of an exemplary packet sequence of the wireless transmission apparatus pertaining to embodiment 1 of the present invention. In Fig.3, notations from Fig.1 are used for the same constituent elements, and descriptions thereof are omitted.

In Fig.3, 3001 is an Ack packet that transmits a confirmation of successful reception of a first retransmission request packet 300, 1031 is an Ack packet that transmits a confirmation of successful reception of a second packet retransmission packet 103, and 1041 is an Ack packet that transmits a confirmation of successful reception of an Nth packet retransmission packet 104.
The transmission terminal in Fig.3 corresponds to the first wireless transmission terminal 3 in Fig.2. There are two transmission terminals (the first and second wireless transmission terminals 3 and 4) in Fig.2, and since both perform the same operations, and the description would be the same with either, the transmission terminal in Fig.3 has been made to correspond to the first wireless transmission terminal 3. Similarly, first, second and third reception terminals in Fig.3 correspond to the first, second and third wireless reception terminals 6, 7 and 8 in Fig.2.

### First secured-bandwidth period

The following describes operations of the transmission terminal during the first secured-bandwidth period in the above-described time chart of Fig.3.

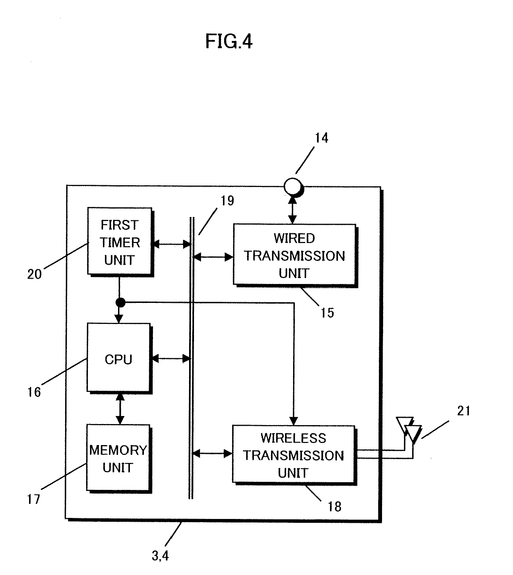

Fig. 4 shows a structure of the transmission terminal, that transmits the first, second, and Nth multicast packets 100, 101 and 102 in the first secured-bandwidth period.

### Structure of the transmission terminal

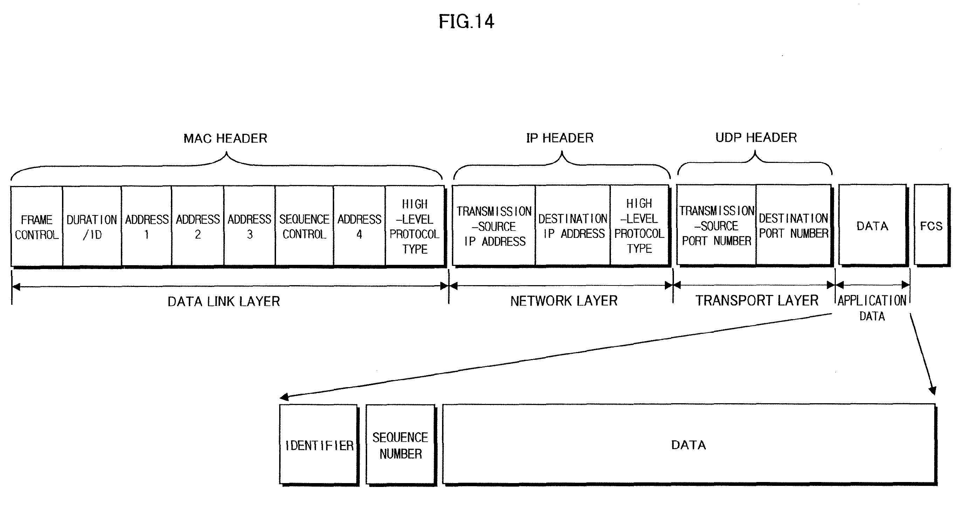

In Fig.4, 14 is an input/output (IO) terminal that inputs/outputs packets from the wired ethernet 5, 15 is a wired transmission unit for performing transmission/reception of packets on the wired ethernet 5, 16 is a CPU that control internal units of the transmission terminal, 17 is a memory unit that stores data above the MAC layer, 18 is a wireless transmission unit that wirelessly transmits/receives packets, 19 is an internal bus that connects the CPU 16 to other units, 20 is a first timer unit that measures operating time, and 21 is an antenna that transmits/receives wireless packets.

A wired ether packet received from the wired ethernet 5 via the IO terminal 14 is first input to the wired transmission unit 15. The wired transmission unit 15, which is compliant with IEEE802.3 (i.e., wired ethernet standard), receives the packet from the wired ethernet 5 using an ethernet MAC protocol, and outputs the received packet to the internal bus 19.

### Structure of a wired transmission unit

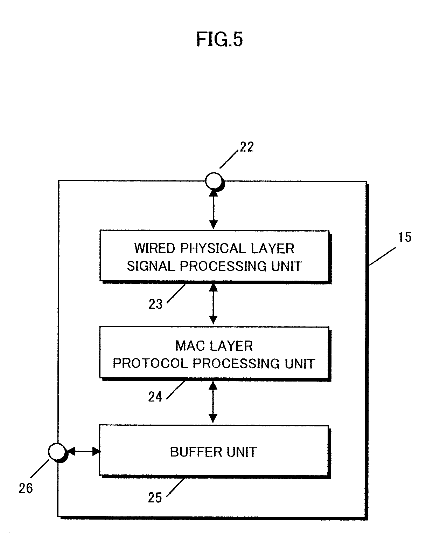

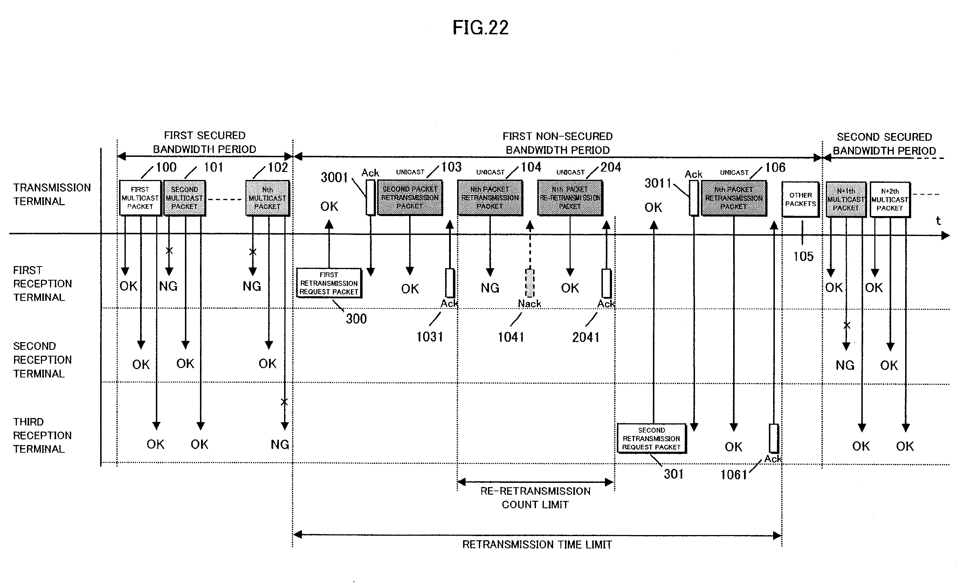

Fig.5 is a block diagram showing an internal structure of the wired transmission unit 15. In Fig.5, 22 is an IO terminal that inputs/outputs packets in accordance with wired ethernet IEEE802.3. Also, 23 is a wired physical layer signal processing unit that modulates/demodulates packets transmitted on the wired ethernet 5. Also, 24 is a MAC layer protocol processing unit that performs MAC protocol processing with respect to the wired ethernet 5. Also, 25 is a buffer unit that temporarily stores data input/output by the internal bus 19. Also, 26 is an IO terminal, which is a connection terminal with the internal bus 19.

Packets input by the IO terminal 22 are input to the wired physical layer signal processing unit 23, and the packets are demodulated from wired ethernet modulation to MAC packets. The MAC packets resulting from the demodulation are then input to the MAC layer protocol processing unit 24.

### MAC packets

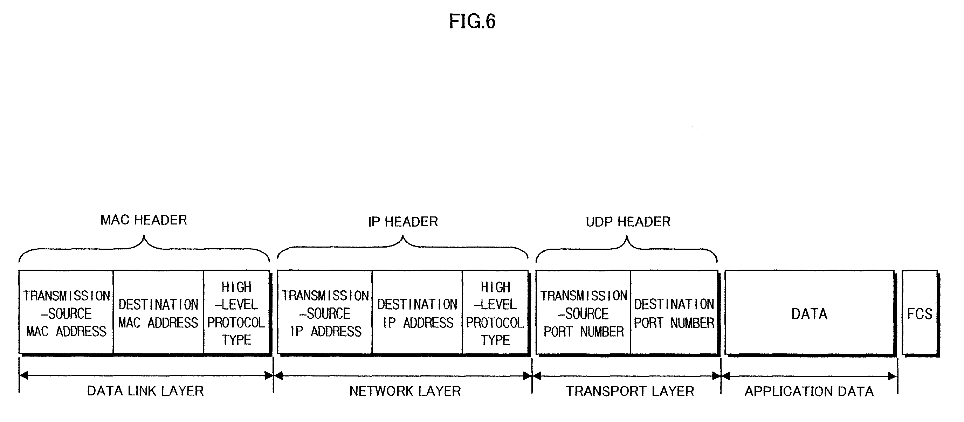

Fig.6 shows a structure of an input MAC packet that is constituted from, in order from the beginning, a MAC header, an IP header, a UDP header, transmission data, and an FCS (frame checksum).

Leading is a heading of a data link layer, which is the MAC header. The MAC header is constituted from a transmission-source MAC address, a destination MAC address, and a high-level protocol type, which respectively show the transmission-source address at the MAC layer, the destination address at the MAC layer, and a type of the next higher layer protocol.
In general, IP (internet protocol) is used as the high-level protocol. Above the data link layer is a network layer, which is constituted from a transmission-source IP address, a destination IP address, and a high-level protocol type. This network layer is a layer for performing packet routing, and IP addresses, which are special-purpose address different from MAC addresses, are used. The IP header includes a high-level protocol type that indicates a protocol type of a transport layer further up, and UDP is often used as the high-level protocol type in the real-time transmission of audio and video.

As shown in Fig.6, a UDP header is constituted from a transmission-source port number and a destination port number, and functions to determine a virtual input/output destination for data in a terminal.
Further above the UDP is the actual transmission data, and lastly, a checksum (FCS) is attached for checking for wired packet transmission errors.
Such a packet is output from the wired physical layer signal processing unit 23 and input to the MAC layer protocol processing unit 24.

The MAC layer protocol processing unit 24 performs protocol processing for transmitting/receiving the MAC packet of Fig.6, and processing for using the destination MAC address to judge whether the packet is address to its own terminal and receiving the packet. If the destination MAC address is addressed to its own terminal, the MAC layer protocol processing unit 24 detaches the MAC header to generate a high-level data packet, and then inputs the high-level data packet to the buffer unit 25.
When transmitting the high-level data packet input from the MAC layer protocol processing unit 24 to the internal bus 19 via the IO terminal 26, the buffer unit 25 functions to temporarily store the high-level data packet. The stored high-level data packet is transferred to the CPU 16 once the CPU 16 has completed reception preparation, and furthermore, the internal bus 19 has become available.

Upon receiving the high-level data packet, the CPU 16 first performs UDP/IP processing. Specifically, the CPU 16 checks the IP address and the UDP port, and judges whether the data is to be wirelessly multicast by its terminal. If the data is to be wirelessly multicast by its terminal, the CPU 16 writes the high-level data packet to the memory unit 17.

### Storage of data in the memory unit

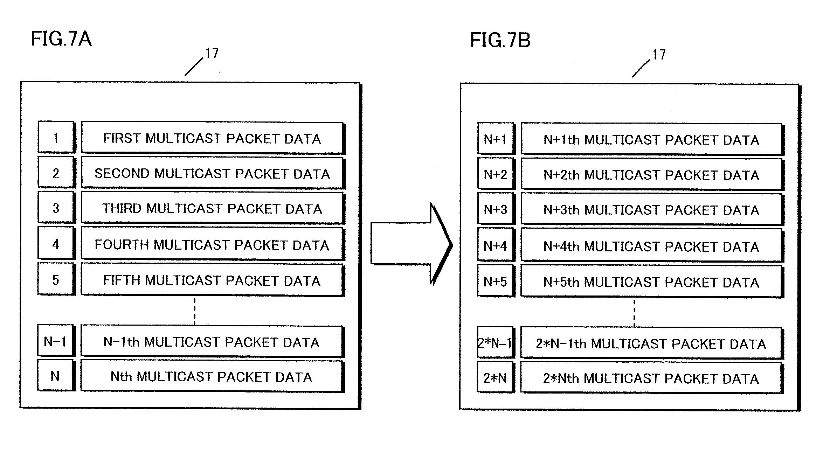

Figs. 7A and 7B show states of data stored in the memory unit 17. When writing the high-level data packets to the memory unit 17, the CPU 16 attaches, at the beginning of each of the high-level data packets, sequence numbers showing a sequence of the data. Data is held in the memory unit 17 in N units (N being an integer greater than or equal to 1), where N equals the number of transmission units in the secured-bandwidth period of the next wireless interval.

Transmission is alternately and cyclically switched in a wireless interval between the secured bandwidth period and the non-secured bandwidth period as mentioned above, and the N data clusters shown in Fig.7A are units of only data for which a reception error occurred after being multicast-transmitted in the first secured bandwidth period of Fig. 3, and are to be retransmitted in the first non-secured bandwidth period. As time elapses, and before the second secured bandwidth period, the CPU 16 attaches sequence numbers to the beginning of following N+1th to 2*Nth data pieces, and stores the data pieces in the memory unit 17. Note that in actuality, the CPU 16 stores at least two or more groups of N packet clusters in the memory unit 17, and after wireless transmission in the secured bandwidth period and retransmission control in the non-secured bandwidth period have ended, deletes data that does not require retransmission.

Next, the CPU 16 transfers the first to Nth data pieces that are to be transmitted in the first secured bandwidth period to the wireless transmission unit 18 via the internal bus 19. At this time, the CPU 16 performs appropriate UDP/IP processing as required, and the sequence numbers are transmitted in payload portions of the UDP/IP packets. Here, the CPU 16 newly adds, to the head of the UDP/IP payload portion, an identifier that indicates a type of the data to be transmitted in the payload portion.

### Structure of the wireless transmission unit

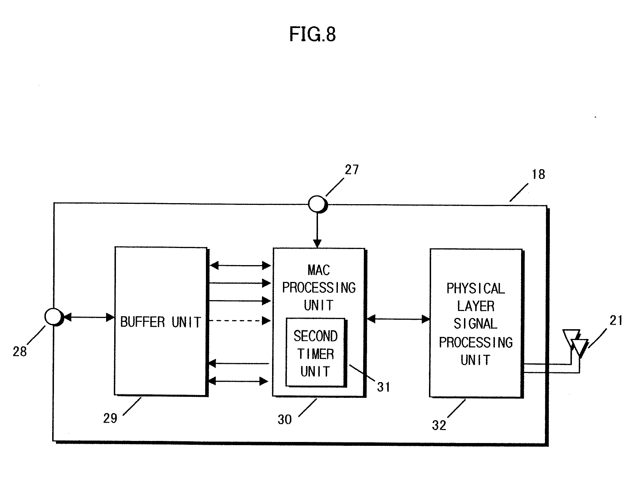

Fig.8 is a block diagram showing an internal structure of the wireless transmission unit 18, which is constituted from a timer input terminal 27, an IO terminal 28, a buffer unit 29, a MAC processing unit 30, a second timer unit 31, a physical layer signal processing unit 32, and an antenna 21.

The buffer 29 is a wireless transmission buffer etc. that is provided to enable immediate wireless transmission, when a wireless transmission timing is reached, of the N data packets higher than the MAC layer that are composed of UDP/IP packetized sequence numbers and data and that are stored in the memory unit 17, and is constituted from a plurality of buffers that each have at least a storage capacity greater than or equal to a packet length of the wireless interval.

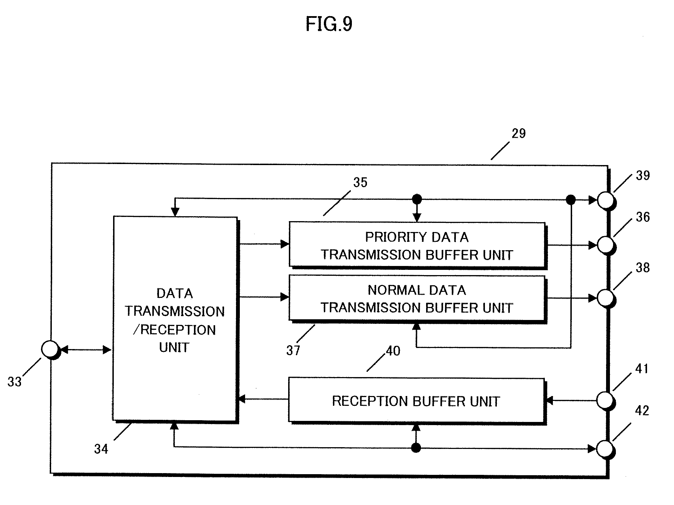

Wireless transmission data that has been input from the CPU 16 is input to the buffer unit 29 from the internal bus 19 via the IO terminal 28, and Fig.9 is a block diagram showing a structure of the buffer unit 29.
The buffer unit 29 is constituted from an IO terminal 33, a data transmission/reception unit 34, a priority data transmission buffer unit 35, a priority data output terminal 36, a normal data transmission buffer unit 37, a normal data output terminal 38, a transmission control signal IO terminal 39, a reception buffer unit 40, a reception data input terminal 41, and a reception control signal IO terminal 42, and of these, units used in packet transmission during the secured bandwidth period are the IO terminal 33, the data transmission/reception unit 34, the priority data transmission buffer unit 35, the priority data output terminal 36, and the transmission control signal IO terminal 39.

All of the high-level data packets input from the IO terminal 33 or a portion of the wireless transmission data are selectively input to the priority data transmission buffer unit 35 via the data transmission/reception unit 34, and transferred to the MAC processing unit 30 via the priority data output terminal 36 in accordance with the wireless transmission timing.
The MAC processing unit 30 performs MAC protocol processing and management of the secured bandwidth periods and the non-secured bandwidth periods, reads the wireless transmission data from the buffer unit 29 in accordance with appropriate timing, and inputs the read wireless transmission data to the physical layer signal processing unit 32.

In actuality, the MAC processing unit 30 uses the internally-provided second timer unit 31 to judge whether it is currently a secured bandwidth period, and during the secured bandwidth period, controls the buffer unit 29 with use of the transmission control signal IO terminal 39, reads data from the priority data transmission buffer unit 35, and transmits the read data. The timing according to which data is transferred from the CPU 16 to the buffer unit is determined using the control signal for controlling the priority data buffer unit 35 and the data transmission reception unit 34 via the transmission control signal IO terminal 39 as a trigger. The CPU 16 transfers the data to the wireless transmission unit 18 when the data request is received.

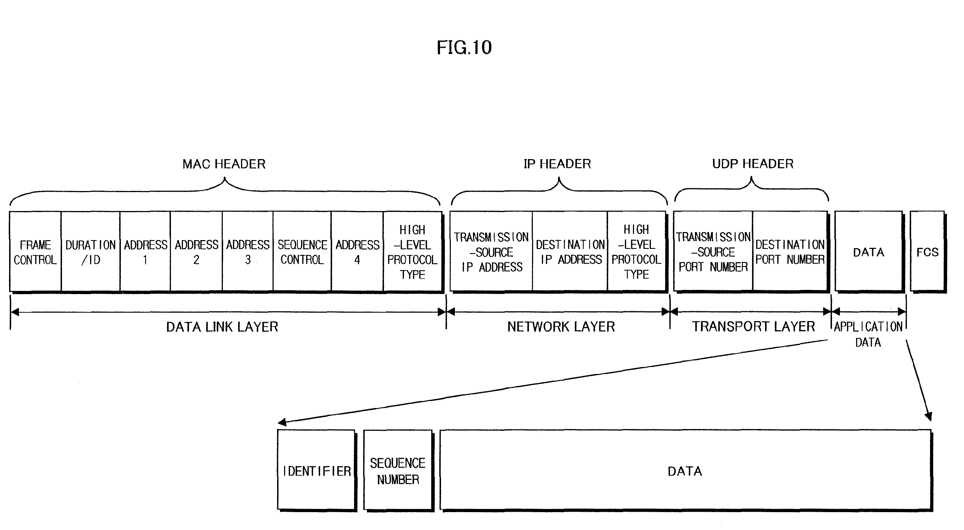

The MAC processing unit 30 which received the data performs wireless MAC packetization on the data, and Fig. 10 shows a structure of a resulting wireless packet. Determination of the secured bandwidth period and the transmission timing may be performed by using the timer unit 20 to perform input with respect to the high layers and the MAC layer in accordance with the same timing.

### Structure of a wireless packet

The wireless packets have the structure of the wired ethernet packet show in Fig.6, where the MAC header portion is replaced with an IEEE802.11 wireless MAC header. The above-mentioned identifier and sequence number are appended to the high-level data transferred to the wireless transmission unit 18 by the CPU 16.

The wireless packet having this structure is input to the physical layer signal processing unit 32, and after having been modulated by the physical layer signal processing unit 32 to be suitable for wireless transmission, the wireless packet is wirelessly transmitted via the antenna 21.
As a result of the above processing, the first to Nth multicast packets are transmitted to the first, second and third reception terminals in the secured bandwidth period in Fig.3.

### Operations in the first non-secured bandwidth period

Next is a description of operations pertaining to retransmission performed in the first non-secured bandwidth period in the time chart of Fig.3.

In Fig.3, multicast transmission is performed from the transmission terminal to the reception terminals in the first secured bandwidth period, and the occurrence of reception errors differs between the first, second and third reception terminals due to differences in the setting environments and reception properties of the first, second and third terminals.
In Fig.3, although the first multicast packet 100 is successfully received by all the reception terminals, only the first reception terminals fails to receive the second multicast packet 101. Similarly, only the third reception terminal fails to receive the Nth multicast packet 102.

Retransmission control using Ack packets (confirmation of successful reception) is not generally performed at the MAC layer in multicast transmission, whereby the transmission terminal cannot know whether a multicast packet has been properly received by a reception terminal. This is due to the fact that a number of reception terminals unconditionally returning Ack packets will bring about a waste of wireless bandwidth from collisions with the Ack packets in the wireless interval, as well as an increase in the confirmation processing burden on the transmission side. Conventionally there is a method of repeatedly sending the same multicast packet from the beginning in order to ensure transmission quality without performing retransmission, but if this method is applied to secured bandwidth-type transmissions, it is necessary to secure an amount of bandwidth equal to the originally necessary bandwidth times the number of repetitions, which often brings about the problem of a lack of bandwidth in wireless transmission which has a smaller transmission capacity than wired communication routes.

### Transmission of a retransmission request packet

In the present embodiment, a reception terminal that has failed to receive a multicast packet uses the first non-secured bandwidth period to transmit a retransmission request packet to the transmission terminal.
The first reception terminal that failed to receive the second multicast packet 101 in the first secured bandwidth period in Fig.3 uses the first non-secured bandwidth period to transmit a first retransmission request packet 300 to the transmission terminal. The following describes a structure in which the retransmission request is performed using a unicast packet in order to improve the reliability of the transmission of the retransmission request packet. On proper receipt of the first retransmission request packet 300, the transmission terminal returns an Ack packet 3001, which is a confirmation of successful receipt, thereafter references the content of the retransmission request packet 300, and unicast-transmits a second packet retransmission packet 103 to the first reception terminal. Upon confirming proper receipt of the second packet retransmission packet 103, the first reception terminal returns an Ack 1031 to the transmission terminal. The following describes in detail the operations of the terminals with reference to the drawings.

### Structure of the reception terminal

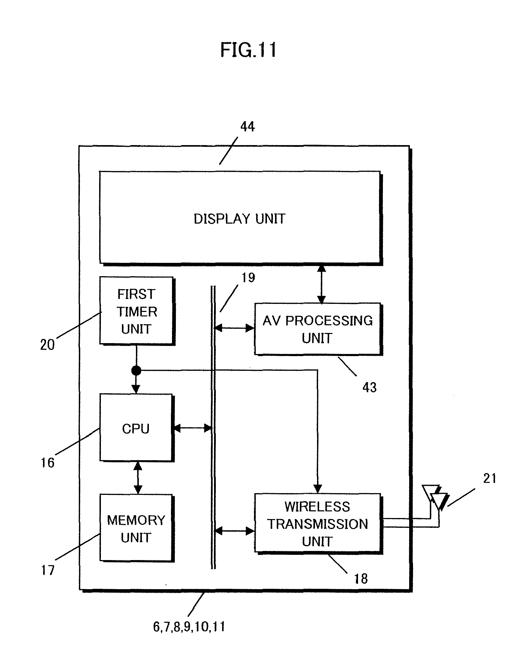

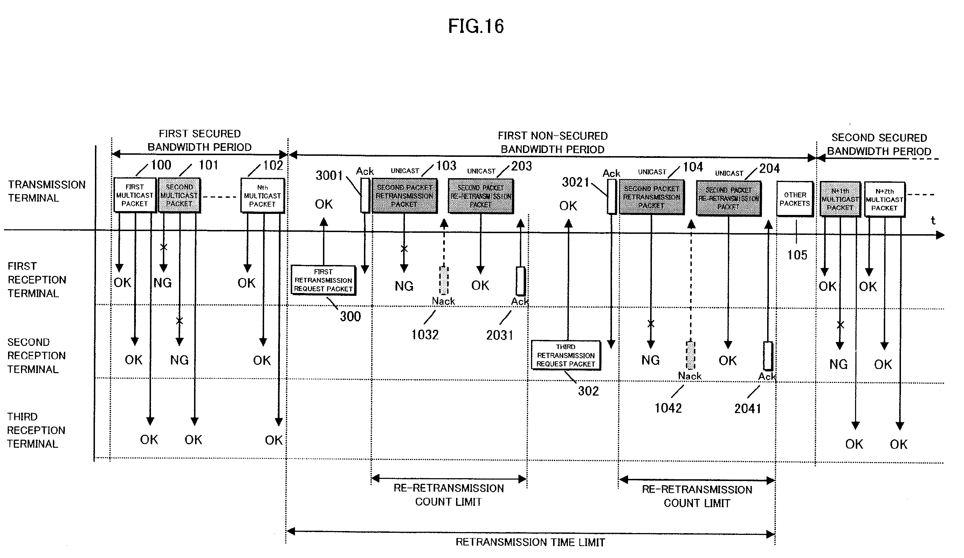

Fig.11 is a block diagram showing an internal structure of the reception terminal. In Fig.11, 16 is a CPU, 17 is a memory unit, 18 is a wireless transmission unit, 19 is an internal bus, and 20 is a first timer unit. These constituent elements are the same as the internal constituent elements of the transmission terminal shown in Fig.4. Descriptions of constituent elements that are the same as those previously mentioned have been omitted. Also, 43 is an AV processing unit that converts wirelessly received audio and video data into displayable signals. Also, 44 is a display that displays output from the AV processing unit 43.

The reception terminal receives the first to Nth multicast packets 100, 101 and 102 via the antenna 21. The first to Nth multicast packets 100, 101 and 102 are input to the wireless transmission unit 18, and then output to the internal bus 19 after processing opposite of transmission has been performed.
Fig.8 shows a structure of the wireless transmission unit 18, which is the same as the transmission unit of the transmission terminal. A description of the structure in Fig.8 has been omitted since it is the same as on the transmission terminal side. In the wireless transmission terminal 18, the modulation performed at the time of transmission is first demodulated by the physical layer signal processing unit 32 to restore the MAC packet in Fig. 10. The restored MAC packet is input to the MAC processing unit 30, and if the multicast address shown in the MAC header indicates the broadcast group to which the wireless transmission unit 18 belongs, the MAC header is detached, and the packet is output to the buffer unit 29. The structure of the buffer unit 29 is the same as in the transmission terminal shown in Fig.9. A transmission buffer system is operated during transmission, whereas a reception buffer system is operated during reception. The MAC processed packet is input via the reception data input terminal 41 and temporarily stored in the reception buffer unit 40. Also, at this time, the MAC processing unit 30 controls, via the control signal IO terminal 42, the writing of received data to the reception buffer unit 40. The data temporarily stored in the reception buffer unit 40 passes through the data transmission/reception unit 34 and the IO terminals 33 and 28, and is output to the internal bus 19 and transferred to the CPU 16. At this time, the data transmission/reception unit 34 reads the data from the reception buffer unit 40 when the internal bus 19 has become available and the CPU 16 has become able to receive the data. On receipt of the data, the CPU 16 writes the reception data to the memory unit 17, and at the same time judges according to the IP header, the UDP header and the identifier of Fig. 6 whether further processing should be performed on the packet. In other words, the CPU 16 judges whether the reception data is self-addressed according to the IP header and UDP header, and uses the identifier to judge whether the reception data is multicast data to be stored in memory.

### States of data stored in the memory 17

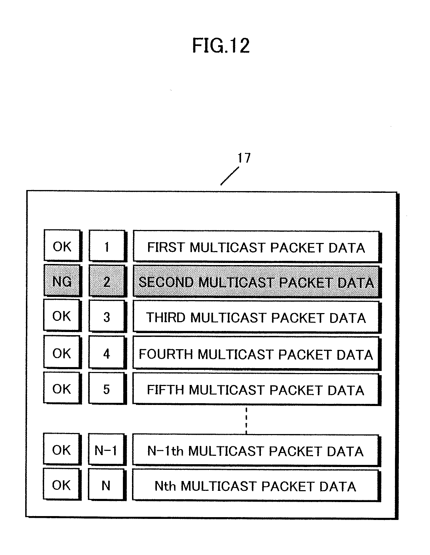

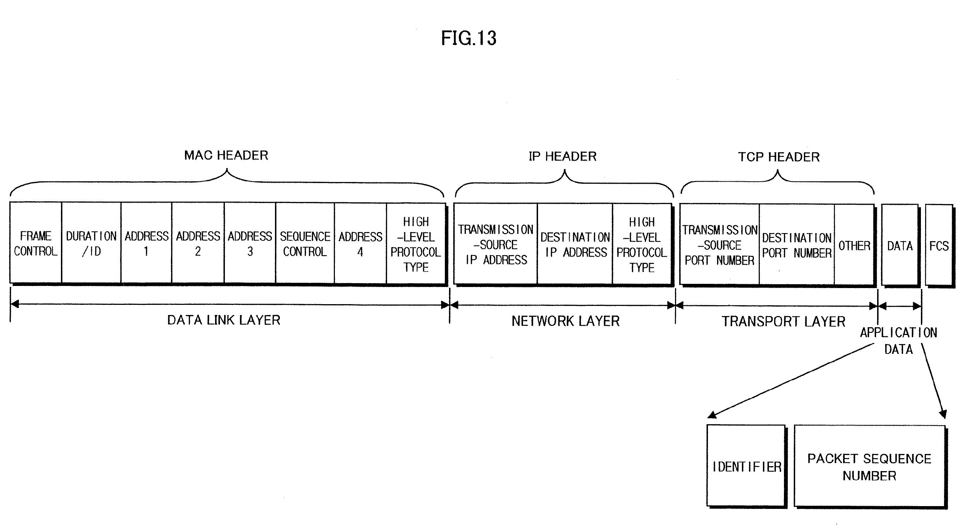

Fig.12 shows states of data stored in the memory 17. The stored first to Nth multicast packet data is written to the memory unit 17 such that it is possible to judge at that time which packet data having which sequence number has been lost. In this example, the positions of the first to Nth multicast packet data in memory are fixed, and identifiers for indicating whether proper reception and writing has been performed is attached to the beginnings of the sequence number + multicast packet data groups. In other words, by referencing the content of the memory unit 17, it is possible to judge which packet out of the first to Nth multicast packet cluster transmitted in the secured bandwidth period has been lost. The CPU 16 judges that the second multicast packet data has been lost based on the information stored in the memory unit 17, generates the retransmission request packet 300, and prepares to transmit the generated retransmission request packet 300 to the transmission terminal. Fig.13 shows a structure of the retransmission request packet 300. The CPU 16 stores an identifier identifying the retransmission request packet and a requested packet sequence number in the payload portion of the IP header and the TCP header. This retransmission request packet 300 is transferred to the wireless transmission unit 18 via the internal bus 19. The wireless transmission unit 18 has the same structure as in the above-described Fig.8, and the retransmission request packet 300 is input to the buffer unit 29 via the IO terminal 28. The buffer unit 29 has the same structure as in the above-described Fig.9, where the retransmission request packet 300 that was input via the IO terminal 33 is temporarily stored in the normal data transmission buffer 37 via the data transmission/reception unit 34, and transferred to the MAC processing unit 30 via the normal data output terminal 38. At this time, the MAC processing unit 30 judges, with use of the internally provide second timer unit 31, whether or not it is currently the first non-secured bandwidth period, and when it becomes the first non-secured bandwidth period, controls the normal data buffer unit 37 via the control signal IO terminal 39, and reads the retransmission request packet 300 from the normal data buffer unit 37. After a MAC header has been attached, the read retransmission request packet 300 is modulated by the physical layer signal processing unit 32 to be suitable for transmission, and unicast-transmitted to the transmission terminal via the antenna 21. The secured bandwidth periods and the transmission timing may be determined by inputting the same timing to the high layer and the MAC using the first timer unit 20.

### Unicast operations of the transmission terminal that received a retransmission request

The transmission terminal that received the retransmission request packet 300 confirms that the wireless packet has been received properly, and returns the Ack packet 3001 to the first reception terminal. On receipt of the Ack packet 300, the first reception terminal waits for retransmission of the requested packet.
In the transmission terminal, the retransmission request packet 300 received via the antenna 21 is output to the internal bus 19 by processing that is opposite of transmission.

Here, the wireless transmission unit 18 has the same structure as the wireless transmission unit provided in the transmission terminal shown in Fig. 8. The structure of Fig.8 has been described above, and therefore a description of the wireless transmission unit 18 has been omitted. In the wireless transmission terminal 18, the modulation performed at the time of transmission is demodulated by the physical layer signal processing unit 32 to restore the MAC packet in Fig.10. The restored MAC packet is input to the MAC processing unit 30, and if the multicast address shown in the MAC header indicates the broadcast group to which the wireless transmission unit 18 belongs, the MAC header is detached, and the packet is output to the buffer unit 29. The structure of the buffer unit 29 is the same as in the transmission terminal shown in Fig. 9. A transmission buffer system is operated during transmission, whereas a reception buffer system is operated during reception. The MAC processed packet is input via the reception data input terminal 41 and temporarily stored in the reception buffer unit 40. Also, at this time, the MAC processing unit 30 controls, via the control signal IO terminal 42, the writing of received data to the reception buffer unit 40. The data temporarily stored in the reception buffer unit 40 passes through the data transmission/reception unit 34 and the IO terminals 33 and 28, and is output to the internal bus 19 and transferred to the CPU 16. At this time, the data transmission/reception unit 34 reads the data from the reception buffer unit 40 when the internal bus 19 has become available and the CPU 16 has become able to receive the data. On receipt of the data, the CPU 16 writes the reception data to the memory unit 17, and at the same time judges according to the IP header and the TCP header of Fig.13 whether further processing should be performed on the packet. If the identifier indicates that the packet is a retransmission request, the CPU 16 checks the following packet sequence number and prepares to transmit the corresponding packet data. The data previously multicast-transmitted is stored in the memory unit 17 as shown in Fig.7, and from among the stored data pieces, the second multicast packet data that was requested is retransmitted. In other words, the second packet retransmission packet 103 in Fig.3 is transmitted to the first reception terminal.

Fig. 14 shows a structure of the retransmission packet 103, in which the payload portion following the MAC header, the IP header, and the UDP header is constituted from an identifier identifying the packet as a retransmission packet, a sequence number, and data. The data portion is the same as the second multicast packet that was originally multicast-transmitted.
Although the transmission processing is equivalent to the procedure for performing multicast transmission in the first secured bandwidth period, this transmission is performed in the first non-secured bandwidth period since the priority of the retransmission packet is lower than the originally transmitted second multicast packet.

The CPU 16 transfers the retransmission packet data, which is to be transmitted in the first non-secured bandwidth period, to the wireless transmission unit 18 via the internal bus 19.
The wireless transmission data that was input from the CPU 16 via the internal bus 19 and the IO terminal 28 is input to the buffer unit 29.
The retransmission data for the second multicast packet that was input from the IO terminal 33 is selectively sent to the normal data transmission buffer unit 37 via the data transmission/reception unit 34, and input to the MAC processing unit 30 via the normal data output terminal 38 in accordance with the wireless transmission timing.

The MAC processing unit 30 performs MAC protocol processing and management of secured bandwidth periods and non-secured bandwidth periods, reads the wireless transmission data from the buffer unit 29 in accordance with appropriate timing, and inputs the read wireless transmission data to the physical layer signal processing unit 32.
The MAC processing unit 30 may use the internally-provided first time unit 20 to determine the secured bandwidth period and the transmission timing by performing input to the high layer and the MAC layer in accordance with the same timing. The MAC processing unit 30 judges that it is currently in a non-secured bandwidth period, controls the buffer unit 29 in the non-secured bandwidth period using the transmission control signal IO terminal 39, reads the data from the normal data transmission buffer unit 37, and unicast-transmits the read data. The MAC processing unit 30 also determines the timing according to which the CPU 16 transfers data to the buffer unit, using a trigger which is a control for controlling the normal data buffer unit 37 and the data transmission/reception unit 34 via the transmission control signal IO terminal 39. The CPU 16 transfers the data to the wireless transmission unit 18 upon the data request is received.

The MAC processing unit 30 that received the data performs wireless MAC packetization on the data, and the wireless packet is input to the physical layer signal processing unit 32, modulated therein to be suitable for wireless transmission, and wirelessly transmitted via the antenna 21.

### Processing after packet retransmission: retransmission failure

As a result of the processing such as mentioned above, data whose retransmission was requested using the retransmission request packet 300 is transmitted to the first reception terminal. The first reception terminal which received the second packet retransmission packet 103 in this way returns the Ack packet 1031, which is a reception confirmation packet, and retransmission of the packet that failed to be received ends.

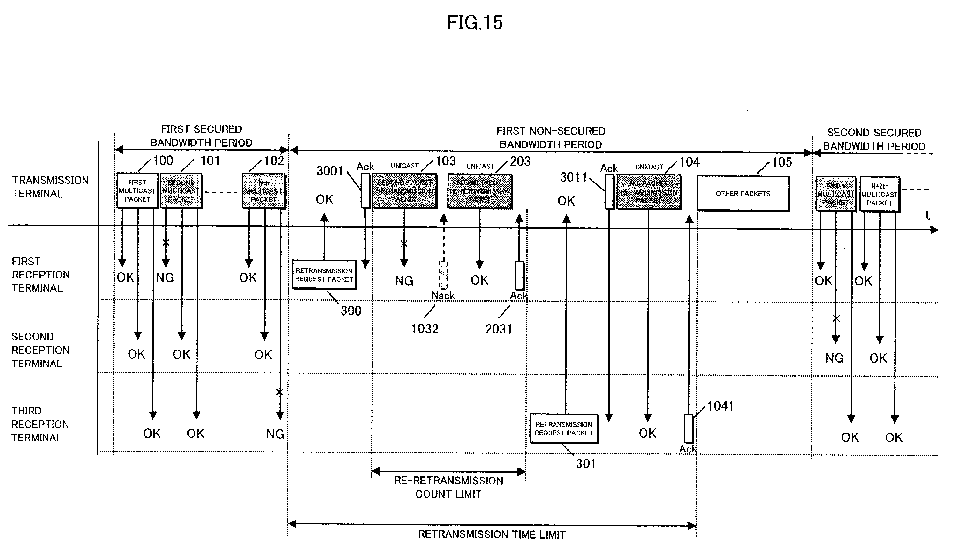

Note that if the first reception terminal fails to receive the second packet retransmission packet 103, the second packet retransmission packet itself may be retransmitted as shown in Fig.15. In Fig.15, 1032 is a Nack packet transmitted if the first reception terminal fails to receive the retransmission packet 103 for the second packet. This Nack packet is often not used. If the Nack packet is not used, the transmission terminal judges that reception by the first reception terminal has failed if the Ack packet confirming reception is not received in a predetermined time period. Also, 203 is the second packet re-retransmission packet, which includes the same content as the second packet retransmission packet 103. An Ack packet 2031 is returned to the transmission terminal when the second packet re-retransmission packet 203 is successfully received, and re-retransmission ends. The number of times that re-retransmission can be performed should be limited since there is the possibility that the first non-secured bandwidth cannot be used by other terminals if re-retransmission is performed an unlimited number of times. Also, it is further practical to limit the amount of time for retransmissions in the first non-secured bandwidth period since it blocks other transmissions.

### Processing when more than one terminal fails to receive the same packet

While the descriptions in Fig.3 and Fig.5 focus on exemplary cases in which the first reception terminal fails to receive the second multicast packet 101 and the third reception terminal fails to receive the Nth multicast packet 102, if the first and second reception terminals fail to receive the second multicast packet 101 as shown in Fig.16, all of the retransmissions and re-retransmissions (103, 203, 104 and 204) involve sending the same data as the second multicast packet 101.

### Transmission of a retransmission packet, and congestion of retransmission requests

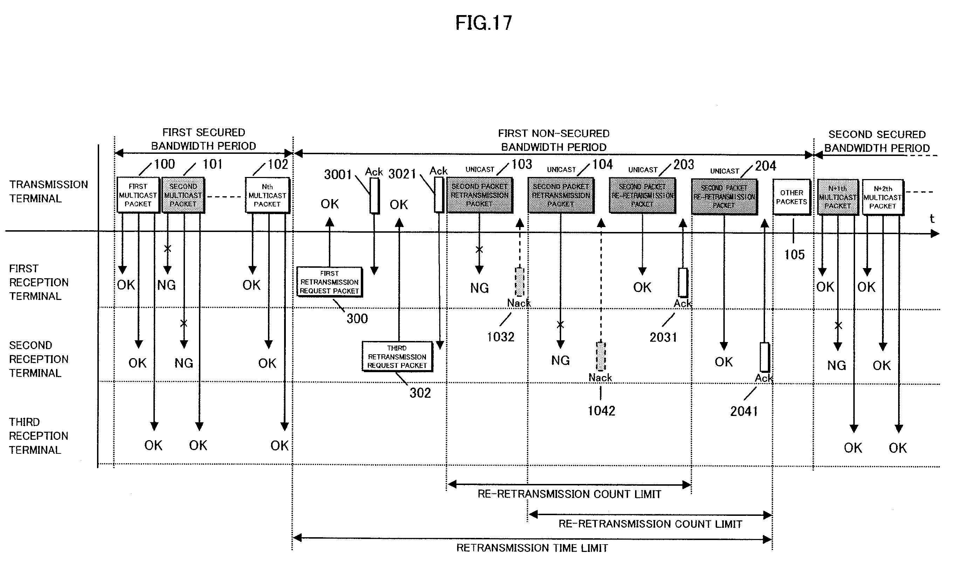

As shown in Fig.17, it is also possible for a third retransmission request 302 to be transmitted before the second packet retransmission packet 103 and re-retransmission packet 203. This is possible because the first non-secured bandwidth period is a period in which terminals can freely transmit packets, and is not a problem. In this case as well, the limit of the number of times re-retransmission can be performed and the limit on the amount of time for retransmissions can be applied in the same way.

### Priority of retransmission requests

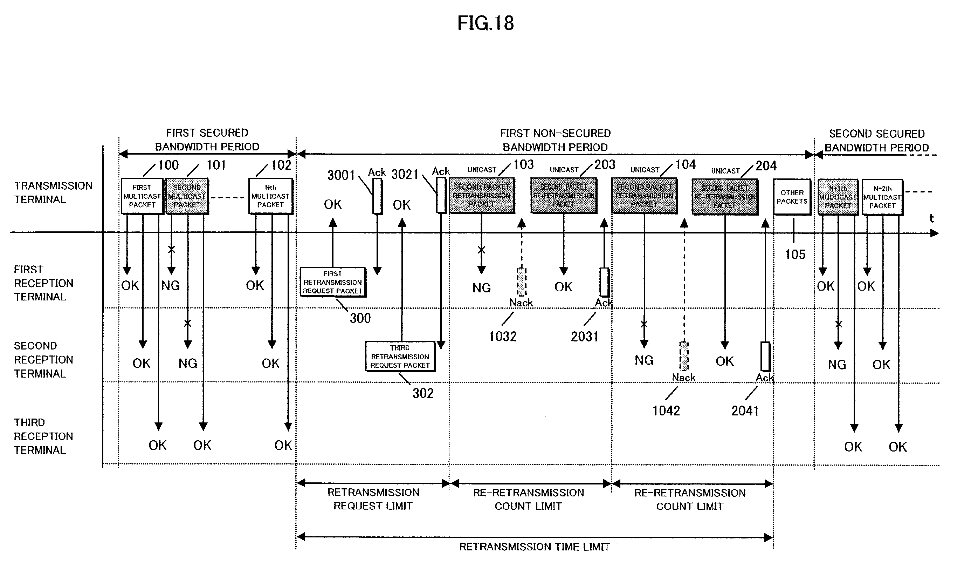

Fig.18 shows an example in which the priority of the retransmission request packets has been set to one level below the first to Nth multicast packets 100, 101 and 102. In other words, the priority of the retransmission request packets is set to be the higher than all other packets in the non-secured bandwidth period. This enables a limit to be set on the amount of time for retransmission requests, and the prevention of retransmission requests and retransmissions of retransmission requests from being performed limitlessly. Also, the transmission terminal can know in advance the arrival period of a retransmission request packet, thereby enabling efficient internal processing.

When the first to Nth multicast packets are all stored in the memory unit 17 in this way, the CPU 16 inputs this data to the AV processing unit 43 via the internal bus 19. The AV processing unit 43 processes the input data, and the processed data is displayed by the display unit 41.
In Fig. 3, the third reception terminal fails to receive the Nth multicast packet, whereby the same processing as mentioned above is performed with the second retransmission request packet 301, the Ack 3011, the Nth packet retransmission packet 104, and the Ack 1041, after which retransmission processing ends.

### Summary of embodiment 1

According to this structure, the present invention of embodiment 1 includes a memory unit for temporarily storing a plurality of data clusters that are higher than a Mac layer, a sequence number attaching unit for attaching sequence numbers to the plurality of data clusters in one-to-one correspondence, a wireless transmission unit for transmitting the plurality of data clusters, to which the sequence numbers have been attached, with use of secured bandwidth-type multicast packets, and a retransmission control unit for retransmitting data packets detected by the reception terminal as missing, and retransmission control pertaining to a secured bandwidth-type multicast packet is performed at a layer higher than the MAC layer, and the retransmission control performs unicast retransmission whose priority is lower than the priority of the secured bandwidth type multicast packet, thereby enabling an improvement in reception probability by retransmission, while transmitting secured bandwidth-type multicast data with priority.

Note that although retransmission processing for the retransmission request packet itself is mostly not mentioned in the present embodiment, this retransmission processing may be performed.

### Embodiment 2

Embodiment 2 pertains to an innovation on a sequence in the non-secured bandwidth period of embodiment 1. Although all the reception terminals as well as the transmission terminal can transmit necessary packets upon entering a non-secured bandwidth period, collisions will occur between packets on the network when the reception terminals perform transmission at arbitrary points, whereby it will be necessary to repeatedly perform retransmissions, re-retransmissions, re-re-retransmissions, and so on. In addition to retransmission requests resulting from failed reception of stream data, there are other types of packets such as a browsing request packet for an internet website, etc. While real-time ability is required for stream data, other packets such as the internet browsing request packet do not need real-time ability. It is necessary to avoid a situation in which the transmission path is monopolized by packets that do not require real-time ability, and such packets are forcibly transmitted.

Embodiment 2 is an improvement with respect to the above points. Following is a description of a structure realizing this improvement.

### Structure of a reception terminal

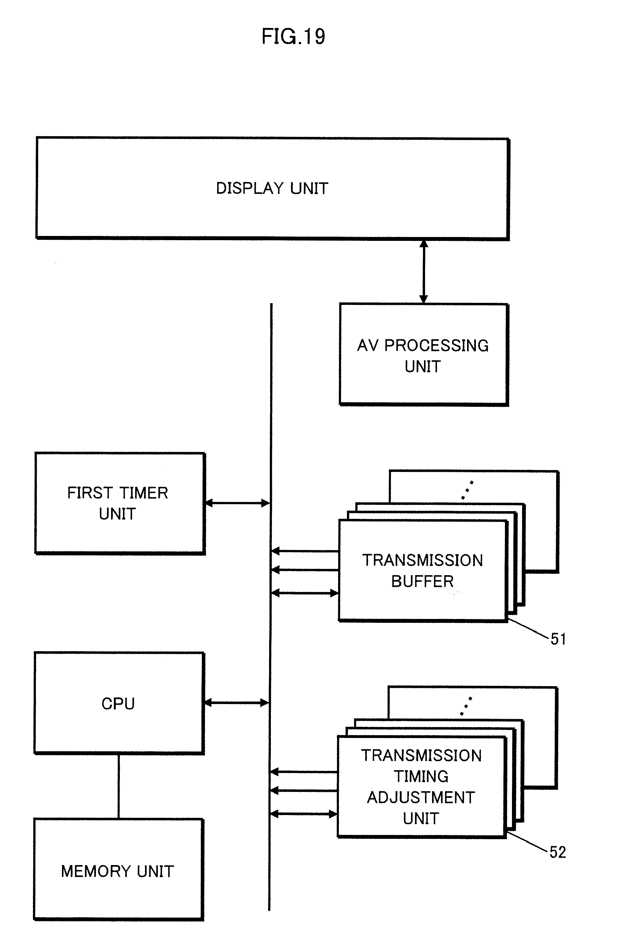

Fig.19 shows a structure of a reception terminal. The basic structure is the same as the reception terminals of embodiment 1 shown in Fig.11. The difference is that the reception terminal of the present embodiment includes normal data transmission buffers 51 ... and transmission timing adjustment units 52 .... Although not depicted, the transmission terminal includes normal data transmission buffers and transmission timing adjustment units, similarly to the reception terminal.

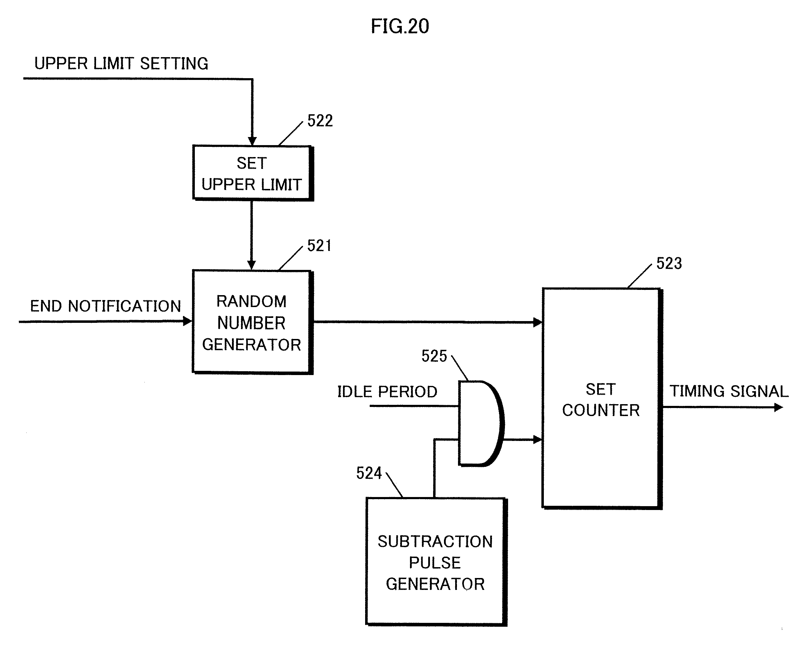

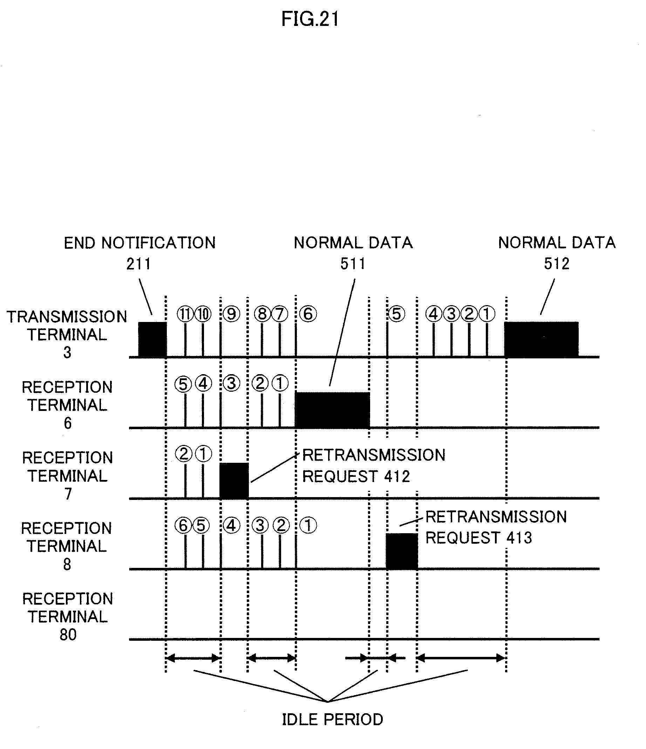

The number of normal data transmission buffers 51 ... equals the number of priority levels of packets that need to be transmitted in the non-secured priority period. The number of transmission timing adjustment units 52 ... equals the number of the normal data transmission buffers 51 ..., and a single timing transmission adjustment unit 52 controls the transmission timing for a single normal data transmission buffer 51.
As shown in Fig.20, the transmission timing adjustment units 52 ... are constituted from a random number generator 521, an upper limit setting unit 522, a counter 523, a subtraction pulse generator 524, as well as an AND circuit 525.
On receipt of a secured bandwidth period end notification, the random number generator 521 performs processing to generate a random number. Although the secured bandwidth period end notification can be obtained from the second timer unit provided in the MAC processing unit, the end notification is sent to all the reception terminals at once from the transmission terminal in the present embodiment (see end notification 211 in Fig. 21). On receipt of the end notification, the random number generator 522 generates a single random number. Note that the random number generators 521 are structured such that an upper limit is specified by the upper limit setting units 522 in accordance with a priority level, and the generated random number is within the range of the upper limit that has been set. The upper limit is lowest when the packet to be transmitted is a retransmission request packet. For example, assuming that an initial counter value of a normal data transmission buffer for data other than a retransmission request is randomly selected from "1" to "32", the initial counter value of a normal data transmission buffer for transmitting a retransmission request will be randomly selected from "1" to "8". CPUs included in the terminals instruct the upper limit setting units 522 to set upper limits such as those mentioned above.

The random number generated by the random number generator 521 is set in the counter 23. The counter 523 counts down a pulse generated by the subtraction pulse generator 524 from the set value when the AND circuit 525 is in a gate-open state, and when the count reaches zero, the counter 523 outputs a timing signal. The timing signal is sent from the transmission timing adjustment unit 52 to a corresponding transmission buffer 51 via a data bus, and causes packets stored in the buffer to be transmitted.

Note that the AND circuit 525 includes a gate signal as a signal indicating an idle period when packets are not being transmitted on the network. Accordingly, countdown operations are performed only during the idle period. The wireless transmission unit 18 observes the network status, and a signal indicating the idle period is obtained from the same wireless transmission unit 18. Also, the subtraction pulse generator 524 divides a frequency of the clock pulse in the terminals to a suitable frequency.

### Operations during the non-secured bandwidth period

Fig.21 shows an exemplary normal data transmission timing in the non-secured bandwidth period. In Fig.21, circled numbers indicate the count value of the normal data transmission buffers of the wireless terminals (including the transmission terminal and the reception terminals). Also, the count values are counted down per subtraction pulse cycle T1. In order to facilitate understanding of the countdown, time in the horizontal axis direction shows an outline, and the lengths of the time T1 counted down and the time required for a retransmission request or other normal data transmission are shown different from actual time lengths. Generally, the length of time required for transmission of normal data is far longer than the cycle T1.

Moreover, the terminals include only one each of the transmission buffer 51 and the transmission timing adjustment unit 52 in order to simplify the description.
In Fig.21, the non-secured bandwidth period begins when the transmission terminal 3 broadcast-transmits the secured bandwidth period end notification 211. In the non-secured bandwidth period, it is necessary for the reception terminal 7 to transmit a retransmission request 412 for stream data 312, and for the reception terminal 8 to transmit a retransmission request 413 for stream data 313. Apart from retransmission requests, it is also necessary for the transmission terminal 3 to transmit normal data 512, and for the reception terminal 6 to transmit normal data 511. Here, a counter upper limit is randomly selected from "1" to "32" for the transmission terminal 3 and the reception terminal 6, and from "1" to "8" for the reception terminals 7 and 8.

As shown in Fig.21, the selected initial counter values are "12" for the transmission terminal 3, "6" for the reception terminal 6, "3" for the reception terminal 7, and "7" for the reception terminal 8.
After the non-secured bandwidth period has begun, and when it is confirmed that the idle period in which other wireless terminals are not transmitting wireless frames in the wireless interval has begun, the transmission terminal 3 and the reception terminals count down 1 count each at the subtraction pulse cycle. The idle period in which other terminals are not transmitting wireless frames is judged to have begun according to when a measured reception power input from the antenna falls below a prescribed value. As the transmission terminal 3 and the reception terminals cause their timers to count down, it is the reception terminal 7, whose count first reaches zero, that obtains a normal data transmission right. When the count of the reception terminal 7 reaches zero, the reception terminal 7 immediately transmits the retransmission request 102 in the wireless interval. At this point, the counter values of the transmission terminal 3, and the other reception terminals 6, 8 and 80 are "9", "3" and "4" respectively.

Neither the transmission terminal 3 nor the reception terminals 6, 8 or 80 count down their respective counters while the reception terminal 7 is transmitting the retransmission request 102. The transmission terminal 3 and the reception terminals 6, 8 and 80 again count down their respective counters when the reception terminal 7 finishes transmitting the retransmission request 102 and the idle period begins. It is the reception terminal 6 whose counter next reaches zero, and the reception terminal 6 obtains the normal data transmission right and transmits the normal data 511. By repeating the above operations, the reception terminal 8 transmits the retransmission request 413, and the transmission terminal 3 transmits the normal data 512 in order.

In the example shown in Fig.21, the reception terminal 8 transmits the retransmission request 413 after the normal data 511 has been transmitted by the reception terminal 6. However, this is nothing more than one example, and as long as the possible values of the initial counter value when transmitting a retransmission request are from "1" to "8", and the possible values of the initial counter value when transmitting other normal data are from "1" to "32", there is a higher probability that the retransmission requests will obtain transmission rights with priority over asynchronous data, and be transmitted first. Also, it is possible to further prioritize the transmission of a retransmission request over other normal data if the range of the initial counter value when transmitting retransmission requests is set to a range of "1" to "4". However, the status of the wireless transmission path would degrade as the range of possible initial counter values is decreased, whereby transmission errors would occur frequently, the number of terminal transmitting retransmission requests would increase, there would be a higher probability that more than one wireless terminal has the same initial counter value, and there would be collisions when more than one wireless terminal transmits a retransmission request. Accordingly, the range of the initial counter value set when transmitting a retransmission request is set flexibly according to the status of the wireless transmission path, etc.

As mentioned above, transmitting retransmission requests for stream data along with other normal data makes it possible to efficiently use wireless bandwidth to notify a retransmission request to the transmission terminal 3.

### Embodiment 3

Embodiment 3 is an exemplary further development of embodiment 1. Specifically, a number of transmission errors occur in an actual transmission pathway, and in particular, the same reception terminal may fail to receive more than one packet. In this case in embodiment 1, there is the possibility of transmitting a retransmission request for each of the packets that failed to be received. When a reception terminal fails to receive more than one packet in the present embodiment, it is possible to reduce the number of retransmission requests to one.

Fig.22 is a time chart showing an exemplary packet sequence of a wireless transmission apparatus according to embodiment 3 of the present invention. In Fig.22, the same characters have been used for constituent elements that are the same as in Figs. 1, 3, and 15 to 18, and portions of descriptions thereof have been omitted.

### Packet sequence

In Fig.22, 300 is a first retransmission request packet, 3001 is an Ack packet that transmits a confirmation of successful reception of the first retransmission request packet 300, 103 is a second packet retransmission packet, 1031 is an Ack packet that transmits a confirmation of successful reception of the second packet retransmission packet 103, 1041 is a Nack packet that transmits a confirmation of failed reception of the Nth packet retransmission packet 104, 204 is an Nth packet re-retransmission packet, and 2041 is an Ack packet that transmits a confirmation of successful reception of the Nth packet re-retransmission packet 204.

### Operations of the transmission terminal

Next is a description of operations of the transmission terminal with reference to Fig.22.

Note that the structure of the transmission terminal is the same as shown in Fig.4, and because this structure has previously been described, a further description has been omitted.
In the first secured bandwidth period, the first to Nth multicast packets are transmitted to the first to third reception terminals.
At this time, the occurrence of errors during reception differs for each of the reception terminals since the first to third reception terminals have different setting environments and reception properties.

The first reception terminal fails to receive two packets, the first multicast packet 101 and the Nth multicast packet 102. Also, the first and Nth reception terminals both simultaneously fail to receive the Nth multicast packet 102.
The reception terminals use the first non-secured bandwidth period to transmit a retransmission request packet to the transmission terminal.

In the first secured bandwidth period, the first reception terminal fails to receive, from among the first to Nth multicast packets 100, 101 and 102, both the second multicast packet 101 and the Nth multicast packet, and uses the first non-secured bandwidth period to transmit the first retransmission request packet 300 to the transmission terminal. In this case, the retransmission request packet includes a retransmission request for both of the packets whose reception failed. Embodiment 3 also describes a structure in which retransmission requests are transmitted using unicast packets, in order to improve a reliability of the transmission of the retransmission request packets.

On proper receipt of the first retransmission request packet 300, the transmission terminal returns the Ack packet 3001 confirming successful reception, thereafter references the content of the retransmission request packet 3001, and first unicast-transmits the second packet retransmission packet 103 to the first reception terminal.
After confirming proper reception of the second packet retransmission packet 103, the first reception terminal returns the Ack 1031 to the transmission terminal. Thereafter, the transmission terminal transmits the Nth multicast packet, which is the second packet whose reception failed, to the first reception terminal.

The following describes more detailed operations using the drawing.

### Operations of the reception terminal: retransmission request

The transmission terminals have the structure shown in Fig.11, and receive the first to Nth multicast packets 100, 101 and 102 via the antenna 21. The first to Nth multicast packets 100, 101 and 102 are input to the wireless transmission unit 18, and output to the internal bus 19 after processing opposite of transmission has been performed.

The wireless transmission unit 18 has the structure shown in Fig.8, and in the wireless transmission terminal 18, the modulation performed at the time of transmission is first demodulated by the physical layer signal processing unit 32 to restore the MAC packet in Fig.10. The restored MAC packet is input to the MAC processing unit 31, and if the broadcast address shown in the MAC header indicates the broadcast group to which the wireless transmission unit 18 belongs, the MAC header is detached, and the packet is output to the buffer unit 29. The structure of the buffer unit 29 is the same as in the transmission terminal shown in Fig.9. A transmission buffer system is operated during transmission, whereas a reception buffer system is operated during reception. The MAC processed packet is input via the reception data input terminal 41 and temporarily stored in the reception buffer unit 40. Also, at this time, the MAC processing unit 31 controls, via the control signal IO terminal 42, the writing of received data to the reception buffer unit 40. The data temporarily stored in the reception buffer unit 40 passes through the data transmission/reception unit 34 and the IO terminals 33 and 28, and is output to the internal bus 19 and transferred to the CPU 16. At this time, the data transmission/reception unit 34 reads the data from the reception buffer unit 40 when the internal bus 19 has become available and the CPU 16 has become able to receive the data. On receipt of the data, the CPU 16 writes the reception data to the memory unit 17, and at the same time judges according to the IP header, the UDP header and the identifier of Fig. 6 whether further processing should be performed on the packet. In other words, the CPU 16 judges whether the reception data is self-addressed according to the IP header and UDP header, and uses the identifier to judge whether the reception data is multicast data to be stored in memory.

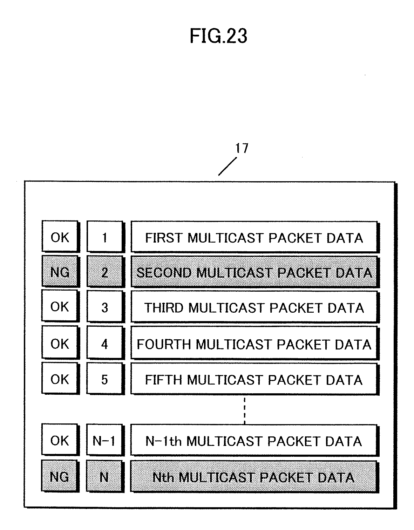

Fig.23 shows states of data stored in the memory 17. The stored first to Nth multicast packet data is written to the memory unit 17 such that it is possible to judge at that time which packet data having which sequence number has been lost. In this example, the positions of the first to Nth multicast packet data in memory are fixed, and identifiers for indicating whether proper reception and writing has been performed is attached to the beginnings of the sequence number-multicast packet data groups. In other words, by referencing the content of the memory unit 17, it is possible to judge which packets out of the first to Nth multicast packet cluster transmitted in the secured bandwidth period have been lost.

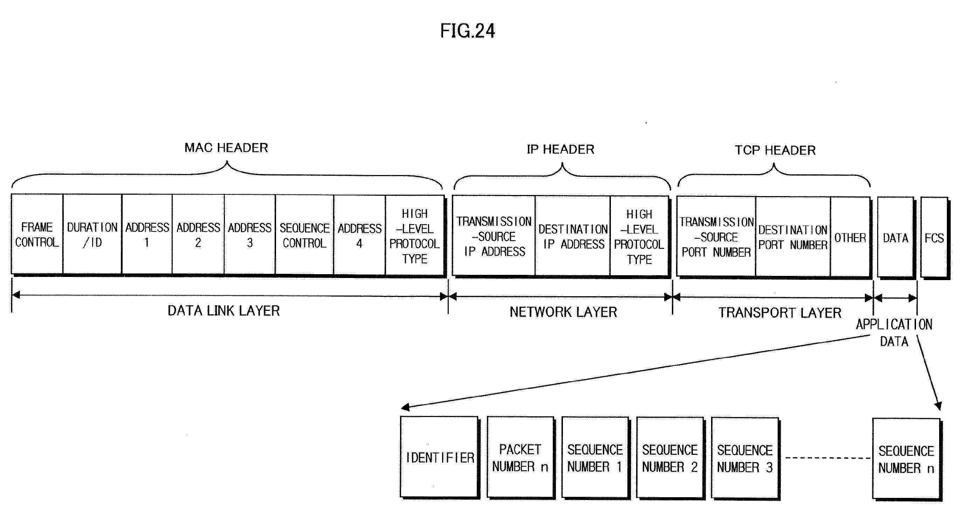

The CPU 16 judges that the second multicast packet data and the Nth multicast packet data have been lost based on the information stored in the memory unit 17, generates the retransmission request packet 300, and prepares to transmit the generated retransmission request packet 300 to the transmission terminal. Fig.24 shows a structure of the retransmission request packet 300. The CPU 16 stores an identifier identifying the retransmission request packet and a requested packet sequence number in the payload portion of the TCP header and the IP header, and in the case of more than one packet for which a retransmission request is being performed, the CPU 16 stores a packet number n before the packet sequence, and next stores the n sequence numbers.

This retransmission request packet 300 is transferred to the wireless transmission unit 18 via the internal bus 19. The retransmission request packet 300 is input to the buffer unit 29 via the IO terminal 28. In the buffer unit 29, the retransmission request packet 300 that was input via the IO terminal 33 is temporarily stored in the normal data transmission buffer 37 via the data transmission/reception unit 34, and transferred to the MAC processing unit 30 via the normal data output terminal 38. At this time, the MAC processing unit 30 judges, with use of the internally-provided second timer unit 31, whether or not it is currently the first non-secured bandwidth period, and when it becomes the first non-secured bandwidth period, controls the normal data buffer unit 37 via the control signal IO terminal 39, and reads the retransmission request packet 300 from the normal data buffer unit 37. After a MAC header has been attached, the read retransmission request packet 300 is modulated by the physical layer signal processing unit 32 to be suitable for transmission, and unicast-transmitted to the transmission terminal via the antenna 21. The secured bandwidth periods and the transmission timing may be determined by inputting the same timing to the high layer and the MAC using the first timer unit 20.

### Retransmission packet processing operations of the transmission terminal

The transmission terminal that received the retransmission request packet 300 confirms that the wireless packet has been received properly, and returns the Ack packet 3001 to the first reception terminal. On receipt of the Ack packet 3001, the first reception terminal waits for retransmission of the requested packet.

On receipt via the antenna 21 in the transmission terminal of Fig.4, the retransmission request packet 300 is output to the internal bus 19 by processing that is opposite of transmission.
The wireless transmission unit 18 has the structure shown in Fig.8, and first the modulation performed at the time of transmission is demodulated by the physical layer signal processing unit 32 to restore the MAC packet in Fig. 24. The restored MAC packet is input to the MAC processing unit 31, and if the address shown in the MAC header indicates the broadcast group to which the wireless transmission unit 18 belongs, the MAC header is detached, and the packet is output to the buffer unit 29. A transmission buffer system is operated during transmission, whereas a reception buffer system is operated during reception. The MAC processed packet is input via the reception data input terminal 41 and temporarily stored in the reception buffer unit 40. Also, at this time, the MAC processing unit 30 controls, via the control signal IO terminal 42, the writing of received data to the reception buffer unit 40. The data temporarily stored in the reception buffer unit 40 passes through the data transmission/reception unit 34 and the IO terminals 33 and 28, and is output to the internal bus 19 and transferred to the CPU 16. At this time, the data transmission/reception unit 34 reads the data from the reception buffer unit 40 when the internal bus 19 has become available and the CPU 16 has become able to receive the data. On receipt of the data, the CPU 16 writes the reception data to the memory unit 17, and at the same time judges according to the IP header and TCP header of Fig.24 whether further processing should be performed on the packet. After appropriate TCP/IP processing has been performed, the CPU 16 begins an operation for checking the content of the payload. First, the CPU 16 checks the identifier, and if the identifier indicates a retransmission request for more than one packet, the CPU 16 checks the subsequent number of packets and the number of stored packet sequence numbers. The CPU 16 then prepares to transmit the packet data pieces. Given that data which has just been multicast-transmitted is stored in the memory unit 17, the CPU 16 individually retransmits the second multicast packet data and the Nth multicast packet data whose retransmission was requested. Specifically, the CPU 16 transmits the second packet retransmission packet 103 in Fig.22 to the first reception terminal, and thereafter, transmits the Nth packet retransmission packet 104 to the first reception terminal. The retransmission packets have a structure as shown in Fig.10.

Although the transmission processing is equivalent to the procedure for performing multicast transmission in the first secured bandwidth period, this transmission is performed in the first non-secured bandwidth period since the priority of the retransmission packet is lower than the originally transmitted packet.
The CPU 16 transfers the retransmission packet data, which is to be transmitted in the first non-secured bandwidth period, to the wireless transmission unit 18 via the internal bus 19.

The wireless transmission data that was input from the CPU 16 via the internal bus 19 and the IO terminal 28 is input to the buffer unit 29.
In the buffer unit 29, the retransmission data for the second multicast packet that was input from the IO terminal 33 is selectively sent to the normal data transmission buffer unit 37 via the data transmission/reception unit 34, and input to the MAC processing unit 30 in accordance with the wireless transmission timing via the normal data output terminal 38.

The MAC processing unit 30 performs MAC protocol processing and management of the secured bandwidth periods and the non-secured bandwidth periods, reads the wireless transmission data from the buffer unit 29 in accordance with appropriate timing, and inputs the read wireless transmission data to the physical layer signal processing unit 32.
The MAC processing unit 30 uses the internally-provided second timer unit 31 to judge whether it is currently a secured bandwidth period, and during the secured bandwidth period, controls the buffer unit 29 with use of the transmission control signal IO terminal 39, reads data from the normal data transmission buffer unit 37, and unicast-transmits the read data. The timing according to which data is transferred from the CPU 16 to the buffer unit is determined using the control signal for controlling the priority data buffer unit 35 and the data transmission reception unit 34 via the transmission control signal IO terminal 39 as a trigger. The CPU 16 transfers the data to the wireless transmission unit 18 when the data request is received. Determination of the secured bandwidth period and the transmission timing may be performed by using the timer unit 20 to perform input with respect to the high layers and the MAC layer in accordance with the same timing.

The MAC processing unit 30 which received the data performs wireless MAC packetization on the data, and the wireless MAC packet is input to the physical layer signal processing unit 32, modulated therein to be suitable for wireless transmission, and wirelessly transmitted via the antenna 21. Such transmission processing is performed twice, once when transmitting the second packet retransmission packet 103, and again when transmitting the Nth packet retransmission packet 104.

As a result of the processing such as mentioned above, the packet data pieces whose retransmission was requested using the retransmission request packet 300 are transmitted to the first reception terminal. The first reception terminal which received the second packet retransmission packet 103 and the Nth packet retransmission packet 104 in this way returns an Ack packet, which is a reception confirmation packet, and retransmission of the packets that failed to be received ends.

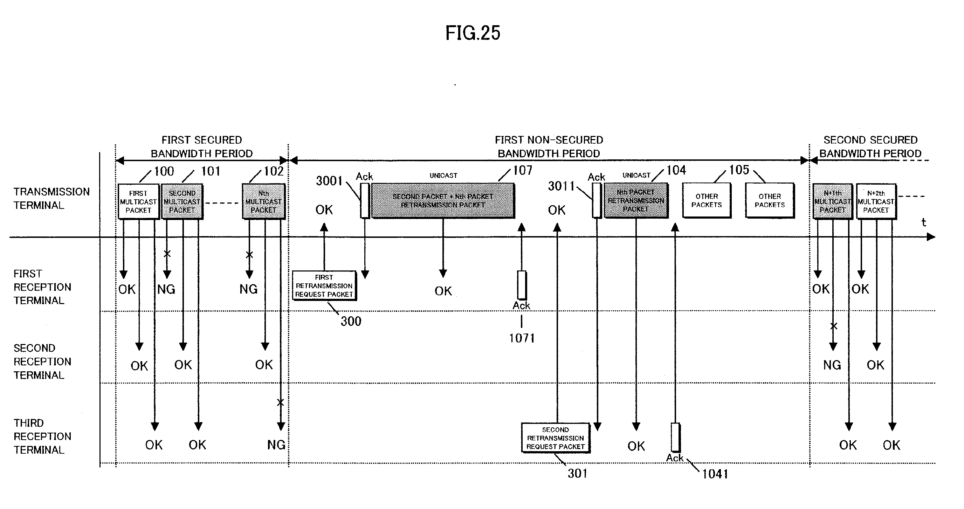

Note that if the first reception terminal fails to receive the Nth packet retransmission packet 104, the second packet retransmission packet itself may be retransmitted as shown in Fig.25. 204 is the Nth packet re-retransmission packet, which includes the same content as the Nth packet retransmission packet 104. An Ack packet 2041 is returned to the transmission terminal when the Nth packet re-retransmission packet 204 is successfully received, and re-retransmission ends. The number of times that re-retransmission can be performed should be limited since there is the possibility that the first non-secured bandwidth cannot be used by other terminals if re-retransmission is performed an unlimited number of times. Also, it is further practical to limit the amount of time for retransmissions in the first non-secured bandwidth period since it blocks other transmissions.

Also, in the case of retransmitting more than one packet, the data pieces may be sent in combination, such as a second packet + Nth packet retransmission packet 107 in Fig.25. This reduces overhead during retransmission.

### Structure of a retransmission packet

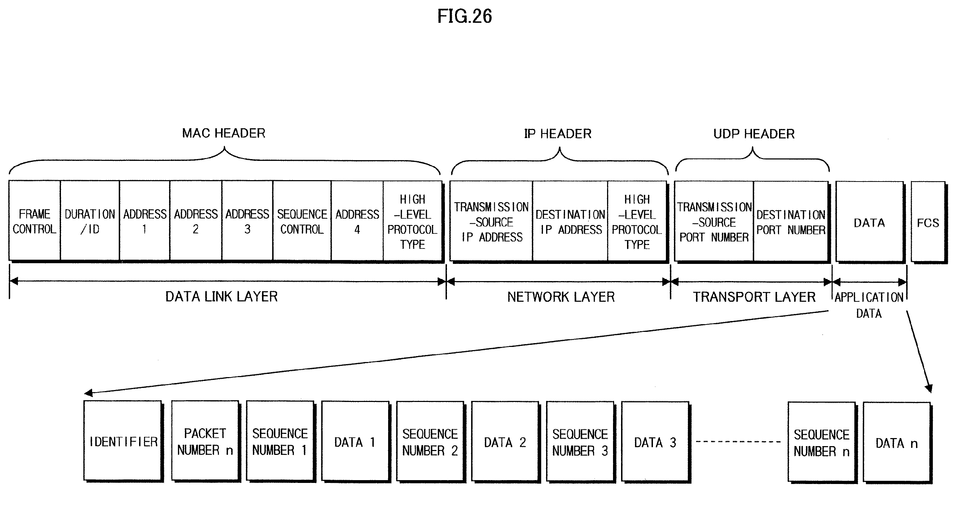

In the retransmission packet at this time, the payload portion should store, following the identifier, the packet number n, sequence number 1, data 1, sequence number 2, data number 2, and so on, as shown in Fig.26, for example. The combining of packets is performed when the CPU 16 generates the retransmission packet.

When the first to Nth multicast packets are all stored in the memory unit 17 in this way, the CPU 16 inputs this data to the AV processing unit 43 via the internal bus 19. The AV processing unit 43 processes the input data, and the processed data is displayed by the display unit 41.
In Fig.22, the third reception terminal fails to receive the Nth multicast packet, whereby the same processing as mentioned in embodiment 1 is performed with the second retransmission request packet 301, the Ack 3011, the Nth packet retransmission packet 104, and the Ack 1041, after which retransmission processing ends.

According to this structure, the present invention of embodiment 2 includes a memory unit for temporarily storing a plurality of data clusters that are higher than a Mac layer, a sequence number attaching unit for attaching sequence numbers to the plurality of data clusters in one-to-one correspondence, a wireless transmission unit for transmitting the plurality of data clusters, to which the sequence numbers have been attached, with use of secured bandwidth-type multicast packets, and a retransmission control unit for retransmitting data packets detected by the reception terminal as missing, and retransmission control pertaining to a secured bandwidth-type multicast packet is performed at a layer higher than the MAC layer, and the retransmission control performs unicast retransmission whose priority is lower than the priority of the secured bandwidth type multicast packet, thereby enabling an improvement in reception probability by retransmission, while transmitting secured bandwidth-type multicast data with priority. If terminals on the receiving side fail to receive more than one multicast packet in the same secured bandwidth period, using a single retransmission request packet to request the retransmission of the more than one multicast packet enables a reduction in the number of retransmission requests that are sent. Also, transmitting a number of retransmission packets in combination enables a reduction in wasted bandwidth for retransmission packets.

Note that although retransmission processing for the retransmission request packet itself is not mentioned in the present embodiment, this retransmission processing may be performed.
Also, the structure described in embodiment 2 may be applied in the non-secured bandwidth period in the present embodiment, whereby it is possible to perform transmission timing adjustment if the transmission terminal and more than one reception terminal are transmitting retransmission packets and other normal packets.

### Embodiment 4

In the above embodiments, retransmission packets are transmitted using a method of individual unicast-transmission, which is extremely inefficient in the case of more than one reception terminal having failed to receive the same packet. The present embodiment is a technique suited for handling such a case.

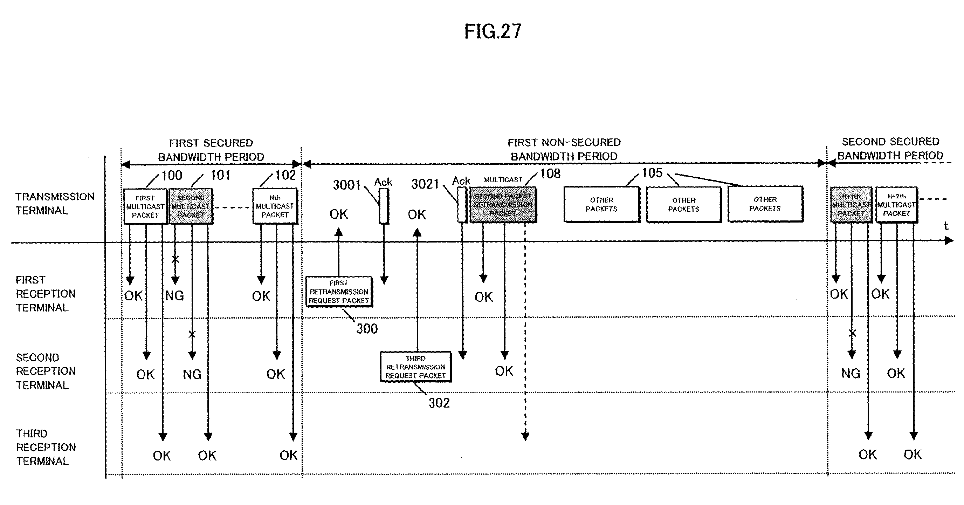

Fig.27 is a time chart showing an exemplary packet sequence in a wireless transmission apparatus pertaining to embodiment 3 of the present invention. In Fig.27, constituent elements the same as constituent elements in previous time charts have been given the same characters, and descriptions thereof have been omitted.

### Packet sequence

In Fig.27, 300 is a first retransmission request packet, 3001 is an Ack packet that transmits a confirmation of successful reception of the first retransmission request packet 300, 302 is a third retransmission request packet, 3021 is an Ack packet that transmits a confirmation of successful reception of the third retransmission request packet 302, and 108 is a second packet retransmission packet.

In a wireless interval, transmission is performed in secured bandwidth periods and non-secured bandwidth periods that are switched alternately and cyclically. The N data clusters are units of only data for which a reception error occurred after being multicast-transmitted in the first secured bandwidth period, and are to be retransmitted in the first non-secured bandwidth period.
Operations of multicast distribution in the secured bandwidth period are the same as previously described in embodiment 1, and a description of these operations has been omitted since the packet numbers and reception terminals for which reception failed are as shown in Fig.27. The following describes operations with respect to retransmission performed during the first non-secured bandwidth period.

In the first non-secured bandwidth period, the first and second reception terminals fail to receive the first multicast packet 101. These reception terminals therefore use the first non-secured bandwidth period to transmit retransmission request packets to the transmission terminal.
The first and second reception terminals that failed to receive a multicast packet use the first non-secured bandwidth period to separately send the first retransmission request packet 300 and the third transmission request packet respectively to the transmission terminal. The present embodiment also includes a description of a structure in which retransmission requests are performed using unicast packets in order to improve the reliability of retransmission request packet transmission. On proper receipt of the first and third retransmission request packets 300 and 303, the transmission terminal returns the Ack packets 3001 and 3002 that confirm successful reception, and thereafter reference the content of the both the retransmission request packets 300 and 302 in order to judge whether both of the retransmission request packets are requesting retransmission of the same second packet data. The transmission terminal then uses a multicast packet to transmit the second packet data to the multicast group to which the first and second reception terminals both belong.

### Operations of a reception terminal

The following is a detailed description of operations of the reception terminals with reference to the drawings.

The first and second transmission terminals have the structure shown in Fig.11, and receive the first to Nth multicast packets 100, 101 and 102 via the antenna 21. The first to Nth multicast packets 100, 101 and 102 are input to the wireless transmission unit 18, and output to the internal bus 19 after processing opposite of transmission has been performed.
In the wireless transmission terminal 18, the modulation performed at the time of transmission is first demodulated by the physical layer signal processing unit 32 to restore the MAC packet in Fig. 10. The restored MAC packet is input to the MAC processing unit 31, and if the broadcast address shown in the MAC header indicates the broadcast group to which the wireless transmission unit 18 belongs, the MAC header is detached, and the packet is output to the buffer unit 29. The buffer 29 receives the MAC processed packet, and the MAC processed packet is temporarily stored in the reception buffer unit 40. Also, at this time, the MAC processing unit 31 controls, via the control signal IO terminal 42, the writing of received data to the reception buffer unit 40. The data temporarily stored in the reception buffer unit 40 passes through the data transmission/reception unit 34 and the IO terminals 33 and 28, and is output to the internal bus 19 and transferred to the CPU 16. At this time, the data transmission/reception unit 34 reads the data from the reception buffer unit 40 when the internal bus 19 has become available and the CPU 16 has become able to receive the data. On receipt of the data, the CPU 16 writes the reception data to the memory unit 17, and at the same time judges according to the IP header, the UDP header and the identifier of Fig. 6 whether further processing should be performed on the packet. In other words, the CPU 16 judges whether the reception data is self-addressed according to the IP header and UDP header, and uses the identifier to judge whether the reception data is multicast data to be stored in memory.

It is possible to judge which packets with which sequence numbers have been lost by referencing the content of the memory unit 17.
The CPU 16 judges that the second multicast packet data has been lost based on the information stored in the memory unit 17, generates the retransmission request packet 300 or 302, and prepares to transmit the generated retransmission request packet 300 or 302 to the transmission terminal. The CPU 16 stores an identifier identifying the retransmission request packet and a requested packet sequence number in the payload portion of the TCP header and the IP header.

This retransmission request packet 300 or 302 is transferred to the wireless transmission unit 18 via the internal bus 19. The retransmission request packet 300 is temporarily stored in the normal data buffer unit 37 of the buffer unit 29, and then transferred to the MAC processing unit 30. The MAC processing unit 30 judges, with use of the internally-provided second timer unit 31, whether or not it is currently the first non-secured bandwidth period, and when it becomes the first non-secured bandwidth period, controls the normal data buffer unit 37 via the control signal IO terminal 39, and reads the retransmission request packet 300 or 302 from the normal data buffer unit 37. After a MAC header has been attached, the read retransmission request packet 300 or 302 is modulated by the physical layer signal processing unit 32 to be suitable for transmission, and unicast-transmitted to the transmission terminal via the antenna 21. The above processing is performed in the first reception terminal with respect to the retransmission packet 300, and in the second reception terminal with respect to the retransmission request packet 302.

### Operations of the transmission terminal

The transmission terminal that received the retransmission request packet 300 confirms that the wireless packet has been received properly, and returns the Ack packet 3001 to the first reception terminal. On receipt of the Ack packet 3001, the first reception terminal waits for retransmission of the requested packet. The transmission terminal that received the retransmission request packet 302 confirms that the wireless packet has been received properly, and returns the Ack packet 3021 to the second reception terminal. On receipt of the Ack packet 3001 and 3021, the first and second reception terminals wait for retransmission of the requested second multicast packet.
On receipt via the antenna 21 in the transmission terminal, the retransmission request packet 300 or 302 is output to the internal bus 19 by processing that is opposite of transmission.

In the wireless transmission unit 18, the modulation performed at the time of transmission is first demodulated by the physical layer signal processing unit 32 to restore the MAC packet. The restored MAC packet is input to the MAC processing unit 31, and if the address shown in the MAC header indicates the broadcast group to which the wireless transmission unit 18 belongs, the MAC header is detached, and the packet is output to the buffer unit 29. In the buffer unit 29, the MAC processed packet is input via the reception data input terminal 41 and temporarily stored in the reception buffer unit 40. Also, at this time, the MAC processing unit 30 controls, via the control signal IO terminal 42, the writing of received data to the reception buffer unit 40. The data temporarily stored in the reception buffer unit 40 passes through the data transmission/reception unit 34 and the IO terminals 33 and 28, and is output to the internal bus 19 and transferred to the CPU 16. At this time, the data transmission/reception unit 34 reads the data from the reception buffer unit 40 when the internal bus 19 has become available and the CPU 16 has become able to receive the data. On receipt of the data, the CPU 16 writes the reception data to the memory unit 17. If more than one retransmission request packet requesting the same data is received, the CPU 16 compares the content of the retransmission request packets, and prepares to multicast-transmit the corresponding packet data. Given that data which has just been multicast-transmitted is stored in the memory unit 17, the CPU 16 individually retransmits the second multicast packet data whose retransmission was requested. Specifically, the CPU 16 transmits a second packet retransmission packet 108 in Fig.27 to the multicast group to which the first and second reception terminals belong.

The retransmission packet 108 has the structure shown in Fig.10, and the payload portion is constituted from an identifier identifying the retransmission packet, a sequence number, and data. The data portion is the same as the second multicast packet data that was originally multicast-transmitted.
Although the transmission processing is equivalent to the procedure for performing multicast transmission in the first secured bandwidth period, this transmission is performed in the first non-secured bandwidth period since the priority of the retransmission packet is lower than the originally transmitted packet.

The CPU 16 transfers the retransmission packet data, which is to be transmitted in the first non-secured bandwidth period, to the wireless transmission unit 18 via the internal bus 19.
The wireless transmission data that was input from the CPU 16 via the internal bus 19 and the IO terminal 28 is input to the buffer unit 29.
The retransmission data for the second multicast packet that was input from the IO terminal 33 is selectively sent to the normal data transmission buffer unit 37 via the data transmission/reception unit 34, and input to the MAC processing unit 30 in accordance with the wireless transmission timing via the normal data output terminal 38.

The MAC processing unit 30 performs MAC protocol processing and management of the secured bandwidth periods and the non-secured bandwidth periods, reads the wireless transmission data from the buffer unit 29 in accordance with appropriate timing, and inputs the read wireless transmission data to the physical layer signal processing unit 32.
The MAC processing unit 30 uses the internally-provided second timer unit 31 to judge whether it is currently a secured bandwidth period, and during the secured bandwidth period, controls the buffer unit 29 with use of the transmission control signal IO terminal 39, reads data from the normal data transmission buffer unit 37, and multicast-transmits the read data.

The timing according to which data is transferred from the CPU 16 to the buffer unit is determined using the control signal for controlling the priority data buffer unit 35 and the data transmission reception unit 34 via the transmission control signal IO terminal 39 as a trigger. The CPU 16 transfers the data to the wireless transmission unit 18 when the data request is received. Determination of the secured bandwidth period and the transmission timing may be performed by using the timer unit 20 to perform input with respect to the high layers and the MAC layer in accordance with the same timing.

The MAC processing unit 30 which received the data performs wireless MAC packetization on the data, and the wireless MAC packet is input to the physical layer signal processing unit 32 where it is modulated to be suitable for wireless transmission, and wirelessly transmitted via the antenna 21. In this way, the second packet retransmission packet 108 is multicast-transmitted.
If two reception terminals use the retransmission request packets 300 and 302 to request retransmission of the same data, multicast is used to transmit the requested packets to the first and second reception terminals using processing such as is mentioned above.

### Variations and applications of the present embodiment

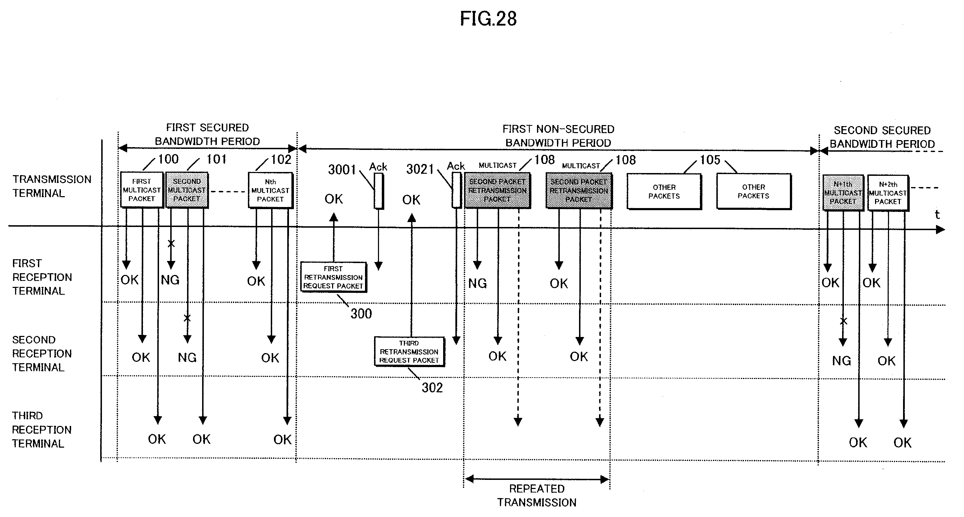

Given that the second packet retransmission packet 108 is multicast-transmitted without the use of Ack packets, transmission may be repeatedly performed as shown in Fig.28 if one desires to improve reliability.

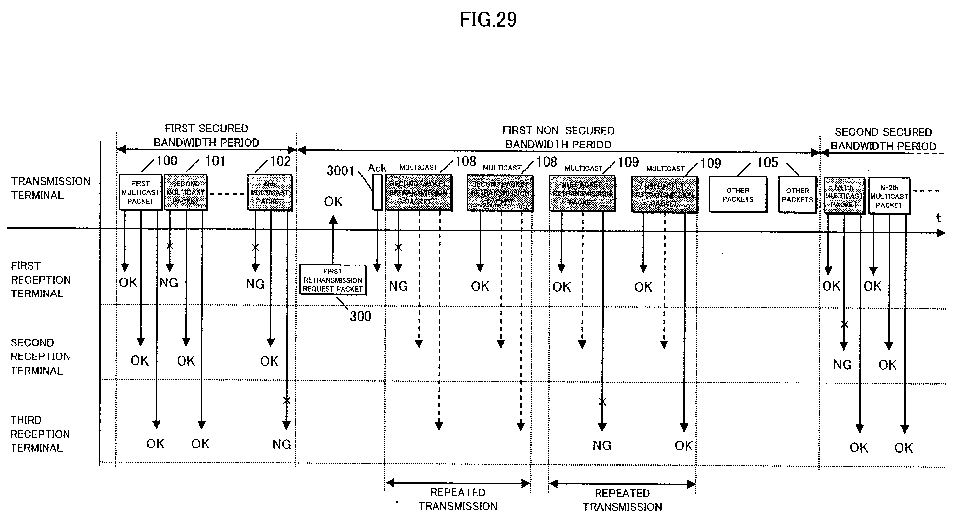

Even if reception fails in only one terminal as with the second multicast packet 101 in Fig.29, the second packet retransmission packet 108 may be repeatedly multicast-transmitted if the retransmission request packet includes requests for other packets as well (in the case of Fig.29, the first reception terminal uses the first retransmission request packet 30 to request retransmission of the second and Nth multicast packets 101 and 102). If more than one reception terminal simultaneously fails to receive the Nth multicast packet 102 in Fig.29, the use of this method enables the retransmission of this packet when the first retransmission request packet 300 is received, without waiting for retransmission request packets to be received from the other reception terminals. This enables the reception of necessary retransmission packets even if the third reception terminal does not transmit a retransmission request packet.

Although the first retransmission request packet 300 is unicast-transmitted in Fig.29, multicast-transmission would enable other reception terminals to know which data is being request by other reception terminals. Therefore, the CPU 16 may perform transmission cancel judgment with respect to a retransmission request packet when it is judged that another reception terminal has requested the same data.

Note that the number of times the retransmission request packets in Figs.28 and 29 are repeated should be determined adaptively by the CPU 16 as required according to the past number of times the retransmission request packets have been retransmitted.
Also, the number of times the retransmission packets in Figs.28 and 29 are repeated should be determined adaptively by the CPU 16 as required according to the past number of times the retransmission packets have been retransmitted.
Also, it is possible to reduce the number of both retransmission packets and retransmission packets and realize the effective utilization of bandwidth by combining all the packets requested for retransmission at the high layer, and multicast-transmitting the second packet + Nth packet retransmission packet 110. In this case, there is a higher possibility for failed reception due to the increased length of the multicast packet. A terminal that fails to receive this multicast packet may again transmit the retransmission request 301 and reacquire a portion (packet 104) of the packet 110. At this time, the probability of reception can be increased by using unicast transmission on the transmission side.

When the first to Nth multicast packets are all stored in the memory unit 17 in this way, the CPU 16 inputs this data to the AV processing unit 43 via the internal bus 19. The AV processing unit 43 processes the input data, and the processed data is displayed by the display unit 41.
According to this structure, the present invention of embodiment 4 includes a memory unit for temporarily storing a plurality of data clusters that are higher than a Mac layer, a sequence number attaching unit for attaching sequence numbers to the plurality of data clusters in one-to-one correspondence, a wireless transmission unit for transmitting the plurality of data clusters, to which the sequence numbers have been attached, with use of secured bandwidth-type multicast packets, and a retransmission control unit for retransmitting data packets detected by the reception terminal as missing, and retransmission control pertaining to a secured bandwidth-type multicast packet is performed at a layer higher than the MAC layer, and the retransmission control performs unicast retransmission whose priority is lower than the priority of the secured bandwidth type multicast packet, thereby enabling an improvement in reception probability by retransmission, while transmitting secured bandwidth-type multicast data with priority. Here, the transmission amount with respect to retransmission packets can be reduced since retransmission data is multicast-transmitted if more than one reception terminal fails to receive the same multicast packet in the same secured bandwidth period. The reception probability can also be improved by repeatedly multicast-transmitting retransmission packets. Also, performing multicast transmission when the first retransmission request packet is received eliminates the need for other reception terminals to transmit retransmission request packets, thereby enabling efficient bandwidth utilization. Performing transmission after combining retransmission packets at the high layer also enables efficient bandwidth utilization.

Note that although retransmission processing with respect to the retransmission request packet itself has not been mentioned in the present embodiment, this retransmission processing may be performed.
Also, adjustment of transmission timing can be performed if the structure described in embodiment 2 is employed in the non-secured bandwidth period in the present embodiment, and the transmission terminal as well as the plurality of reception terminals transmit retransmission packets and other normal packets.

### Embodiment 5

In embodiment 4, retransmission packets are multicast-distributed, and this distribution is performed during a non-secured bandwidth period. With multicast distribution, it is possible to perform transmission in the secured bandwidth period of the next cycle, rather than in a non-secured bandwidth period. The present embodiment employs a structure in which retransmission packets are transmitted in the secured bandwidth period of the next cycle. Also, although the transmission and reception of packets is performed by transmission terminals and reception terminals in the above embodiments, the present embodiment involves the employment of an exemplary structure in which packets are exchanged between a base station and child stations. For this reason, attention should be given where different terminology is used.
Moreover, the adjustment of transmission timing described in embodiment 2 is performed in the non-secured bandwidth period in the present embodiment. Note that portions of this description overlap with the description in embodiment 2.

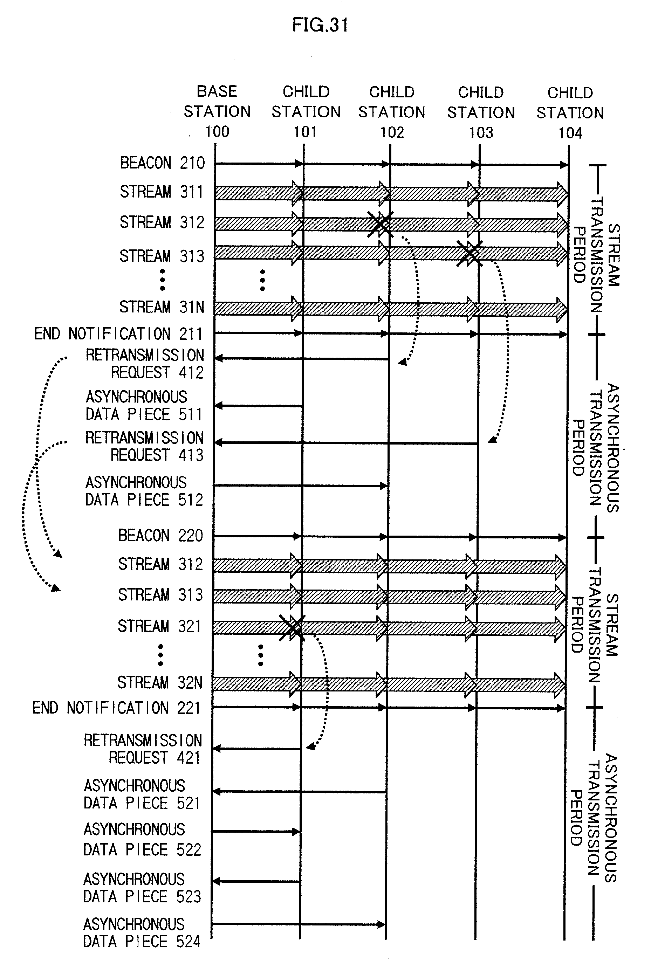

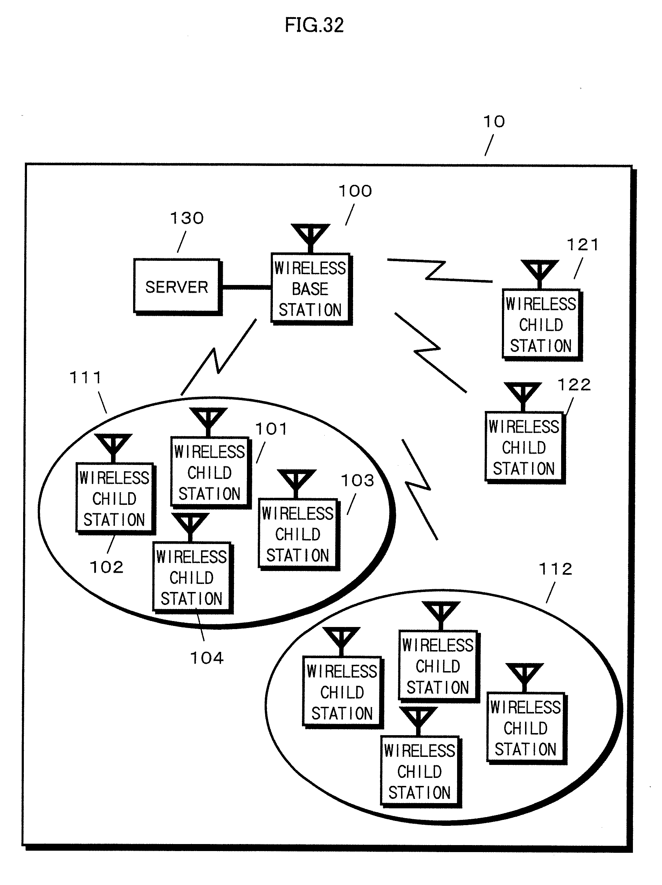

Fig.31 is a frame format diagram used for describing a wireless multicast retransmission method of the present embodiment, and Fig.32 shows a structure of a wireless network to which the method of Fig.31 has been applied.

### Structure of the wireless network

In Fig.32, a wireless network 310 is constituted from a wireless base station 100, a multicast group 11 including wireless child stations 101 to 104, a multicast group 12, and wireless child stations 121 and 122, and these devices are connected by a wireless LAN. Also, the wireless base station 100 is connected to a server storing content such as video and audio by a high-speed serial bus such as IEEE1394 or a wired network such as the Internet. The wireless child stations belonging to the multicast groups 111 and 112 not only receive wireless frames multicast-distributed from the wireless base station 100, but are also capable of individually transmitting and receiving wireless frames to/from the wireless base station 100. The wireless child stations 121 and 122 can perform wireless transmission with other wireless child stations either directly or via the wireless base station 100. The wireless base station 100 performs transmission control, such as the transmission timing of these wireless frames, for the wireless child stations.

### Structure of the wireless base station

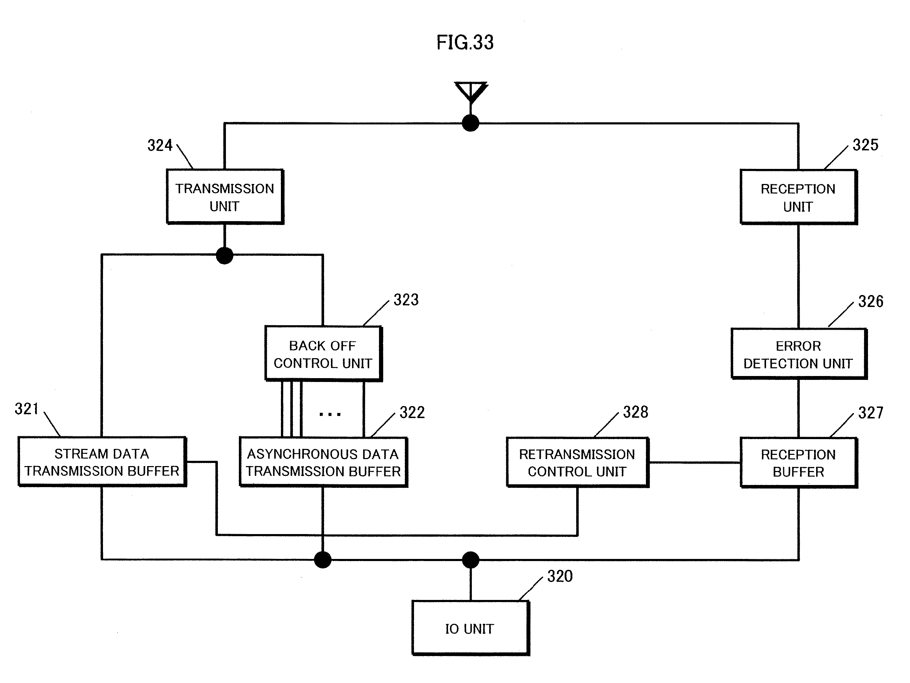

Fig.33 shows a device structure of the wireless base station 100. The following describes operations of the wireless base station 100 using Fig.33.

In Fig.33, an IO (input/output) unit 320 is an interface with the high-speed serial bus such as IEEE1394 of a wired network such as the Internet, and exchanges stream data and asynchronous data between terminals connected thereto. A stream data transmission buffer 321 attaches a stream data number and error detection code to the stream data received from the IO unit 320, performs conversion to wireless frames, and stores the wireless frames. The stream data stored by the stream data transmission buffer 321 is transmitted by a transmission unit 324 in a stream transmission period in a wireless interval.

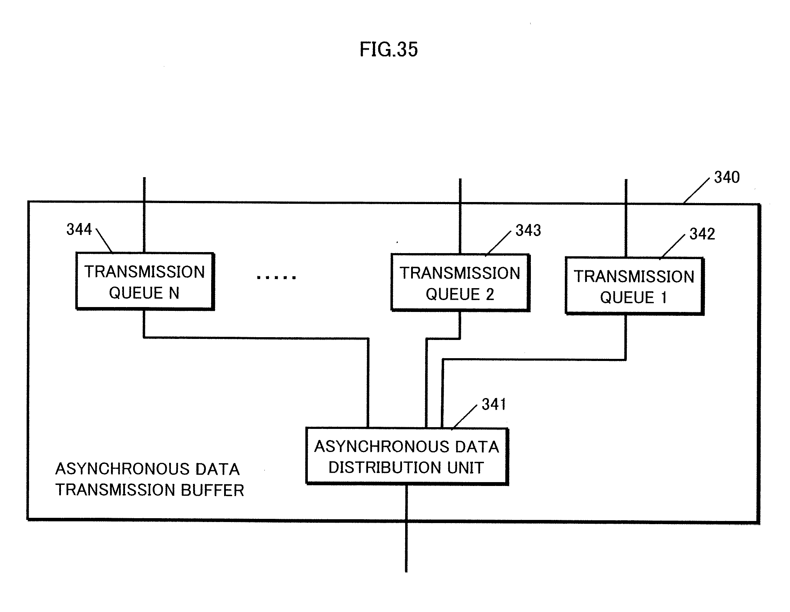

An asynchronous data transmission buffer 322 attaches error detection code to asynchronous data received from the IO unit 320, performs conversion to wireless frames, and stores the wireless frames. Fig.35 shows a structure of the asynchronous data transmission buffer 322 when transmitting asynchronous data in an order of priority. In Fig.35, an asynchronous data transmission buffer 340 is the same as the asynchronous data transmission buffer 322 in Fig.33. The asynchronous data transmission buffer 340 is constituted from an asynchronous data distribution unit 341 and a plurality of transmission queues (1) 342 to (N) 344. The asynchronous data distribution unit 341 sorts the asynchronous data received from the IO unit 320 according to priority rank, and outputs the asynchronous data to the transmission queues (1) 342 to (N) 344 which sequentially store the asynchronous data for each priority rank.

In Fig.33, a back-off control unit 323 provides a counter for each of the transmission queues (1) 342 to (N) 344. When asynchronous data is stored in any of the transmission queues (1) 342 to (N) 344, the back-off control unit 323 inserts a randomly selected natural number to the counter as an initial value, the counter counts down per predetermined time T1 in an asynchronous transmission period, and when the counter reaches 0, the asynchronous data stored in the corresponding transmission queue is transmitted in the wireless interval by the transmission unit 324.

The transmission unit 324 performs digital modulation such as multilevel phase modulation or multilevel quadrature amplitude modulation on the stream data or asynchronous data, converts the digitally modulated data to a high-frequency band analog signal, and transmits the analog signal from the antenna in the wireless interval.
A reception unit 325 performs digital demodulation by converting an analog signal received from the antenna to a baseband digital signal. An error detection unit 326 detects whether there are any transmission errors in the received data that was digitally demodulated, and the received data is stored in a reception buffer 327 if there were no errors.

The reception buffer 327 identifies the reception data, transfers the reception data to a retransmission control unit 328 if it is a retransmission request, and transfers the reception data to the IO unit 320 if it is other data. On receipt of a retransmission request, the retransmission control unit 328 instructs the stream data transmission buffer 321 to retransmit the stream data indicated in the retransmission request.

### Structure of a wireless child station

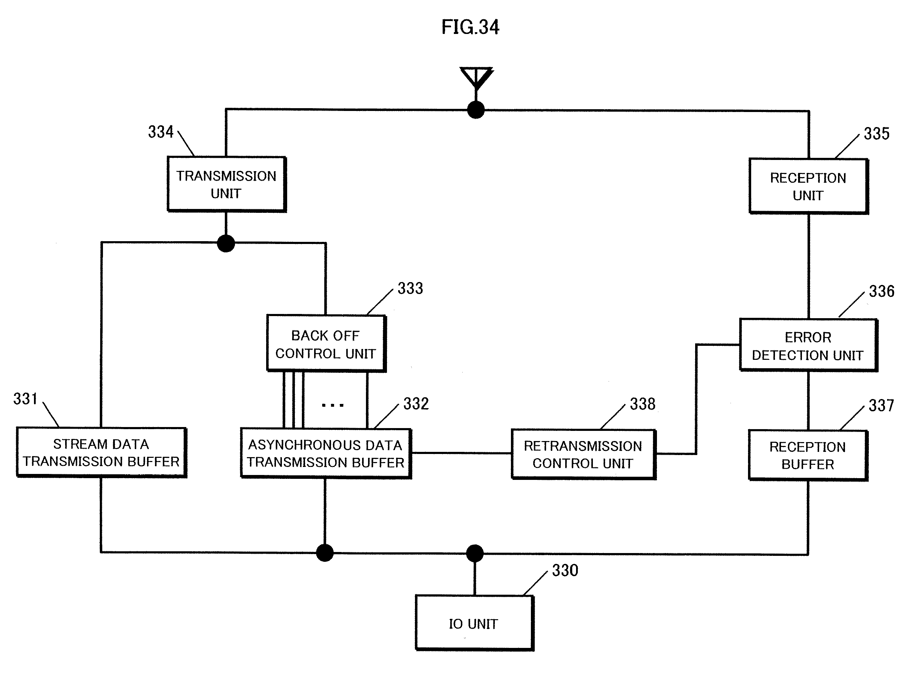

Fig.34 shows a device structure of the wireless child stations. The following describes operations of the wireless child stations using Fig.34.

In Fig.34, an IO (input/output) unit 330 is an interface that exchanges data such as stream data and asynchronous data. A stream data transmission buffer 331 attaches a stream data number and error detection code to stream data received from the IO unit 330, performs conversion to wireless frames, and stores the wireless frames. The stream data stored in the stream data transmission buffer 331 is transmitted by a transmission unit 334 in the wireless interval in the stream transmission period, according to control of a wireless base station 1100. Note that there is no need to provide the stream data transmission buffer 331 in wireless child stations that do not transmit stream data.

An asynchronous data transmission buffer 332 attaches error detection code to asynchronous data input from the IO unit 330 and a retransmission request input from a retransmission request unit 338, performs conversion to wireless frames, and stores the wireless frames. Fig.35 shows a detailed structure of the asynchronous data transmission buffer 340 of the wireless child station, similarly to the wireless base station. The asynchronous data transmission buffer 340 is the same as the asynchronous data transmission buffer 332 in Fig.34. The asynchronous data transmission buffer 340 is constituted from an asynchronous data distribution unit 41 and a plurality of transmission queues (1) 342 to (N) 344. The asynchronous data distribution unit 341 sorts the asynchronous data received from the IO unit 330 and the retransmission requests input from the retransmission request unit 338 according to priority rank, and outputs the asynchronous data and the retransmission requests to the transmission queues (1) 342 to (N) 344. Assuming that the transmission queue (1) 342 has the highest priority rank, the retransmission request is stored in the transmission queue (1) 342, and other asynchronous data is stored non-sequentially in the transmission queues (2) 343 to (N) 344 per priority rank.

In Fig.34, a back-off control unit 333 provides a counter for each of the transmission queues (1) 342 to (N) 344. When asynchronous data is stored in any of the transmission queues (1) 342 to (N) 344, the back-off control unit 333 inserts a randomly selected natural number to the counter as an initial value, the counter counts down per predetermined time T1 in an asynchronous transmission period, and when the counter reaches 0, the asynchronous data stored in the corresponding transmission queue is transmitted in the wireless interval by the transmission unit 334.

The transmission unit 334 performs digital modulation such as multilevel phase modulation or multilevel quadrature amplitude modulation on the stream data or asynchronous data, converts the digitally modulated data to a high-frequency band analog signal, and transmits the analog signal from the antenna in the wireless interval.
A reception unit 335 performs digital demodulation by converting an analog signal received from the antenna to a baseband digital signal. An error detection unit 336 detects whether there are any transmission errors in the received data that was digitally demodulated, and the retransmission request unit 338 is notified if there were no errors.

The reception buffer 337 identifies the reception data, and if the reception data is stream data, restructures the stream data in numerical order, and transfers the stream data to the IO unit 320. In order to notify the wireless base station 1100 of numbers of wireless frame detected by the error detection unit 336, the retransmission request unit 338 forms retransmission wireless frames, and stores the retransmission wireless frames in the asynchronous data transmission buffer 332.

### Operations on the wireless network

In the wireless network 110 with the above structure, video content currently stored on the server 130 is distributed, via the wireless base station 100, to the wireless child stations 101 to 104 that belong the multicast group 111. The wireless base station 100 receives the video content from the server 130 in divisions of stream data, attaches stream numbers to the received stream data, performs conversion to wireless frames, and multicast-distributes the wireless frames to the multicast group 111.

### Multicast transmission method

The following describes the wireless multicast transmission method in a case of the wireless base station 100 wirelessly distributing stream data to the wireless child stations 101 to 104 that belong to the multicast group 111. In Fig.31, the vertical axis represents the elapse of time from top to bottom, and the horizontal axis represents states of wireless frames that are constituted from stream data and asynchronous data and are transmitted/received between wireless terminals. In the wireless multicast transmission method of the present embodiment, time is divided into predetermined time cycles, and a stream transmission period (corresponding to the secured bandwidth period in the above-mentioned embodiment) and an asynchronous transmission period (corresponding to a secured bandwidth period in the above-mentioned embodiments) are provided in each of the time cycles. In the stream transmission period, the wireless base station 100 or any of the wireless child stations transmit, according to control of the wireless base station 100, stream data such as audio or video whose transmission requires that wireless bandwidth is secured in advance, and the wireless child stations are not able to freely transmit wireless frames. In the asynchronous transmission period, the wireless base station 100 or any of the wireless child stations transmit, regardless of control of the wireless base station 100, asynchronous data such as internet data which does not require isynchronicity.

### Operations in the stream transmission period

The length of the stream transmission period is determined according to the amount of stream data required to be transmitted in a predetermined time period. However, the length of the stream transmission period is limited by the wireless base station 100 to a predetermined time period or below such that the wireless transmission path is not monopolized by the stream transmission period. The wireless base station 100 determines the length of the stream transmission period in accordance with the amount of stream data to be transmitted from the server 130 or the like, and broadcast-transmits a beacon 210 at the beginning of the time cycle to notify all the wireless child stations that the stream transmission period has begun. Also, the beacon 210 includes the end time of the cycle, that is, the transmission time of a next beacon 220. Moreover, the wireless base station 100 broadcast-transmits an end notification 210 at the end of the stream transmission period to notify all the wireless child stations that following is the asynchronous transmission period. Similarly, in the next time cycle, the beacon 220 is broadcast-transmit at the beginning of the stream transmission period, and the end notification 221 is broadcast-transmit at the end of the stream transmission period. Repeatedly performing this processing enables all the wireless child stations to know the beginning and end of the stream transmission period and the asynchronous transmission period.

Note that although the wireless base station 100 notifies the end of the stream transmission period by broadcast-transmitting the end notifications 211 and 221 in Fig.31, information pertaining to an end time for the stream transmission period may be embedded in the beacons 210 and 220 and notified to all the wireless child stations, which may, based on the stream transmission period end time information embedded in the beacons 210 and 220, perform operations pertaining to the asynchronous transmission period after such time.

In the stream transmission period, the wireless base station 100 converts the stream data that was transmitted in divisions from the server 120 into pieces of wireless stream data 310 to 31N, and multicast-distributes the wireless stream data pieces 310 to 31N in the wireless interval. The wireless base station 100 attaches stream data numbers and error detection code when performing the conversion to wireless stream data. On receipt of the stream data pieces 310 to 31N, the wireless child stations 101 to 104 perform error detection to check for transmission errors in the received stream data pieces 310 to 31N. In Fig.31, the wireless child station 102 is performing error detection for transmission errors in the stream data piece 312, and the wireless child station 103 is performing error detection for transmission errors in the stream data piece 313. Here, the wireless child station 102 creates a retransmission request frame with embedded information indicating that the stream data piece 312 was not received properly, and prepares to transmit the retransmission request frame to the wireless base station 100 to request retransmission of the stream data piece 312. Similarly, the wireless child station 103 creates a retransmission request frame with embedded information indicating that the stream data piece 313 was not received properly, and prepares to transmit the retransmission request frame to the wireless base station 100 in order to request retransmission of the stream data piece 313.

In the aforementioned error detection, the wireless child station 102 cannot judge that the stream data 312 was received properly if an error is detected in the stream data piece 312. Here, the wireless child station 102 is able to know that the stream data piece 312 is missing since the stream data pieces 311 and 313 that were transmitted in order from the wireless base station 100 have been properly received. The wireless child station 102 uses the information that the stream data 312 is missing and the fact that an error in the received stream data has been detected with respect to the order in which the original stream data 312 is to be received, to judge that a reception error has been detected in the stream data 312.

### Operations in the asynchronous transmission period

Above was a description of operations of the wireless base station 100 and the wireless child stations 101 to 104 in the stream transmission period, and next is a description of operations in the asynchronous transmission period following the stream transmission period end notification 211 transmitted by the wireless base station 100.

In the asynchronous transmission period, the wireless base station 100 and all of the wireless child stations belonging to the wireless network 10 transmit asynchronous data according to their own transmission timing, without being under control of the wireless base station 100. Here, if the wireless base station 100 or the wireless child station randomly transmitted asynchronous data, transmission errors would occur since there would be competing start timings for asynchronous data transmission and collisions in the wireless interval.

Here, the wireless base station 100 and all of the wireless child stations belonging to the network 10 have a counter that individually and respectively determines a transmission start timing. This counter is set with an initial value that has been randomly selected from a predetermined range of natural numbers when there is a need to transmit asynchronous data, the counter is counted down once per predetermined time T1, and transmission of the asynchronous data begins when the counter reaches 0.

The range of values that can be set as the initial value of the counter is determined statistically to include optimum values, according to the number of wireless terminals belonging to the network 10 and the amount of asynchronous data to be transmitted in the wireless interval. The predetermined time T1 is set to be greater than or equal to a time period in which it is possible to check whether other terminals are transmitting wireless frames during T1.
Also, the wireless child stations have one or more asynchronous data transmission buffers, and the above counter is provided for each of the asynchronous data transmission buffers. It is necessary for wireless child stations that perform stream data retransmission requests to have at least two of the asynchronous data transmission buffers. Out of the asynchronous data transmission buffers, the maximum value of the range of possible initial counter values for the asynchronous data transmission buffer for transmitting retransmission requests is smaller than the maximum value of the range of possible initial counter values for the other asynchronous data transmission buffers. For example, assuming that that initial counter value of the asynchronous data transmission buffers that do not perform retransmission requests is randomly selected from "1" to "32", the initial counter value of the asynchronous data transmission buffer that performs retransmission requests is randomly selected from "1" to "8".

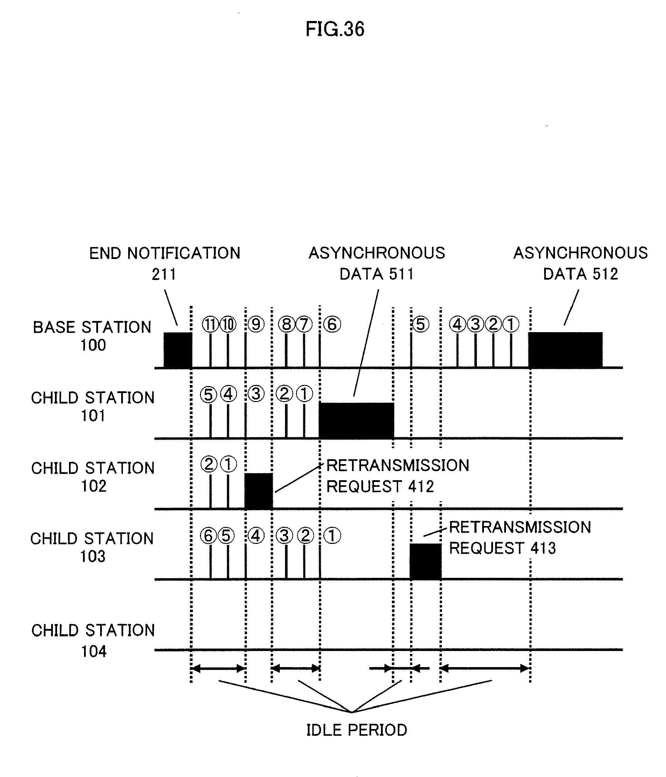

Fig.36 shows exemplary asynchronous data transmission timing in the asynchronous transmission period. In Fig.36, circled numbers indicate the counter values of the asynchronous data transmission buffers in the wireless terminals. Also, the counter values are counted down per the predetermined time T1. Note that in order to facilitate understanding of the countdowns, the horizontal axis represents an outline of time, and the lengths of the time T1 counted down, the retransmission requests, and the time lengths required for the transmission of other asynchronous data differ from actual time lengths in Fig.36. In general, the time required to transmit asynchronous data is much longer than the predetermined time T1.

In Fig.31, the asynchronous transmission period begins when the wireless base station 100 broadcast-transmits the stream transmission period end notification 210 as mentioned above. In the asynchronous transmission period, it is necessary for the wireless child station 102 to transmit a retransmission request 412 for the stream data 312, and for the wireless child station 103 to transmit a retransmission request 413 for the stream data 313. In addition to the retransmission requests, it is necessary for the wireless base station 100 to transmit an asynchronous data piece 512, and for the wireless child station 101 to transmit an asynchronous data piece 511. Here, the initial counter value of the wireless base station 100 and the wireless child station 101 is randomly selected from "1" to "32", and the initial counter value of the wireless child stations is randomly selected from "1" to "8". In Fig.36, "12", "6", "3" and "7" have been selected as the initial counter values of the wireless base station 100, the wireless child station 101, the wireless child station 102 and the wireless child station 103 respectively.

After the asynchronous transmission period has begun, the wireless base station 100 and the wireless child stations 101 to 103 check that they are in an idle period in which other wireless terminals in the wireless interval are not transmitting wireless frames, and countdown their counters one each per time T1. Judgment of the idle period is performed by measuring a reception power input from the antenna, and it is judged to be an idle period if the reception power is less than or equal to a predetermined value. The wireless base station 100 and the wireless child stations 101 to 103 count down their counters, and the wireless child station 102 first obtains an asynchronous data transmission when its counter reaches zero. The wireless child station 102 immediately transmits the retransmission request 102 in the wireless interval when its counter reaches zero. At this time, the counter values of the wireless base station 100, and the wireless child stations 101 and 103 are "9", "3" and "4" respectively.

The wireless base station 100 and the wireless child stations 101 and 103 do not count down their counters while the wireless child station 102 is transmitting the retransmission request 102. The idle period begins when the wireless child station 102 has finished transmitting the retransmission request 102, and the wireless base station 100 and the wireless child stations 101 and 103 again count down their counters. Next, the wireless child station 101 receives the asynchronous data transmission right when its counter reaches zero, and transmits the asynchronous data piece 511. By repeating the above operations, the wireless child station 103 transmits the retransmission request413, and the wireless base station 100 transmits the asynchronous data piece 512 in order.
The asynchronous data piece 512 transmitted by the wireless base station includes an Ack response for the retransmission request sent from the wireless child station.

In the example shown in Fig.36, the wireless child station 103 has transmitted the retransmission request 413 after the wireless child station 101 transmitted the asynchronous data piece 511. However, this is nothing more than one example, and as long as the possible initial counter values when transmitting the retransmission requests are "1" to "8", and the possible initial counter values when transmitting other asynchronous data are "1" to "32", the retransmission requests have a higher probability of obtaining the transmission right over the other asynchronous data, and be transmitted first. Also, it is possible to further prioritize the transmission of the retransmission requests over the asynchronous data if the range of initial counter values when transmitting retransmission requests is set to "1" to "4". However, the condition of the wireless transmission path degrades as the range of possible initial counter values is reduced, and when transmission errors occur frequently, the number of terminals transmitting retransmission requests increases, and there is a greater possibility of more than one terminal having the same initial counter value, whereby there will be a collision between packets when the more than one terminal transmits the retransmission requests. The range of initial counter values when transmitting retransmission requests is therefore set flexibly according to the condition of the wireless transmission path.

As mentioned above, transmitting stream data retransmission requests along with asynchronous data enables the efficient use of wireless bandwidth to notify the transmission requests to the wireless base station 100.

### Operations following the next cycle

Once the stream transmission period and asynchronous transmission periods have cycled once to complete one cycle, the wireless base station 100 again broadcast-transmits the beacon 220, whereby the stream transmission period begins. In the immediately previous asynchronous transmission period, the wireless base station 100 received the retransmission request 412 for the stream data piece 312 from the wireless child station 102, and the retransmission request 413 for the stream data piece 313 from the wireless child station 103. Here, the wireless base station 100 multicast-retransmits the stream data pieces 312 and 313 at the beginning of the stream transmission period. Given that the wireless child stations other than the wireless child station 102 have already properly received the stream data piece 312, the retransmitted stream data piece 312 is discarded even if it is received without error. In the same way, the wireless child stations other than the wireless child station 103 discard the retransmitted stream data piece 313 even if it is received without error, since they have already properly received the stream data piece 313. This completes the retransmission of stream data for which a transmission error occurred.

Note that since only a single wireless child station failed to properly receive the stream data piece 312 or the stream data piece 313, the stream data pieces 312 and 313 may be unicast-retransmitted individually to the wireless child stations that failed to receive the stream data pieces.
Similarly, thereafter if the wireless child station 101 fails to properly receive the stream data piece 321 that was multicast-distributed in the stream transmission period, the wireless child station 101 requests retransmission of the stream data piece 321 by transmitting a retransmission request 421 to the wireless base station 100 in the asynchronous transmission period.

Repeatedly performing the above operations enables the multicast-retransmission of stream data.
Note that it is necessary for the wireless base station 100 to retain stream data since it cannot know information pertaining to whether the wireless child stations 101 to 104 properly received the stream data. Here, the stream data may be discarded if no retransmission requests for stream data are received from the wireless child stations 101 to 104 in a predetermined time period. For example, it may be determined that the stream data piece 311 is discarded after 300 ms has elapsed since transmission. In this case, it is necessary to provide the wireless base station 100 with a transmission buffer that can retain 300 ms-worth of stream data. As another method, it may be assumed that all of the wireless child stations 101 to 104 have properly received the stream data transmitted before a predetermined cycle if the wireless base station 100 does not receive any retransmission requests from the wireless child stations 101 to 104 during the predetermined cycle, whereby the stream data may be discarded from the transmission buffer.

The above operations enable the wireless base station 100 to avoid endlessly retaining the stream data.

### Embodiment 6

Whereas a non-secured bandwidth period is provided after a secured bandwidth period, and retransmission requests and retransmission packets in response thereto are transmitted in the non-secured period in embodiment 1, the aim of the present invention can be achieved without providing separate secured bandwidth periods and non-secured bandwidth periods, as long as multicast-distribution of stream data is possible, retransmission requests can be made if reception fails in the multicast-distribution, and packets whose reception failed can be retransmitted without delay. The present embodiment shows an example of not providing bandwidth and non-bandwidth periods.

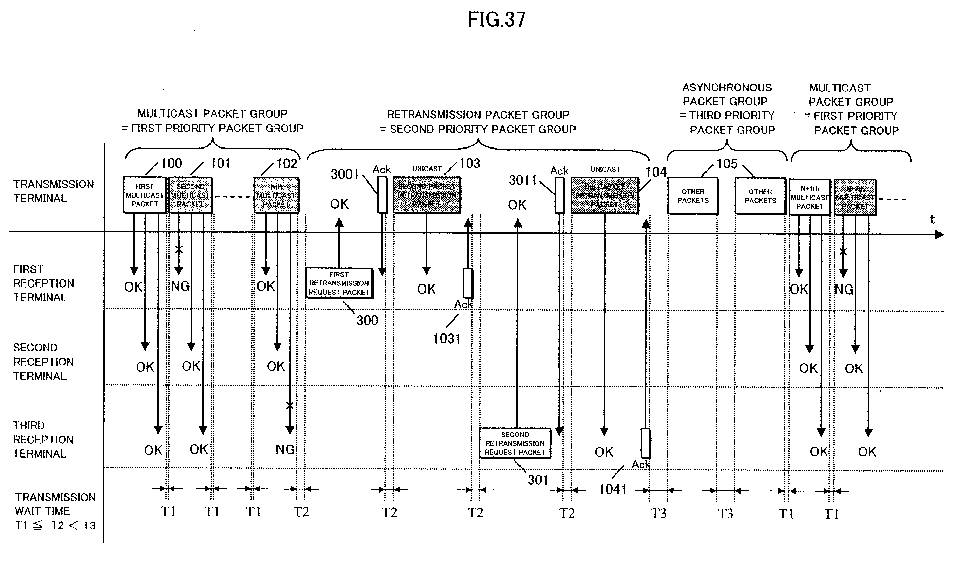

Fig.37 is a time chart showing an exemplary packet sequence of a wireless transmission apparatus in embodiment 6.

### Packet sequence

Constituent elements in Fig.37 are the same as the constituent elements in embodiment 1 and the like, and descriptions thereof have therefore been omitted. Descriptions of the structures of the transmission terminal and the reception terminals have also been omitted since they are the same as described in embodiment 1.

### Priorities

There are no distinctions between secured bandwidth periods and non-secured bandwidth periods in the time chart of Fig.37. Rather than separating these periods and transmitting priority packets in the secured bandwidth period, a packet transmission itself is assigned a priority.

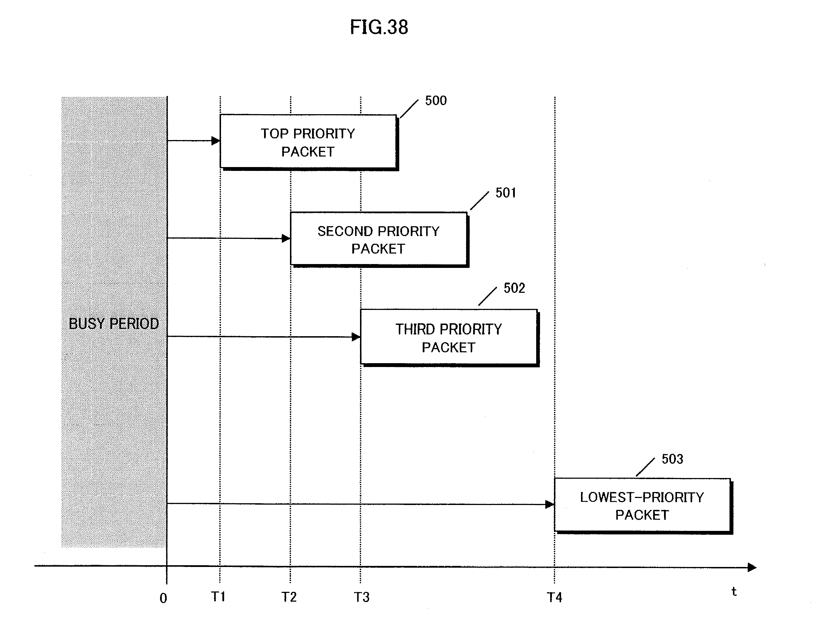

Fig.38 shows an example of assigning priorities. In Fig. 38, 500 is a top priority packet, 501 is a second priority packet, 502 is a third priority packet, and 504 is a lowest-priority packet.
In Fig.38, the horizontal axis is a time axis, and a wait time from when the busy period (i.e., the period in which a previous wireless packet is being transmitted) ends until another packet may be transmitted differs according to the priority of the packet. Transmission of the top priority packet 500 is possible after a wait time T1, transmission of the second priority packet 501 is possible after the next shortest wait time T2, transmission of the third priority packet 502 is possible after the then next shortest wait time T3, and transmission of the lowest-priority packet 503 is possible after the longest wait time T4. Controlling transmission wait times in this way enables the assignment of priorities to transmissions.

In other words, taking an example from Fig.37, when the transmission terminal finishes transmitting a first multicast packet 100, the priority packets at all levels begin to count their respective wait times since the busy period has ended. If there is a first priority packet when the time T1 is reached, the first priority packet is transmitted at this time. As a result, the transmission terminal enters the busy state. The wait times are again counted when the transmission ends. If there is another first priority packet after the time T1 has elapsed, this packet is transmitted, and the transmission terminal enters the busy state. Hereafter, the wait times are counted each time the transmission of a packet ends, a first priority packet, if such exists, is transmitted when the time T1 is reached, and transmission is not performed if no first priority packet exists, whereby the time continues to be counted. If there is a second priority packet when the time T2 is reached, the second priority packet is transmitted at this time. If no second priority packet exists, the wait times continue to be counted, and if a third priority packet exits when the time T3 is reached, the third priority packet is transmitted at this time.

In this way, a so-called secured bandwidth period is not provided in the present embodiment, but rather, different wait times are provided according to priority, whereby high priority packets are transmitted with priority, and packets next in the order of priority are transmitted after all of the higher priority packets have been transmitted, thereby realizing a transmission sequence just the same as if there were secured bandwidth periods and non-secured bandwidth periods.

In a comparison of Fig.3 and Fig.37, the secured bandwidth period of Fig.3 is substituted with a first priority packet group of Fig.37, and the first to Nth multicast packet group is transmitted from the transmission terminal to the reception terminals in this period. When the first priority packet group has ended, the retransmission request packets and the retransmission packets are transmitted in a second priority packet group. An unprioritized packet group is assigned the next priority. These operations are repeatedly cyclically.

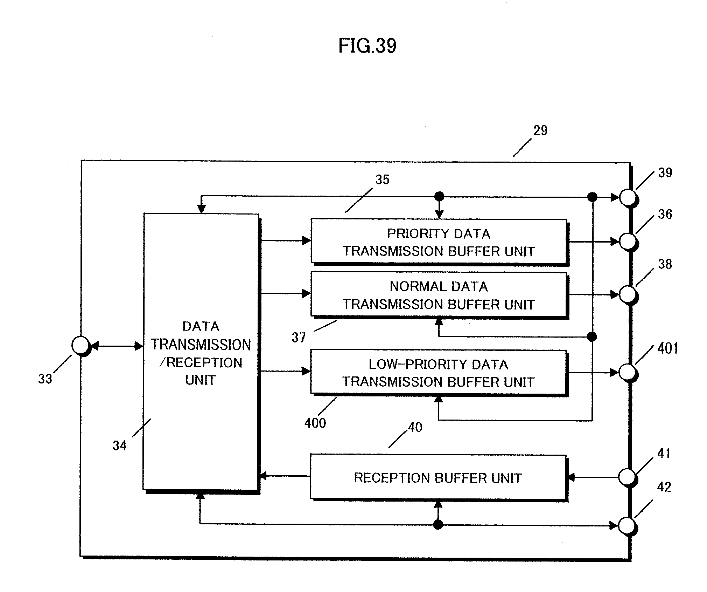

Note that although the first to Nth multicast packets are set as first priority packets, and the retransmission request packets and the retransmission packets are set as second priority packets in the present embodiment, the first to Nth multicast packets may be set as first priority packets, the retransmission request packets may be set as second priority packets, and the retransmission packets may be set as third priority packets. Given that there are three priorities in this case, it is not possible to store the third priority packets if the buffer unit in the transmission terminal includes only the two transmission buffers shown in Fig. 9. The buffer unit is therefore constituted as shown in Fig.39, where a low-priority data buffer unit 400 and a low-priority data output terminal 401 have been added. The priorities may be as follows: first priority ≥ second priority ≥ third priority. Also, the priority of the retransmission request packets and the retransmission packets may be reversed.

This structure enables an improvement in reception probability by transmitting multicast data with the highest priority and performing retransmission with the next highest priority since retransmission control uses the second priority packet to perform retransmission with a lower priority than multicast packets.

### Variations and applications of the present embodiment

Note that although retransmission processing for the unicast packets is not mentioned in the present embodiment, this retransmission processing may of course be performed.

Moreover, although different lengths of wait times are provided according to priority in the present embodiment, it is possible to employ a structure as in embodiment 2, in which random numbers no more than upper limits that differ according to priority are assigned to packet groups, a pulse such as a clock pulse is counted down from the value, and transmission is enabled when the count reaches zero.
Specifically, the packets in the first priority packet are assigned a random number no more than, for example, an upper limit of 3, the packets in the second packet cluster are assigned a random number no more than an upper limit of 7, and the packets in the third packet group are assigned a random number no more than 31. More precisely, rather than being assigned to the packets, the random numbers are assigned to the buffers storing the packets, but for convenience of description, the random numbers are described as being assigned to the packets. The pulses are counted down only when the network is not in the busy state, and transmission begins from the packets whose counter reaches zero first.

Here, in the first priority packet group, counting down of the random number assigned to the second multicast packet 101 in the first priority packet group is performed when the transmission of the first multicast packet 100 has finished. Counting down of the random number assigned to the third multicast packet is performed when the transmission of the second multicast packet ends. In other words, counting down of the random number pertaining to the N+1th multicast packet is begun when the transmission of the Nth multicast packet has ended.

In the second packet group, counting down of, for example, a random number pertaining to a retransmission request packet is performed when a retransmission request has been generated. If the retransmission request is for the first multicast packet, the countdown begins when it has been detected that reception of the first multicast packet failed. In the case of the retransmission packet, the countdown begins when the retransmission request is received. Similarly, in the third priority packet group, the countdown begins when transmission of the packet is requested.

### Embodiment 7

In the majority of the above-mentioned embodiments, the secured bandwidth period and non-secured bandwidth period are cyclically repeated, and retransmission of a packet whose transmission failed is performed in the non-secured bandwidth period or the secured bandwidth period of the next cycle. Such a structure is based on the assumption that the cyclically repeated cycles are set to a time length necessary for transmission and reception of a retransmission request packet and a retransmission packet. However, the number of packets whose transmission fails varies depending on the situation, and is not constant for the cycles. While there is no problem in cycles in which there are few failed packets, it is unclear which method should be used to deal with cycles in which there are many failed packets, where the methods include lengthening the cycle until all of the packets can be retransmitted, or retransmitting the packets in the next cycle without lengthening the current cycle, or assuming that retransmission is not possible and newly transmitting the packets in the next cycle, etc. The present embodiment provides one solution to such a situation.
Following is a description of the present embodiment.

### Structure of a multicast transmission system

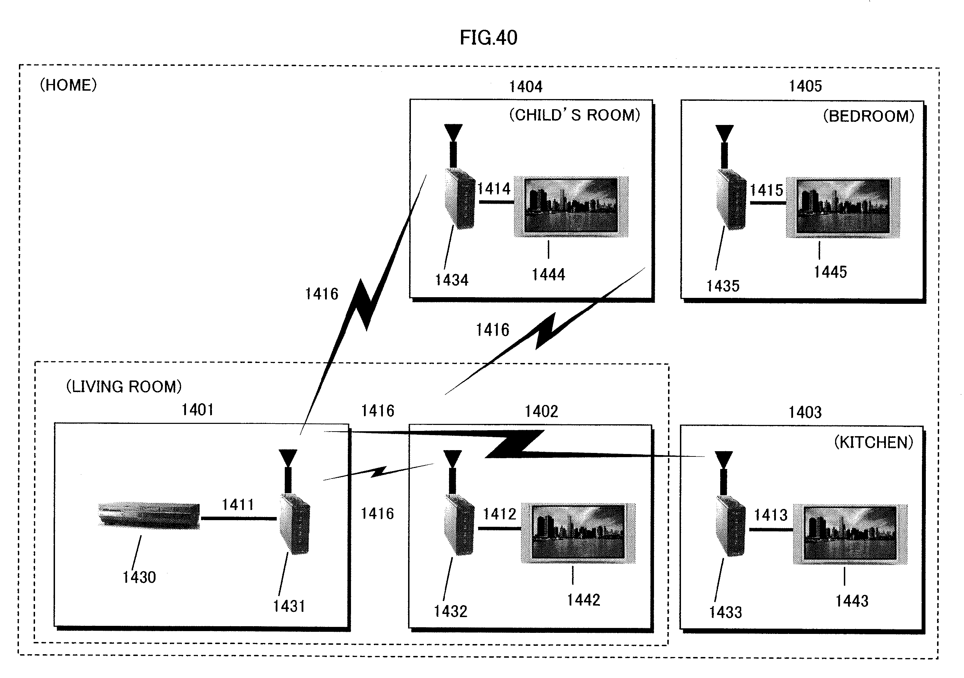

Fig.40 shows a structure of a multicast transmission system pertaining to embodiment 7 of the present invention.

In Fig.40, 1401 is a parent station, and 1402 to 1405 are child stations. This parent station 101 and the child stations 1402 to 1405 are all provided in a home. The parent station 1401 and the child station 1402 are provided in a living room, while the child stations 1403 to 1405 are disposed in a kitchen, a child's room, and a bedroom respectively. Also, 1411 to 1415 are a high-definition A/V (audio/video) stream, and 1416 is an IEEE802.11a compliant wireless signal that includes multicast-distributed signals of the high-definition A/V stream 1411. Also, 1430 is an A/V server that outputs the high-definition A/V stream 1411, and is included in the parent station communication apparatus 1401. Also, 1431 is a parent station communication apparatus that inputs the high-definition A/V stream 1411 and outputs the IEEE802.11a compliant wireless signal 1416, and is included in the parent station 1401. Also, 1432 to 1435 are child station communication apparatuses that receive the IEEE802.11a compliant wireless signal 1416, and output the high-definition A/V streams 1412 to 1415, and are included in the child stations 1402 to 1405 respectively.
Also, 1442 to 1445 are TVs that receive the high-definition A/V streams 1412 to 1415 respectively, and play back high-definition audio and video.

### Structure of the parent station communication apparatus

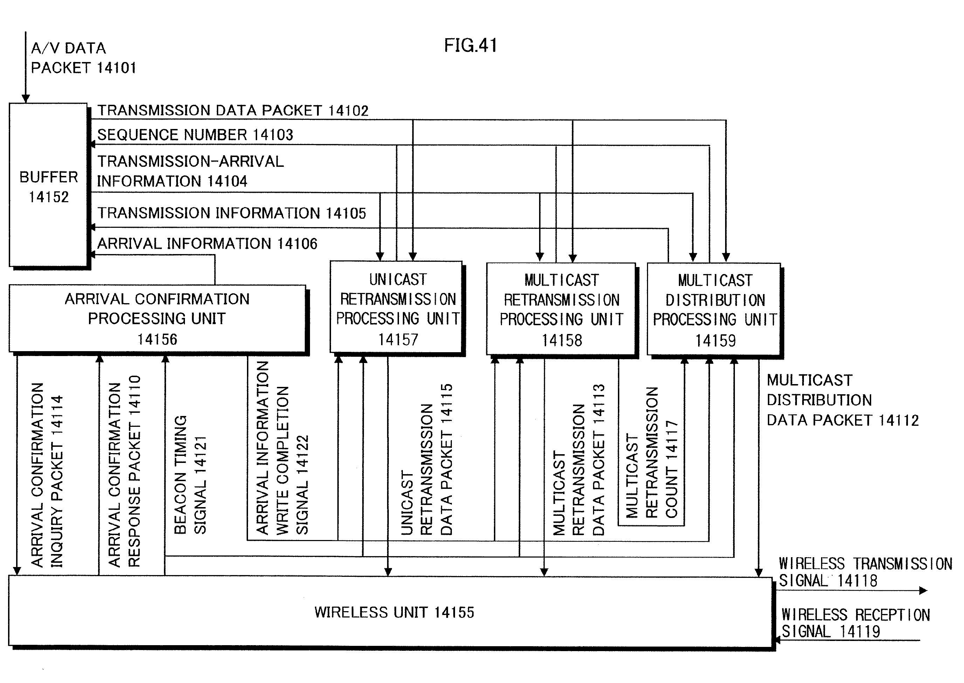

Fig.41 shows an internal structure of the parent station communication apparatus 1431, which is constituted from a buffer 14152, a wireless unit 14155, an arrival confirmation processing unit 14156, a unicast retransmission processing unit 14157, a multicast retransmission processing unit 14158, and a multicast distribution processing unit 14159.
Here, the buffer 1412 is an element that temporarily stores A/V packets. However, a sequence number is associated with the stored packets to enable the detection of packets whose transmission has failed. The unicast retransmission processing unit 14157 and the multicast retransmission processing unit 14158 are function units that perform processing for creating and retransmitting packets whose transmission failed. There is a reason for providing both the unicast retransmission processing unit and the multicast retransmission processing unit for performing retransmission processing, and this reason is mentioned later. Note that the descriptions of the terms unicast and multicast have been omitted since they were described in the previous embodiments.
The multicast distribution processing unit 14159 is a function unit that performs processing for multicast-distributing new video packets stored in the buffer. The arrival confirmation processing unit 14156 is a unit for performing arrival confirmation for multicast-distributed packets with respect to the child stations, and receiving response packets to detect whether transmission of any of the packets failed. The wireless unit 14155 is a function unit that receives packets from the aforementioned processing units, transmits the received packets to the child stations, or receives packets from the child stations and transmits the received packets to the appropriate processing unit. More detailed descriptions of these units follow, but first is a description of the signals and packets in Fig.41.

An A/V data packet 14101 is a packet received from the A/V server 1430, and a payload thereof stores a predetermined-sized portion of the high-definition A/V stream 1411.
A wireless transmission signal 14118 and a wireless reception signal 14119 are signals transmitted to and received from the wireless unit 14155, and constitute the IEEE802.11a compliant wireless signal 1416.

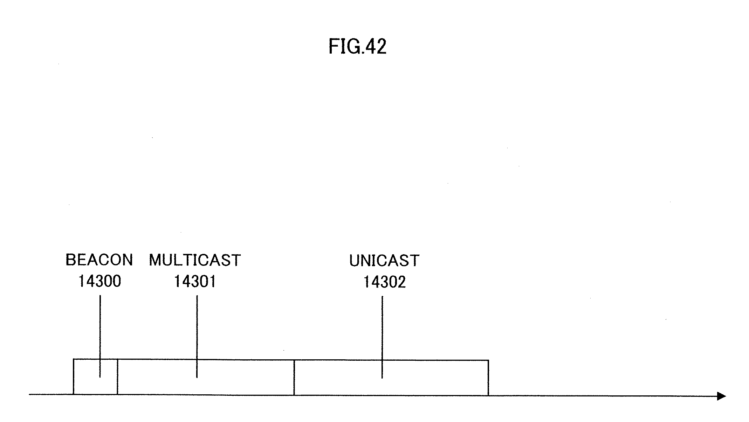

Fig.42 shows a frame constitution of the IEEE802.11a compliant wireless signal 1416. In Fig.42, 14300 is a beacon, 14301 is a multicast signal, and 14302 is a unicast signal. The beacon 14301 is included in the wireless transmission signal 14118 in the IEEE802.11a compliant wireless signal 1416, and is a control block placed at the head of the frame. The multicast signal 14301 is included in the wireless transmission signal 14118 in the IEEE802.11a compliant wireless signal 1416, and is constituted from data pertaining to a multicast distribution data packet 14112 and data pertaining to a multicast retransmission data packet 14113.
The unicast signal 14302 is constituted from a portion relating to an arrival confirmation inquiry packet 14114, an arrival confirmation response packet 14110, and a unicast retransmission data packet 14115. Out of these packets, the arrival confirmation inquiry packet 14114 and the unicast retransmission data packet 14115 are included in the wireless transmission signal 14118 in the IEEE802.11a wireless signal 1416, and the arrival confirmation response packet 14110 is included in the wireless reception signal 14119 in the IEEE802.11a compliant wireless signal 1416. In unicast transmission based on IEEE802.11a, retransmission is performed if the reception side returns an ACK when reception is successful without any errors, but the ACK is not received on the transmission side, which is why the wireless transmission signal 14118 and the wireless reception signal 14119 are both used together with respect to the unicast signal 14302.

Here, a frame cycle of the IEEE802.11a compliant wireless signal 1416 (the time from a certain beacon 14300 to the next beacon 14300) is set to one second. Also, the time required for transmission of the beacon 14300 can be ignored since it is sufficiently small with respect to one second.

### Structure of units of the parent station

Next is a detailed description of the function units of Fig.41.

### Buffer

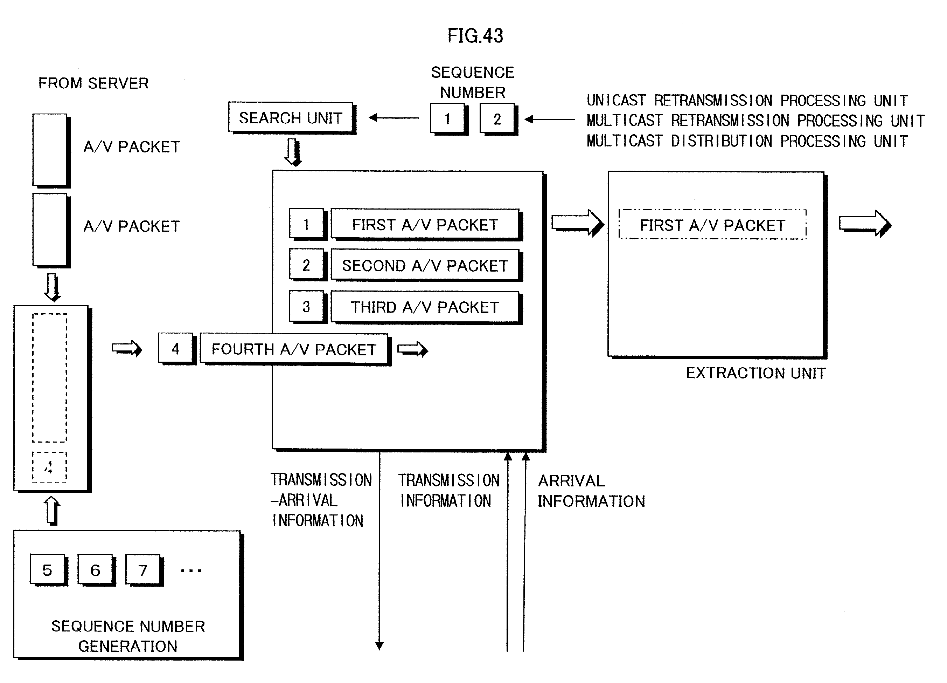

As shown in Fig.43, the buffer 14152 is constituted specifically from a sequence number generation unit 14201, an attachment unit 14202, a storage unit 14203, a search unit 14204, and an extraction unit 14205.
The sequence number generation unit generates sequence numbers in synchronization with A/V data packets sent from the server 1430, the attachment unit 14202 attaches the generated sequence numbers to the received A/V data packets, and the storage unit 14203 sequentially stores the A/V data packets. Upon receiving sequence numbers 103 sent from the unicast retransmission processing unit, the multicast retransmission processing unit or the multicast distribution processing unit, the search unit 14204 searches among the A/V data packets 14101 stored in the storage unit 14203 for data packets that match the received sequence numbers, and if such a match exists, the extraction unit 14205 extracts the matching data packets as transmission data packets 14102, and outputs the transmission data packets 14102 to the origin of the request.

Also, although not depicted, the buffer 14152 stores, at each instance of input, transmission information 14105 indicating whether a stored A/V data packet 14101 has been transmitted or not, and arrival information 14106 indicating whether transmission failed with respect to each of the child station communication apparatuses, and outputs the transmission information 14105 and the arrival information 14106 as transmission-arrival information 14104.

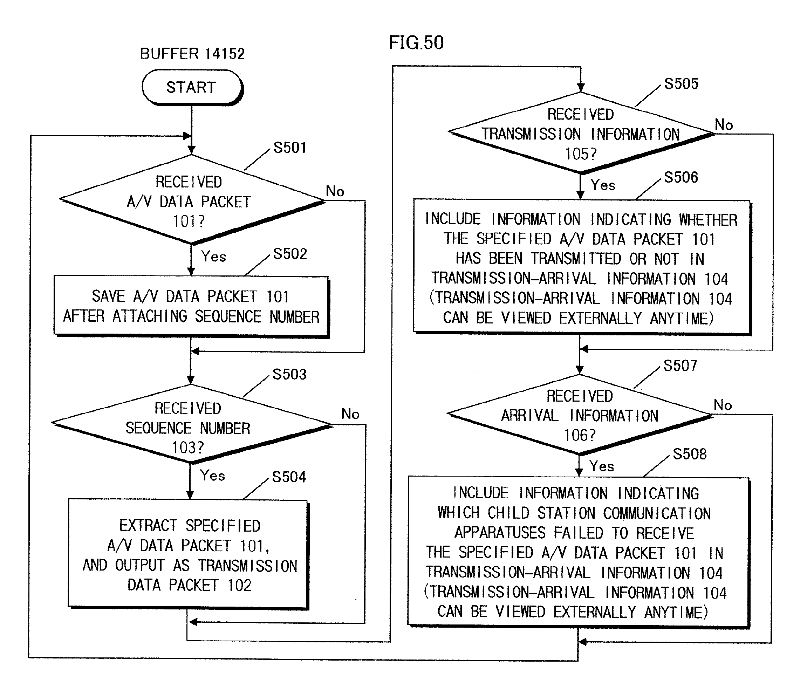

Fig.50 is a flowchart for describing operations performed by the aforementioned buffer 14152. Diamond-shaped blocks are steps performing judgment whether a condition has been satisfied, and rectangular blocks are steps performing processing. Given that the content of the judgments and processing is described in the blocks, a series of processing can be understood by following the steps in order from the beginning. Accordingly, a further description of Fig.50 has been omitted.

### Wireless unit

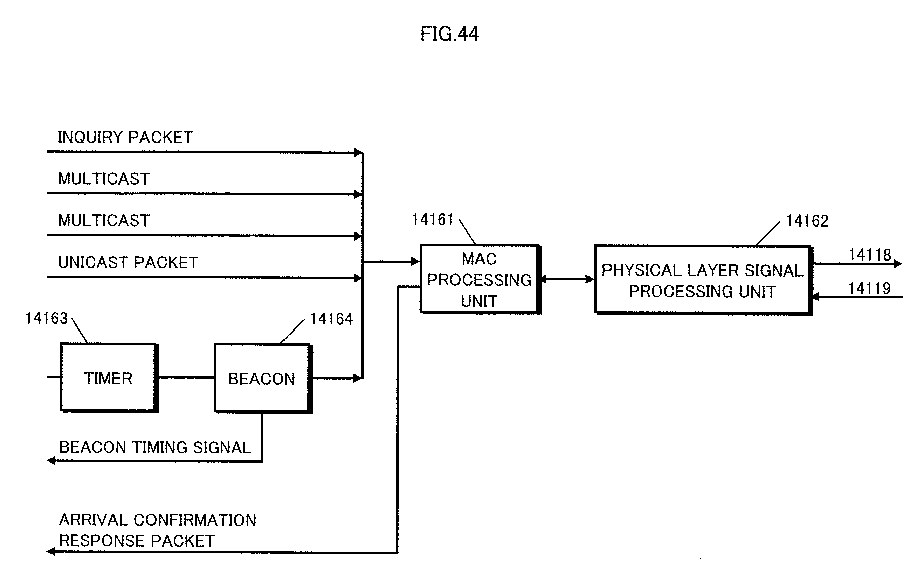

As shown in Fig.44, the wireless unit 14155 is constituted from a MAC processing unit 14161, a physical processing unit 14162, a timer 14163, and a beacon generation unit 14164.

The MAC processing unit 14161 and the physical processing unit 14162 perform processing with respect to the MAC layer and the physical layer of IEEE802.11a as described in the previous embodiments. Specifically, the MAC processing unit 14161 and the physical processing unit 14162 attach a MAC header to the beginning of a packet to be externally transmitted, and detach a MAC header from a received packet and transfer the received packet to the arrival confirmation processing unit 14156.
Packets to be externally transmitted include the arrival confirmation inquiry packet, the multicast distribution data packet, the multicast retransmission data packet, the unicast retransmission data packet, and the beacon. The packets other than the beacon are sent from the arrival confirmation processing unit 14156, the multicast distribution processing unit 14159, the multicast retransmission processing unit 14158, and the unicast retransmission processing unit 14157 respectively. The beacon is generated in the internally-provided beacon generation unit 14164. Generation timing of the beacon generation unit 14164 is controlled by the timer 14164. In the present embodiment, the generation timing is set to one second. Note that the beacon generation unit 14164 activates a beacon timing signal at the same time as generating the beacon.

### Arrival confirmation processing unit

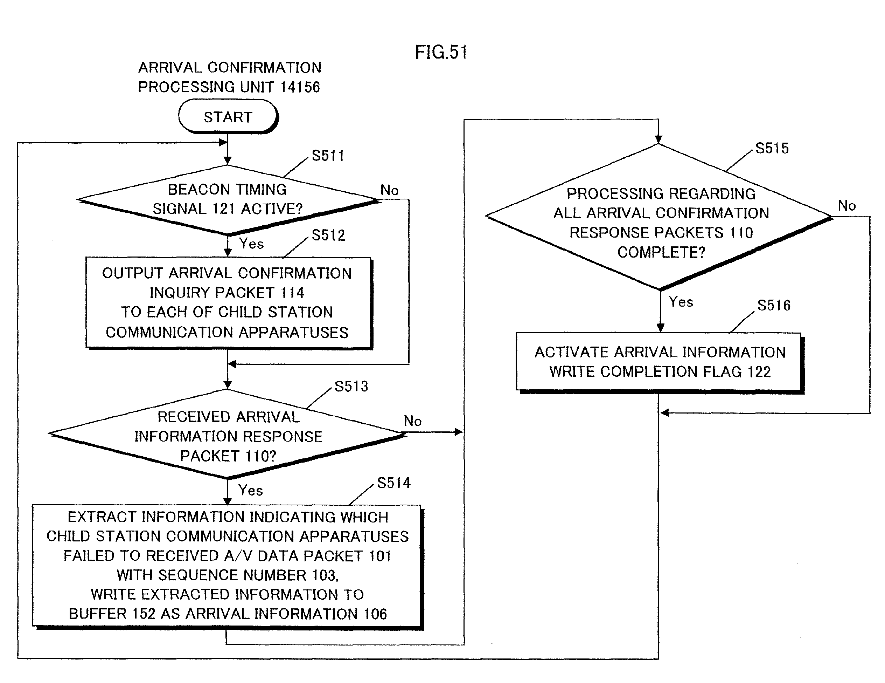

The arrival confirmation processing unit 14156 performs basically the following three processes, which are described according to the flowchart shown in Fig.51. Step numbers in parentheses correspond to the steps in Fig.51.
(1) When the beacon timing signal 14121 is activated (S511), the arrival confirmation inquiry packet 14114 addressed to each of the child station communication apparatus is output to the wireless unit 14155 (S512).
(2) Arrival confirmation response packets 14110 sent from each of the child station communication apparatuses are received from the wireless unit 14155 (S513), information indicating which of the child station communication apparatuses failed to receive the A/V data packet 14101 with the sequence number 14103 is extracted and written to the buffer 14152 as the arrival information 14106 (S514).
(3) When processing pertaining to all of the arrival confirmation response packets 14110 has ended (S515), an arrival information write completion flag 14122 is activated (S516).

### Unicast retransmission processing unit

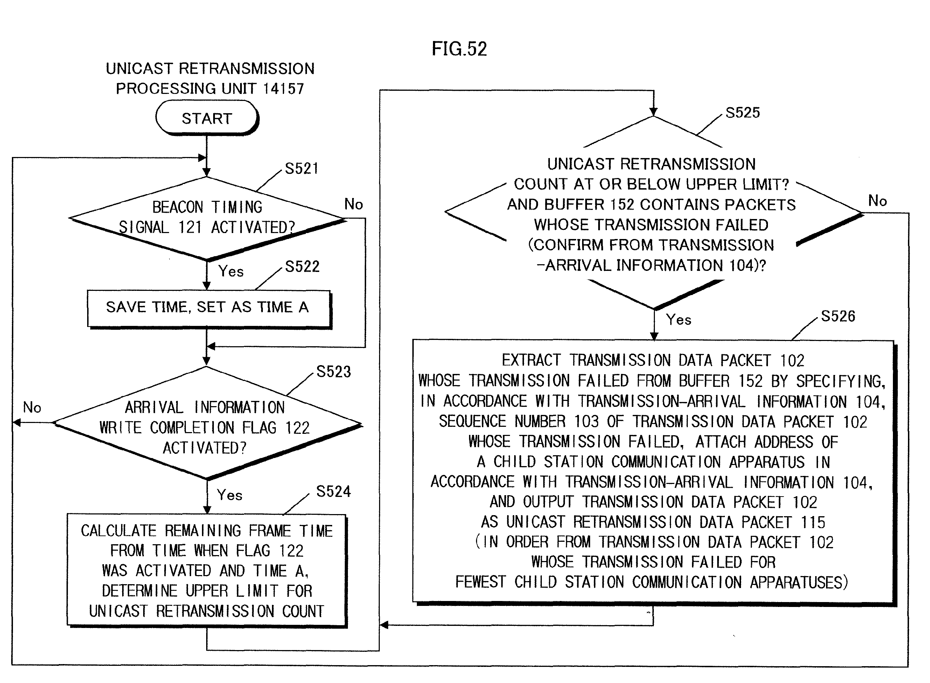

The unicast retransmission processing unit 14157 performs basically the following four processes, which are described according to the flowchart of Fig.52.
(1) When the beacon timing signal 14121 is activated (S521), the time of this event is saved (S522). This time is tentatively set as A.
(2) When the arrival information write completion flag 14122 is activated (S523), a remaining frame time is calculated from the time of the activation and the time A, and an upper limit of a number of unicast transmissions is determined (S524).
(3) The sequence number 14103 of the transmission data packet 14102 whose transmission failed is acquired according to the transmission-arrival information 14104 from the buffer 14152, and this sequence number 14103 is specified to the buffer 14152 (S525).
(4) The transmission data packet 14102 whose transmission failed is extracted from the buffer 14152 in accordance with the specified sequence number 14103, the address of a child station communication apparatus is attached in accordance with the transmission-arrival information 14104, and the transmission data packet 14102 is output to the wireless unit 14155 as the unicast retransmission data packet 14115 (S526). The above processing is performed no more than the upper limit for unicast retransmissions (S526 to S525). In this case, retransmission to the wireless unit 14155 is performed in order from the transmission data packet 102 whose reception failed with respect to few child station communication apparatuses. When the upper limit is exceeded, unicast retransmission is stopped, and processing returns to the start (S521).

The following describes an example of calculating the upper limit for unicast transmissions. The beacon interval is set to one second, and the interval between when the beacon timing signal is activated and when the arrival information write completion flag 14122 is activated, that is, the interval from the beginning of the frame until writing of the arrival information 14122 is complete, is 900 msec. The remaining frame time at this time is 100 msec. Also, the time required to unicast-transmit one packet-worth of the transmission data packets 14102 is 5 msec. The upper limit for unicast retransmissions is therefore 100 msec / 5 (msec/packet) = 20 packets. Accordingly, in this example, the unicast retransmission processing unit 14157 sets the upper limit for unicast retransmissions to 20 packets. However, the upper limit for unicast retransmissions is calculated for each frame since the remaining frame time varies for each frame.

### Multicast retransmission processing unit

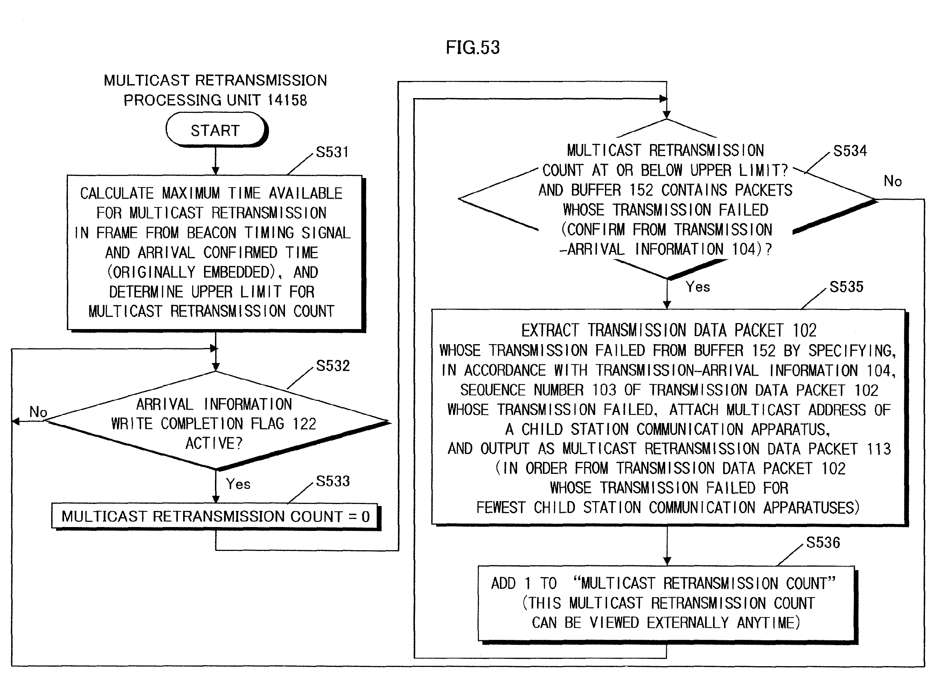

The multicast retransmission processing unit 14158 performs basically the following three processes, which are described in accordance with the flowchart in Fig.53.
(1) A maximum time available for multicast retransmission in a frame is calculated from the beacon timing signal and an arrival confirmation securement time, and a multicast retransmission count upper limit is determined (S531).
(2) When the arrival information write completion flag 122 is activated (S532), a register that counts the multicast retransmission count is reset (S533). This register is increased by 1 each time a multicast retransmission data packet is output (S536). When the multicast retransmission count upper limit is reached (S534), processing ends, and then waits for the arrival information write completion flag to be activated (S532).
(3) While the multicast retransmission count upper limit has not been reached, the transmission data packet 102 whose transmission failed is extracted from the buffer 152 by specifying, in accordance with the transmission-arrival information 14104, the sequence number 14103 of the transmission data packet 14102 whose transmission failed, a multicast address is attached, and the transmission data packet 102 is output to the wireless unit 14155 as the multicast retransmission data packet 113 (S535). In this case, transmission is performed in order from the transmission data packet that failed to be received by the most child station communication apparatuses.
The following describes an example of the multicast packet retransmission count. An arrival confirmation securement time is a fixed value for ensuring a time period necessary for arrival confirmation, and is 10 msec is this case. Assuming that the beacon interval is 1 second, the maximum time available for multicast transmission is 990 msec. Also, the time spent multicast-transmitting one packet-worth of the transmission data packet 14102 is 1 msec. As such, the multicast retransmission count upper limit is 990 msec / 1(msec/packet) = 990 packets. Accordingly, in this example, the multicast retransmission processing unit 158 sets the multicast retransmission count upper limit to 990 packets. Note that this value does not change per frame as long as the frame cycle does not change nor does the arrival confirmation securement time change.

### Multicast distribution processing unit

Next, the multicast distribution processing unit 14159 performs basically the following two processes.
(1) When the arrival time write completion flag 14122 is activated (S541), one second later (S542), the untransmitted transmission data packet 102 is extracted from the buffer 14152 by specifying, in accordance with the transmission-arrival information 14104, the sequence number 14103 of the untransmitted transmission data packet 14102, a multicast address is attached, and the transmission data packet 14102 is output to the wireless unit 14155 as the multicast distribution data packet 112 (S543 to S547).
(2) Specifically, after S542, the multicast distribution processing unit 14159 receives the beacon timing signal 14121, the arrival confirmation securement time and the multicast retransmission count 14117 from respective units, calculates the maximum time available for multicast distribution in a frame, and determines the multicast distribution count upper limit (S543). The following describes an exemplary case of determining this upper limit. The arrival confirmation securement time is a fixed value for ensuring a time period necessary for arrival confirmation, and is also 10 msec as mentioned above. the beacon interval is 1 second, and the time spent for multicast-transmitting one packet-worth of the transmission data packet 14102 is 1 msec. Here, assuming that the multicast retransmission count 117 is 500 packets, the maximum time available for multicast distribution in the frame is (1 sec - 10 msec - 1(msec/packet) × 500 packets) = 490 msec. As such, the multicast distribution count upper limit is 490 msec / 1(msec/packet) = 490 packets. Accordingly, in this example, the multicast distribution processing unit 14159 sets the multicast distribution count upper limit to 490 packets. Note that the multicast distribution count upper limit is calculated for each frame since the multicast retransmission count 14117 changes each frame.
(3) The register counting the multicast distribution count is reset when the multicast distribution count upper limit is determined (S544). Thereafter, the multicast distribution count is incremented by 1 each time a multicast distribution data packet is output (S547), similarly to the operations of the aforementioned multicast retransmission processing unit. This processing is permitted within the range of the multicast distribution count upper limit (S545), and when the upper limit is exceeded, processing ends, and then waits for the arrival information write completion flag to be activated (S541).
In the case of the aforementioned example, distribution processing is permitted with respect to a maximum of 490 packets in a single frame. If in actuality there are fewer than 490 untransmitted transmission data packets 14102 stored in the buffer 14152, distribution processing is performed on only the stored number of packets. For example, distribution processing is performed on 10 packets if there are only 10 untransmitted transmission data packets 14102 (S546). Also, the fact that the corresponding A/V data packet 101 has been transmitted is written to the buffer 14152 as the transmission information 105.

### Structure of a child station communication apparatus

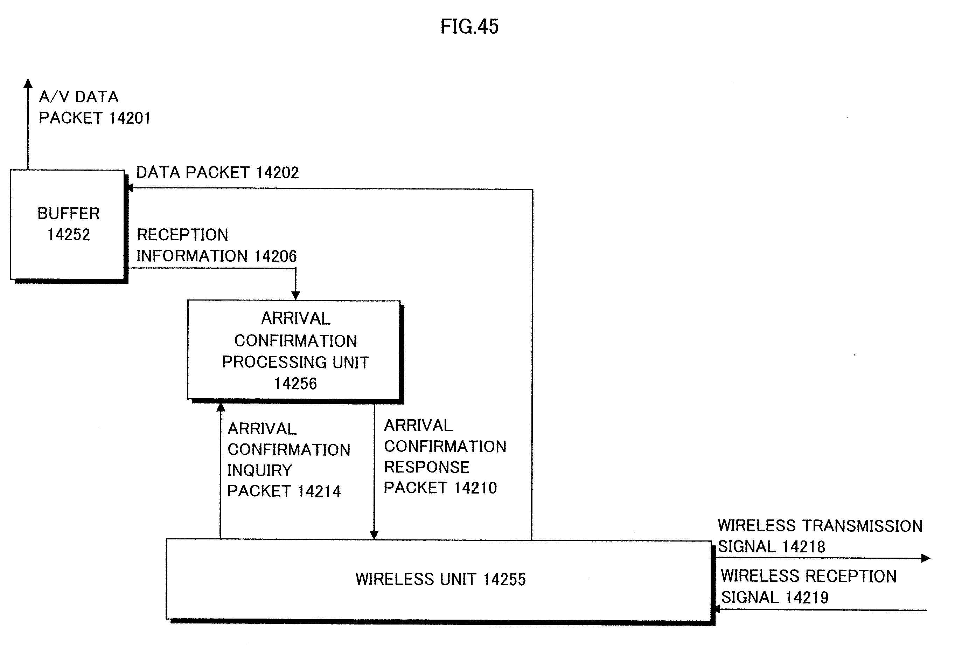

Next, Fig.45 shows an internal structure of the child station communication apparatus 1432 to 1435.

In Fig.45, 14201 is an A/V data packet, 14202 is a data packet, 14206 is reception information, 14210 is an arrival confirmation response packet, 14214 is an arrival confirmation inquiry packet, 14218 is a wireless transmission signal, and 14219 is a wireless reception signal.
The A/V data packets 14201 are actually the high-definition A/V streams 1412 to 1415.

The IEEE802.11a compliant wireless signal 1416 is constituted from the wireless transmission signal 14218 and the wireless reception signal 14219.
In Fig.45, 14252 is a buffer that receives the data packets 14202 and the reception information 14206, and outputs the A/V data packets 14201 and the reception information 14206. The buffer 14252 stores the data packets 14202 in order of their sequence numbers, and, in the order of the sequence numbers, sequentially removes the sequence numbers and outputs the data packets 14202 as the A/V data packets 14201.

The buffer 14252 also stores and outputs the reception information 14206 which indicates, for each of the sequence numbers, whether storage of the data packets 14202 to be stored is complete.
Also, 14255 is a wireless unit that receives the wireless reception signal 14219 and the arrival confirmation response packet 14210, and outputs the arrival confirmation inquiry packet 14214 and the data packets 14202. The wireless unit 14255 outputs the arrival confirmation inquiry packet 14214 as the wireless transmission signal 14218.

Also, the wireless reception signal includes an inquiry regarding arrival confirmation, the wireless unit 14255 extracts this portion of the wireless reception signal, and outputs this portion of the wireless reception signal as the arrival confirmation inquiry packet 14214. Descriptions of the other basic functions of the wireless unit 14255 have been omitted since they are the same as the wireless unit 14155 of the parent station.
Also, 14256 is an arrival confirmation processing unit that receives the reception information 14206 and the arrival confirmation inquiry packet 14214, and outputs the arrival confirmation response packet 14210. Upon receiving the arrival confirmation inquiry packet 14214, the arrival confirmation processing unit 14256 references the reception information 14206, searches for the sequence numbers of the data packets 14204 that have not been stored, and outputs this information as the arrival confirmation response packet 14210. For example, if the content of the arrival confirmation inquiry packet 14214 is "Have sequence numbers 100 to 200 arrived?", and the content of the reception information 14206 is "Sequence numbers 191 and 193 to 199 have been stored", the content of the arrival confirmation response packet 14210 that is sent would indicate that sequence numbers 192 and 200 are missing.

### Operations of the multicast communication system

The following describes operations of the above structure.

In the parent station 1401, the internally-provided A/V server 1430 outputs the high-definition A/V stream 1411, and the parent station communication apparatus 1431 multicast-distributes the IEEE802.11a compliant wireless signal 1416.
The child stations 1402 to 1405 receive the wireless signal 1416 by the internally-provided child station communication apparatuses 1432 to 1435 respectively, and TVs 1442 to 1445 play back high-definition audio and video.

The high-definition audio and video can be played back without problem even if the wireless signal 1416 picks up a large amount of noise.
The following describes operations of the parent station communication apparatus 1431 in the parent station 1401 when the wireless signal 1416 has picked up a large amount of noise.
This description first begins with operations before the noise has been generated.

### Point 1: before the generation of noise

The arrival confirmation processing unit 14156 outputs the arrival confirmation inquiry packet 14114 when the beacon timing signal 14121 is activated.

Also, the wireless unit 14155 outputs the beacon 14300 when the beacon timing signal 14121 is activated. Thereafter, the wireless unit 14155 outputs the multicast distribution data packet 14112, which was received from the multicast distribution processing unit 14159 at a point 0 before point 1, as a multicast 301.
Next, the wireless unit 14155 outputs the arrival confirmation inquiry packet 14114, which was received at this time (point 1) from the arrival confirmation processing unit 14156, as a unicast 14302.

Also, the wireless unit 14155 receives a response from each of the child station communication apparatuses as a unicast retransmission request packet 14302, and outputs the received unicast retransmission request packet 14302 as the arrival confirmation response packet 14110. In this case, transmission does not fail since noise has not been generated, and therefore there are no retransmission requests.
Processing of the unicast retransmission processing unit 14157 begins thereafter. However, transmission does not fail when there is no noise, and the unicast retransmission data packet 14115 is not generated since there is no transmission data packet 14102 to be retransmitted.

At the same time, processing of the multicast retransmission processing unit 14158 begins. However, transmission does not fail when there is no noise, and the multicast retransmission data packet 14113 is not generated since there is no transmission data packet 14102 to be retransmitted.
Processing of the multicast distribution processing unit 14159 begins thereafter. Given that the high-definition A/V data packets, which are the high-definition A/V stream itself, are stored sequentially in the buffer 14152, untransmitted high-definition A/V data packets are output as the multicast distribution data packets 14112.

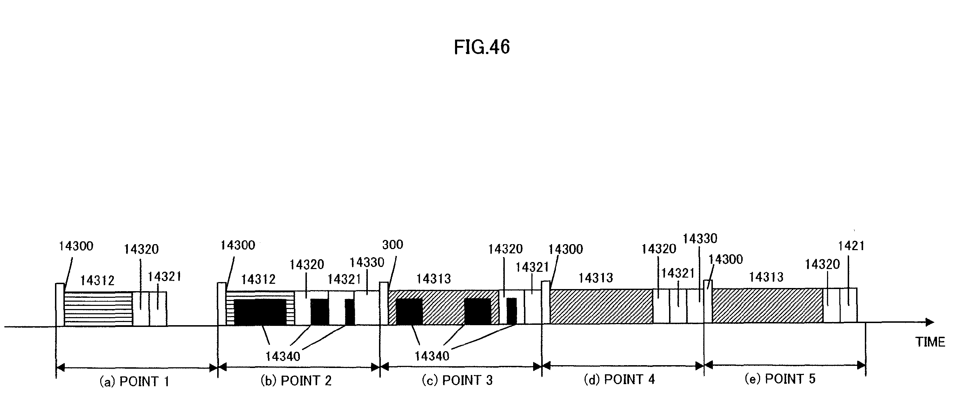

In Fig.46, (a) shows a condition of the wireless signal 1416 at point 1.
In Fig.46A, 14300 is the aforementioned beacon. Also, 14310 is the multicast distribution data packet 14112 component. Also, 14320 is the arrival confirmation inquiry packet 14114 component, which is a unicast packet. Also, 14321 is the arrival confirmation response packet 14110, which is a unicast packet.

Note that with unicast according to the IEEE802.11a standard, both the wireless transmission signal 14118 and the wireless reception signal 14119 are used together with respect to the arrival confirmation inquiry packet component 14320 and the arrival confirmation response packet component 14321 in order for the reception side to return an ACK if reception is successful without an error, and retransmit the ACK if it was not received on the transmission side. Also, although depicted as separate for convenience in the description, the arrival confirmation inquiry packet component 14320 and the arrival confirmation response packet component 14321 may also be mixed together. For example, after having been exchanged with the child station communication apparatus 1432, the arrival confirmation inquiry packet component 14320 and the arrival confirmation response packet component 14321 may be exchanged with the child station communication apparatus 1433. In (a) of Fig.46, the multicast distribution is performed without problem.

### Point 2: noise

Next, noise is generated at point 2.
The arrival confirmation processing unit 14156 outputs the arrival confirmation inquiry packet 14114 when the beacon timing signal 14121 is activated.

Also, the wireless unit 14155 outputs the beacon 14300 when the beacon timing signal 14121 is activated. Thereafter, the wireless unit 14155 multicast-outputs the multicast distribution data packet 14112 that was received from the multicast distribution processing unit 14159 at the previous point (point 1).
Next, the wireless unit 14155 unicast-outputs the arrival confirmation inquiry packet 14114 that was received at this point (point 2) from the arrival confirmation processing unit 14156.

Thereafter, the wireless unit 14155 receives a response from each of the child station communication apparatuses, and outputs the response as the arrival confirmation response packet 14110. Transmission has failed since there is noise, and a retransmission request is generated. Transmission of the arrival confirmation itself may fail, but given that this transmission is unicast, it is not a problem since retransmission using ACK is performed.
Processing of the unicast retransmission processing unit 14157 begins thereafter. Transmission fails since there is noise, and the unicast retransmission data packet 14115 is output since there is a retransmission data packet 14102 to be retransmitted. However, this processing is not performed when there is a large amount of noise, exchanging of the arrival confirmation inquiry packet 14114 and the arrival confirmation response packet 14110 takes a long time, and there is no time remaining in the frame. If time remains in the frame, the wireless unit 14155 receives and unicast-outputs the unicast retransmission data packet 14115.

At the same time, processing of the multicast retransmission processing unit 14158 begins. Transmission fails since there is noise, and the multicast retransmission data packet 14113 is output since there is a retransmission data packet 14102 to be retransmitted. If there is a large amount of noise and there are many multicast retransmission data packets 14113, the number of the multicast retransmission data packets 14113 is limited such that an arrival confirmation securement time can be ensured in the frame.

Processing of the multicast distribution processing unit 14159 begins thereafter. Given that the high-definition A/V data packets, which are the high-definition A/V stream itself, are stored sequentially in the buffer 14152, untransmitted high-definition A/V data packets are output as the multicast distribution data packets 14112. However, if there is a large amount of noise and there are many multicast retransmission data packets 14113, the number of the multicast distribution data packets 14112 is limited such that the arrival confirmation securement time can be ensured in the frame. By simply limiting the number of multicast distribution data packets 14112, the number of multicast retransmission data packets 14113 will be reduced to zero.
In Fig.46, (b) shows a condition of the wireless signal 1416 at point 2. The same constituent elements as in (a) have been given the same numbers.
In Fig.46(b), 14340 is noise. Also, 14330 is the unicast retransmission data packet 14115 component.
It can be understood in Fig.46(b) that due to the provision of the component 14330 at point 2, unicast retransmission is used to recover from failed multicast distribution transmissions. However, given that unicast retransmission involves performing individual retransmission to each of the child station communication apparatus, which is inefficient, recovery cannot be completed immediately if the noise has affected a large number of the child station communication apparatuses. This unicast retransmission is performed starting with a packet which only a few number of child station communication apparatuses failed to receive. At the next point, multicast retransmission is performed in combination, starting with a packet which many child station communication apparatuses failed to receive, thereby having the effect of being more efficient. Specifically, when many transmissions fail for a specified child station communication apparatus, retransmission is reliably performed by unicast retransmission in which further retransmission by ACK is possible, and while further retransmission to the other child station communication apparatuses by ACK is not possible, performing multicast retransmission, which is efficient since retransmission can be performed collectively to a plurality of child station communication apparatuses, enables efficient and reliable recovery from failed transmissions.

### Point 3: noise

Next, noise is generated at point 3 as well.

The arrival confirmation processing unit 14156 outputs the arrival confirmation inquiry packet 14114 when the beacon timing signal 14121 is activated.
Also, the wireless unit 14155 outputs the beacon 14300 when the beacon timing signal 14121 is activated. Thereafter, the wireless unit 14155 multicast-outputs the multicast retransmission data packet 14113 and the multicast distribution data packet 14112 that were received from the multicast retransmission processing unit 14158 and the multicast distribution processing unit 14159 respectively at the previous point (point 2).

Next, the wireless unit 14155 unicast-outputs the arrival confirmation inquiry packet 14114 that was received at this time (point 2) from the arrival confirmation processing unit 14156.
Thereafter, the wireless unit 14155 receives a response from each of the child station communication apparatuses, and outputs the response as the arrival confirmation response packet 14110. Transmission has failed since there is noise, and a retransmission request is generated. Transmission of the arrival confirmation itself may fail, but given that this transmission is unicast, it is not a problem since retransmission using ACK is performed.

Processing of the unicast retransmission processing unit 14157 begins thereafter. Transmission fails since there is noise, and the unicast retransmission data packet 14115 is output since there is a retransmission data packet 14102 to be retransmitted. However, there is no remaining time in the frame for this processing to be performed if there is a large amount of noise and there are many multicast retransmission data packets 14113. If time remains in the frame, the wireless unit 14155 receives and unicast-outputs the unicast retransmission data packet 14115.

At the same time, processing of the multicast retransmission processing unit 14158 begins. Transmission fails since there is noise, and the multicast retransmission data packet 14113 is output since there is a retransmission data packet 14102 to be retransmitted. If there is a large amount of noise and there are many multicast retransmission data packets 14113, the number of the multicast retransmission data packets 14113 is limited such that an arrival confirmation securement time can be ensured in the frame.

Processing of the multicast distribution processing unit 14159 begins thereafter. Given that new high-definition A/V data packets are stored sequentially in the buffer 14152, untransmitted high-definition A/V data packets are output as the multicast distribution data packets 14112. However, if there is a large amount of noise and there are many multicast retransmission data packets 14113, the number of the multicast distribution data packets 14112 is limited such that the arrival confirmation securement time can be ensured in the frame. By simply limiting the number of multicast distribution data packets 14112, the number of multicast retransmission data packets 14113 will be reduced to zero.

In Fig.46, (c) shows a condition of the wireless signal 1416 at point 3. The same constituent elements as in (a) and (b) have been given the same numbers.
In Fig.46(c), 14331 is the multicast retransmission data packet 14113, and is the multicast signal. It can be understood in Fig.46(c) that multicast retransmission is used to recover from failed multicast distribution transmissions. This retransmission is not performed for transmissions that failed at this point (point 3), but rather for transmissions that failed at the previous point (point 2) and before. In this example, retransmission is performed for only the transmissions that failed at point 2 since there were not any failed transmissions at point 1 or before.
The original number of multicast distribution data packets 14112 seen at point 1 is not transmitted at point 3. This is because at the previous point (point 2), the number of multicast distribution data packets 14112 was limited by the processing of the multicast distribution processing unit 14159 such that the arrival confirmation securement time can be ensured in the frame, since there were a large number of the multicast retransmission data packets 14113. As a result, given that the number of multicast distribution data packets 14112 seen at point 1 are not transmitted, it is possible to successfully exchange the arrival confirmation inquiry packet 14114 and the arrival confirmation response packet 14110, and multicast retransmission can be successfully performed at the next point (point 4).

### Point 4: no noise

There is no noise at point 4. The arrival confirmation processing unit 14156 outputs the arrival confirmation inquiry packet 14114 when the beacon timing signal 14121 is activated.

Also, the wireless unit 14155 outputs the beacon 14300 when the beacon timing signal 14121 is activated. Thereafter, the wireless unit 14155 multicast-outputs the multicast retransmission data packet 14113 and the multicast distribution data packet 14112 that were received from the multicast retransmission processing unit 14158 and the multicast distribution processing unit 14159 at the previous point (point 3).

Next, the wireless unit 14155 unicast-outputs the arrival confirmation inquiry packet 14114 that was received at this time (point 4) from the arrival confirmation processing unit 14156.
Thereafter, the wireless unit 14155 receives a response from each of the child station communication apparatuses, and outputs the response as the arrival confirmation response packet 14110. Although there is no noise, retransmission requests are generated since retransmission for past failed transmissions has not been completed.

Processing of the unicast retransmission processing unit 14157 begins thereafter. Although there is no noise, the unicast retransmission data packet 14115 is output since retransmission for past failed transmissions has not been completed and there is a retransmission data packet 14102 to be retransmitted. However, there is no remaining time in the frame for this processing to be performed if there is a large amount of noise and there are many multicast retransmission data packets 14113. If time remains in the frame, the wireless unit 14155 receives and unicast-outputs the unicast retransmission data packet 14115.
At the same time, processing of the multicast retransmission processing unit 14158 begins. Although there is no noise, the multicast retransmission data packet 14113 is output since retransmission for past failed transmissions has not been completed and there is a retransmission data packet 14102 to be retransmitted. If there is a large number of multicast retransmission data packets 14113, the number of the multicast retransmission data packets 14113 is limited such that an arrival confirmation securement time can be ensured in the frame.

Processing of the multicast distribution processing unit 14159 begins thereafter. Given that the high-definition A/V data packets are stored sequentially in the buffer 14152, untransmitted high-definition A/V data packets are output as the multicast distribution data packets 14112. However, if there are many multicast retransmission data packets 14113, the number of the multicast distribution data packets 14112 is limited such that the arrival confirmation securement time can be ensured in the frame.

In Fig.46, (d) shows a condition of the wireless signal 1416 at point 4. The same constituent elements as in (a), (b) and (c) have been given the same numbers.
It can be understood in Fig.46(d) that multicast retransmission is used to recover from failed multicast distribution transmissions and multicast retransmission transmissions. This retransmission is not performed for transmissions that failed at this point (point 4), but rather for transmissions that failed at the previous point (point 3) and before. In this example, retransmission is performed for the transmissions that failed at points 2 and 3 since there were not any failed transmissions at point 1 or before.
The original number of multicast distribution data packets 14112 seen at point 1 is not transmitted at point 4. This is because at the previous point (point 3), the number of multicast distribution data packets 14112 was limited by the processing of the multicast distribution processing unit 14159 such that the arrival confirmation securement time can be secured in the frame, since there were a large number of the multicast retransmission data packets 14113. As a result, given that the number of multicast distribution data packets 14112 seen at point 1 are not transmitted, it is possible to successfully exchange the arrival confirmation inquiry packet 14114 and the arrival confirmation response packet 14110, and multicast retransmission can be successfully performed at the next point (point 5).

### Point 5: no noise

There is no noise at point 5.
The arrival confirmation processing unit 14156 outputs the arrival confirmation inquiry packet 14114 when the beacon timing signal 14121 is activated.

Also, the wireless unit 14155 outputs the beacon 14300 when the beacon timing signal 14121 is activated. Thereafter, the wireless unit 14155 multicast-outputs the multicast retransmission data packet 14113 and the multicast distribution data packet 14112 that were received from the multicast retransmission processing unit 14158 and the multicast distribution processing unit 14159 at the previous point (point 4).

Next, the wireless unit 14155 unicast-outputs the arrival confirmation inquiry packet 14114 that was received at this time (point 5) from the arrival confirmation processing unit 14156.
Thereafter, the wireless unit 14155 receives a response from each of the child station communication apparatuses, and outputs the response as the arrival confirmation response packet 14110. Although there is no noise, retransmission requests are generated since retransmission for past failed transmissions has not been completed.

Processing of the unicast retransmission processing unit 14157 begins thereafter. Although there is no noise, the unicast retransmission data packet 14115 is output since retransmission for past failed transmissions has not been completed and there is a retransmission data packet 14102 to be retransmitted. The wireless unit 14155 receives and unicast-outputs the unicast retransmission data packet 14115.

At the same time, processing of the multicast retransmission processing unit 14158 begins. Although there is no noise, the multicast retransmission data packet 14113 is output since retransmission for past failed transmissions has not been completed and there is a retransmission data packet 14102 to be retransmitted.
Processing of the multicast distribution processing unit 14159 begins thereafter. Given that the high-definition A/V data packets are stored sequentially in the buffer 14152, untransmitted high-definition A/V data packets are output as the multicast distribution data packets 14112.

In Fig.46, (e) shows a condition of the wireless signal 16 at point 4. The same constituent elements as in (a), (b), (c) and (d) have been given the same numbers.
It can be understood in Fig.46(e) that multicast retransmission is used to recover from failed multicast distribution transmissions and multicast retransmission transmissions. Here, recovery is complete.
The original number of multicast distribution data packets 14112 seen at point 1 is not transmitted at point 4. This is because at the previous point (point 3), the number of multicast distribution data packets 14112 was limited by the processing of the multicast distribution processing unit 14159 such that the arrival confirmation securement time can be secured in the frame, since there were a large number of the multicast retransmission data packets 14113. As a result, given that the number of multicast distribution data packets 14112 seen at point 1 are not transmitted, it is possible to successfully exchange the arrival confirmation inquiry packet 14114 and the arrival confirmation response packet 14110, and multicast retransmission can be successfully performed at the next point (point 5).
In (e), the reason why the multicast distribution data packet component 14310 is larger than the original amount seen at point 1 is because there are many untransmitted multicast distribution data packets 1411 in the buffer 14152 since the multicast distribution data packets 1411 that were to be transmitted at the previous point (point 4) and the point before that (point 3) were limited in order to ensure the arrival confirmation securement time.

### Effects of the present embodiment

To summarize the above description, it is apparent that favorable communication is possible by necessarily ensuring an arrival confirmation securement time and performing efficient multicast retransmission, even if there is a large amount of noise.

Additionally, when many transmissions fail for a specified child station communication apparatus, retransmission is reliably performed by unicast retransmission in which further retransmission by ACK is possible, and while further retransmission to the other child station communication apparatuses by ACK is not possible, performing multicast retransmission, which is efficient since retransmission can be performed collectively to a plurality of child station communication apparatuses, enables efficient and reliable recovery from failed transmissions.

### Applications and variation of the present embodiment

Note that although the parent station 1401 and the child stations 1402 to 1405 are all disposed in a home in the present embodiment, the present invention is not limited to this.

For example, the parent station 1401 and the child stations 1402 to 1405 can be applied in a system for performing stream transmission, such as a video transmission system in an aircraft, an information monitor in an exhibition hall, in a corporate lobby, a waiting room at a train station, or on desks in a classroom, a workshop, or a seminar hall.
Also, although the A/V server 1430 outputs a high-definition A/V stream 11 in the present embodiment, the present invention should not be limited to this.

The physical layer maximum transfer rate in IEEE802.11a is 54 Mbps, which means that in the case of normal unicast transmission, the handling of high-definition audio and video in a home is limited to one program, that is, distribution to one place. Applying the technique of the present invention enables the distribution of a single program to more than one place. Although this structure is included in the scope of the present invention, the present invention should not be limited to this structure.

For example, standard audio and video may be handled, and more than one program may be distributed to more than one place. The programs may be distributed to the child station communication apparatuses 1432 to 1435, and an arbitrary single program may be provided to a respective TV.
Also, the present invention is not limited to audio and video as long as stream transmission is performed. For example, the data may be video without audio, music data, or interactive video game data.

Also, although an IEEE802.11a wireless signal is handled in the present embodiment, the present invention is not limited to this.
Currently, IEEE802.11a is widely diffused in the market, and there are many general-purpose IEEE802.11a wireless modules. The present invention has the feature of using the parent station wireless unit 14155 and the child station wireless unit 14255 as general-purpose IEEE802.11a wireless modules, and newly adding an external structure. Handling IEEE802.11a wireless signals has such an effect, and this structure is of course included in the scope of the present invention, but the present invention should not be limited to this structure.

In contrast to wired communication which has innovations to prevent noise, noise is inevitable in wireless communication. The present invention is effective in view of this situation due to its feature of securing an arrival confirmation period and performing retransmission.
The present invention is also effective in wired communication where the environment includes noise. The present invention is further effective in particularly a severely noisy environment such as CATV or power line communication (PLC). The present invention is therefore not limited to wireless communication.

Also, although the beacon is placed at the head of the frame in the present embodiment, the present invention is not limited to this. Placing the beacon at the head of the frame is in accordance with IEEE802.11a specifications, but if other specifications are used, the placement of the beacon may be set to such specifications. Also, although ignored in the calculation of the arrival confirmation securement time due to being sufficiently small, the time pertaining to the beacon may of course be taken into consideration. Consideration may also be given in the case of adding a block to the frame.

Although transmission is performed in the order of the beacon, then multicast, then unicast in the present embodiment, the present invention is not limited to this.
This transmission order is in accordance with specifications relating to IEEE802.11a, and is due to the fact that multicast transmission must be performed directly after the beacon. This is because given that multicast communication is performed with respect to child station communication apparatuses in sleep mode as well, the multicast communication must be performed even if the child station apparatus is in sleep mode, directly after the beacon for returning to operation status.

The order for transmission is the beacon, then multicast, then unicast in the case of using an ordinary IEEE802.11a wireless module, but this order need not be taken into consideration if such a module is not used. For example, transmission may be performed in the order of the beacon 300, then unicast, then multicast.
Also, although transmission is performed in the order of first the multicast retransmission data packet and then the multicast distribution data packet in the multicast packet in the present embodiment, the present invention is not limited to this.

According to this structure, sending older packets first makes it possible to complete transmission before a buffer overflow occurs on the reception side, thereby enabling increased reliability in an environment where there is a long burst error. Although this structure is included in the scope of the present invention, the present invention should not be limited to this. For example, in accordance with the idea that when transmission to a large number of child station communication apparatus has finished, transmissions to a portion of the child station communication apparatuses will have failed, the present invention may have a structure in which a multicast distribution data packet that has not been transmitted to a single child station communication apparatus is prioritized over an older packet whose transmission to a large number of child station communication apparatuses has not been completed. In other words, the present invention may take into account both the multicast retransmission data packets and the multicast distribution data packets, and perform distribution starting with the packet that has not been completely transmitted to the most child station communication apparatuses.

Also, although the frame cycle of the IEEE802.11a compliant wireless signal is one second in the present embodiment, the present invention is not limited to this.
Having a longer frame cycle reduces the overhead of beacon transmission and the like, thereby creating ample room in the wireless transmission bandwidth. For this reason, it is desirable to have a longer frame cycle.
On the other hand, having a longer frame cycle increases the time until the next multicast transmission begins, whereby the transmission delay increases. For this reason, it is desirable to have a shorter frame cycle.

In the case of using IEEE802.11a to handle high-definition video, such as in the present embodiment, simulations have shown it may be said that setting the frame cycle to from several hundred msec to about several seconds is realistic since the effect of overhead is small if the frame cycle is several hundred msec or higher, and there is almost no change in the effect of overhead if the frame cycle is made longer than about several seconds. However, the present invention should not be limited to this.

Also, the frame cycle may be shortened at initialization to shorten the time for exchanges, and then lengthened after initialization has been completed.
Also, in the present embodiment, the buffer attaches sequence numbers to A/V data packets and sequentially stores the A/V data packets. However, if the A/V data packets already include numbers unique to each packet, these unique numbers may be used as the sequence numbers, whereby there is no need to newly attach sequence numbers.

Also, in the present embodiment, the buffer stores each input of arrival information indicating which child station communication apparatuses failed to receive a packet. This is because the present embodiment uses unicast retransmission in addition to multicast retransmission. Only multicast retransmission may be used, and the arrival information may indicate only whether transmission failed. Also, all packets whose transmission failed may be multicast-retransmitted. Alternatively, only multicast retransmission may be used, and the arrival information may indicate how many child station communication apparatuses failed to receive a packet. Multicast retransmission may be performed starting with, from among the packets whose transmission failed, the packet that many child station communication apparatuses failed to receive.
Also, although the wireless unit on the parent station side outputs a beacon timing signal in the present embodiment, the present invention is not limited to this. The beacon timing signal is output because it is necessary for other units to determine the timing of the beacon in order to ensure the arrival confirmation securement time in a frame. For example, units other than the wireless unit on the parent station side may generate their own beacon timing, and sometimes communicate with the wireless unit to perform correction. Also, the other units may use a clock to generate their own beacon timing in complete synchronization with the wireless unit. Also, the other units may generate and use their own beacon approximate timing from the timing of the arrival confirmation response packet output by the wireless unit.

Also, although the arrival confirmation processing unit outputs the arrival confirmation inquiry packet to each of the child station communication apparatuses when the beacon timing signal is activated in the present embodiment, the present invention is not limited to this.
The arrival confirmation processing unit may output the arrival confirmation inquiry packet before the wireless unit outputs the arrival confirmation inquiry packet component as the wireless transmission signal. However, the arrival confirmation inquiry packet is transmitted when the beacon timing signal is activated in the present embodiment since transmission before this results in the transmission being performed one frame earlier than intended. Due to the above reason, the arrival confirmation processing unit should output the arrival confirmation inquiry packet to each of the child station communication apparatuses after the beacon timing signal has been activated, and before the wireless unit outputs the arrival confirmation inquiry packet component as the wireless transmission signal.

Also, although the arrival confirmation processing unit activates the arrival information write completion flag when processing with respect to all of the arrival confirmation response packets has ended in the present embodiment, the present invention is not limited to this. Although the reliability of the exchange of the arrival confirmation inquiry packet and the arrival confirmation response packet is high due to using unicast retransmission by ACK, there is still the possibility of failed communication. A maximum time may be predetermined, and the arrival information write completion flag may be activated when the maximum time has elapsed. The arrival information securement time may be used as the maximum time.
Also, although a unicast retransmission processing unit is provided and unicast retransmission is used in the present embodiment, the present invention is not limited to this. Although a structure that uses both multicast retransmission and unicast retransmission is of course included in the scope of the present invention, the present invention should not be limited to this.

If unicast retransmission is used to recover from failed multicast distribution transmissions, this recovery will not be completed promptly if noise has affected a large number of child station communication apparatuses, since unicast retransmission involves individual retransmission to each child station communication apparatus, which is inefficient. Unicast retransmission is used to retransmit packets that few child station communication apparatuses failed to receive. It is effective to use multicast retransmission in combination at the next point to retransmit packets that many child station communication apparatuses failed to receive. Specifically, when many transmissions fail for a specified child station communication apparatus, retransmission is reliably performed by unicast retransmission in which further retransmission by ACK is possible, and while further retransmission to the other child station communication apparatuses by ACK is not possible, performing multicast retransmission, which is efficient since retransmission can be performed collectively to a plurality of child station communication apparatuses, enables efficient and reliable recovery from failed transmissions.
Note that although in the present embodiment unicast retransmission is used to perform retransmission starting with a packet that few child station communication apparatuses failed to receive, and multicast retransmission is used to perform retransmission starting with a packet that many child station communication apparatuses failed to receive, the present invention is not limited to this. It is still effective, but slightly less so, to perform both unicast and multicast retransmission starting with simply the oldest packet, regardless of how many child station communication apparatuses failed to receive packets. Also, a structure in which, from among packets that the same number of child station communication apparatuses failed to receive, the older packets are retransmitted first further enables transmission to be completed before buffers on the reception side overflow. Also, the packets may be divided into a number of groups based on age, the number of child station communication apparatuses that failed to receive the packets in each group may be referenced in order from the oldest group, unicast retransmission may be performed for packets with smaller numbers, and multicast may be performed for packets with larger numbers. Thus, performing retransmission starting with older packet groups, and assigning groups with larger numbers of child station communication retransmission apparatuses to multicast retransmission, and groups with smaller numbers of child station communication retransmission apparatuses to unicast retransmission further makes it possible to obtain the effect of completing transmissions before buffers on the reception side overflow.
Also, although 5 msec is set as the time for unicast-transmission of one packet-worth of transmission data in the present embodiment, the present invention is not limited to this. Also, although 1 msec is set as the time for multicast-retransmission of one packet-worth of transmission data in the present embodiment, the present invention is not limited to this. These times may be set by manually inputting fixed values from an external device. Measurements may be taken to automatically set these times.

Also, although the multicast distribution processing unit begins processing 1 msec after the arrival information write completion flag has been activated in the present embodiment, the present invention is not limited to this.
This is because performing this processing after the multicast retransmission processing unit makes it possible to prioritize creation of multicast retransmission data packets to be transmitted by the wireless unit first, whereafter the multicast distribution processing unit creates multicast distribution data packets to be transmitted by the wireless unit, and another method may be used as long as the aforementioned is realized. For example, the multicast distribution processing unit may begin processing 2 msec or 500 usec after the arrival information write completion flag has been activated. Also, the multicast retransmission processing unit may inform the multicast distribution processing unit when processing has finished. Also, the multicast distribution processing unit may begin processing as soon as the arrival information write completion flag has been activated, and even if multicast retransmission data packets and multicast distribution data packets are created at the same time, the wireless unit may output the multicast retransmission data packets first, and then the multicast distribution data packets.
Also, although the child station communication apparatuses have the internal structure shown in Fig.45 in the present embodiment, the present invention is not limited to this.

The child station communication apparatuses may have another structure as long as an arrival confirmation response packet having the same content as the above-mentioned confirmation response packet is returned in response to an arrival confirmation inquiry packet having the same content as the above-mentioned arrival confirmation inquiry packet.
Also, although only the arrival confirmation processing unit creates the arrival information in the present embodiment, the present invention is not limited to this. For example, the unicast retransmission performed by the unicast retransmission processing unit is reliable due to using ACK. Accordingly, the unicast retransmission processing unit may judge that the retransmission it performed did not fail, and create the arrival information 106. Also, the wireless unit may create the arrival information instead of the unicast retransmission processing unit since the wireless unit directly receives an ACK, which informs it whether the unicast retransmission was successful.
Also, although the multicast distribution processing unit creates the transmission information in the present information, the present invention is not limited to this. For example, information indicating successful transmission may be automatically added to packets that are read from the buffers.

Also, in the present embodiment, the multicast distribution processing unit calculates a maximum time available for multicast distribution in a frame from the beacon timing signal, the arrival confirmation securement time, and the multicast retransmission count, and determines the multicast distribution count upper limit. An approximate time spent for multicast retransmission is calculated from the multicast retransmission count to determine the multicast distribution count upper limit. However, the present invention is not limited to this. The wireless unit can know how much time is spent for multicast retransmission since it actually wirelessly performs this multicast retransmission. The multicast distribution processing unit may have the wireless unit directly send information indicating this time.

Although the arrival confirmation securement time is fixed in the present embodiment, the present invention is not limited to this. For example, the arrival confirmation processing unit may include an arrival confirmation securement time determination unit that determines the arrival confirmation securement time, and based on a result of an arrival confirmation, sets a long arrival confirmation securement time when there are a frequent number of failed transmissions to a specified child station communication apparatus, and otherwise sets a short arrival confirmation securement time. Thus, when there are a frequent number of failed transmission to a specified child station communication apparatus, it is possible to ensure a long arrive confirmation securement time, whereby a long amount of time will remain after arrival confirmation has been completed, and it is possible to use more reliable unicast transmission which is capable of further retransmission by ACK, and this has the effect of enabling reliable retransmission to a child station communication apparatus for which transmission frequently fails. This structure is also within the scope of the present invention.

Also, in the present embodiment, the arrival confirmation involves using unicast to individually inquire whether distribution to each of a number of child station communication apparatuses was successful. This structure has the effect of using a simple procedure to perform the most important arrival confirmation. This structure is also within the scope of the present invention. The present invention is, however, not limited to this.
For example, the arrival confirmation may involve using multicast to inquire whether distribution to the child station communication apparatuses was successful. In such a method, the ability to make simultaneous inquiries by multicast makes it possible to shorten the time required for the inquiries, which has the effect of making it possible to use the time saved from the arrival confirmation to increase the time for retransmissions. This structure is also within the scope of the present invention.

Also, if for example multicast is used to inquire whether distribution to a number of child station communication apparatuses was successful, but a response is not received from one of the child station communication apparatuses, unicast may be used to individually make another inquiry to this child station communication apparatus. In such a method, the ability to make simultaneous inquiries by multicast makes it possible to shorten the time required for the inquiries, which has the effect of making it possible to use the time saved from the arrival confirmation to increase the time for retransmissions. Moreover, although retransmission by ACK is not possible and therefore unreliable in multicast, reliable arrival confirmation can be performed by the combined use of unicast. This structure is also within the scope of the present invention.

### Application of embodiment 2

Also, the structure described in embodiment 2 may be applied in the present embodiment, thereby enabling the adjustment of transmission timing if the child station communication apparatuses and the parent station communication apparatus unicast-transmit arrival confirmation packets and other normal packets.

### Embodiment 8

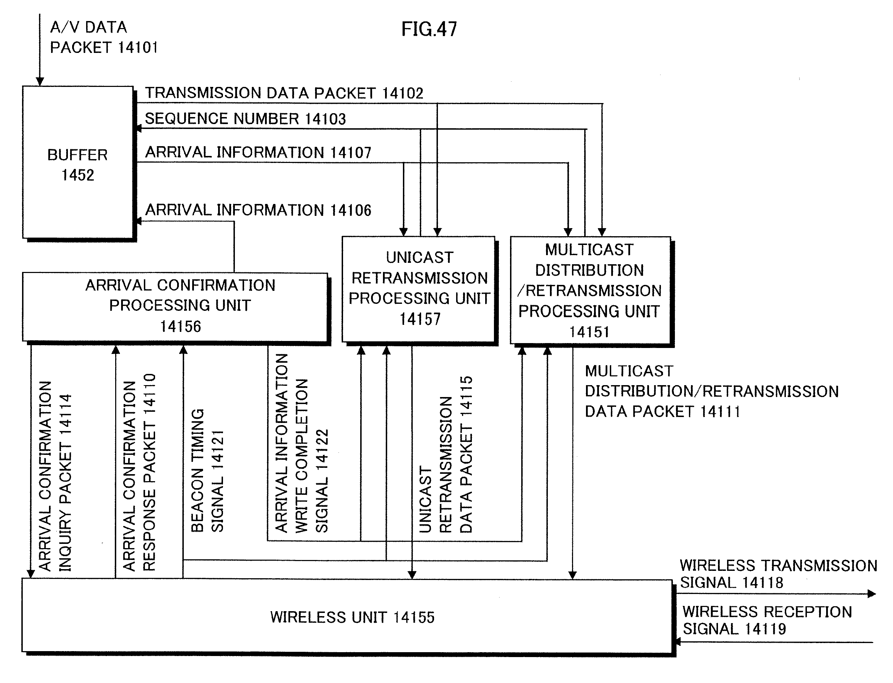

The present embodiment is similar to embodiment 7. A structure of the present embodiment is the same as that of the previous embodiment, which is shown in Fig.40. The same description is therefore not repeated here. The following description centers around structures which differ from the previous embodiment.
A parent station communication apparatus has a structure as shown in Fig.47. This structure differs from the apparatus shown in Fig.41 of the previous embodiment in that the multicast retransmission processing unit and the multicast distribution processing unit have been combined into a multicast distribution/retransmission processing unit 14151.

The multicast distribution/retransmission processing unit 14151 references the arrival information 1410 from the buffer 14152 and specifies the sequence number 14103 of the A/V data packet whose transmission has not been completed, receives the transmission data packet 14102 from the buffer 14152, attaches a multicast address, and outputs the transmission data packet 14102 to the wireless unit 14155 as a multicast distribution/retransmission data packet. the multicast distribution/retransmission processing unit 14151 also sets a maximum distribution/retransmission count in accordance with a time obtained by subtracting the arrival confirmation securement time from the frame cycle.

According to this structure, the multicast communication apparatus of the present embodiment can equally handle multicast retransmissions and new multicast distributions, and can simplify circuitry. This is a feature over the previous embodiment, and it can be seen in a comparison of Fig.47 and Fig.41 that the circuitry of the present embodiment is simpler. The present embodiment has the features of having a small circuit-scale, and enabling increased reliability in an environment in which there is a long burst error.

Various modifications and variations are possible in the previous embodiment, and the same modifications and variations are possible in the present embodiment as well.

### Embodiment 9

While having the same basic structure as in embodiment 1, the present embodiment is an exemplary structure in which all the child stations in a group are able to communicate with not only the same transmission terminal, but also different transmission terminals.

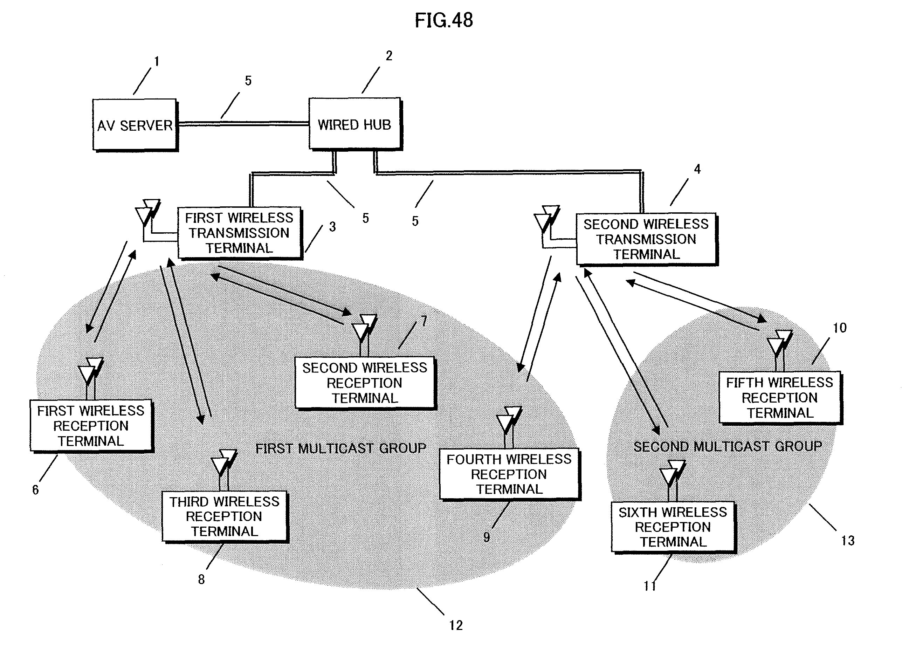

Next is a description of a system embodiment assumed by the present embodiment, with reference to Fig.48. In Fig.48, the same names and numbers are used for structures that are the same as in Fig.2.
In Fig.48, 1 is an AV server, 2 is a wired ethernet HUB, 3 is a first wireless transmission terminal, 4 is a second wireless transmission terminal, and 5 is a wired ethernet connecting the aforementioned 1, 2, 3 and 4. Also, 6 is a first wireless reception terminal, 7 is a second wireless reception terminal, 8 is a third wireless reception terminal, 9 is a fourth wireless reception terminal, 10 is a fifth wireless reception terminal, and 11 is a sixth wireless reception terminal.

The first wireless transmission terminal 3 is in a parent-child relationship with the first wireless reception terminal 6, the second wireless reception terminal 7, and the third wireless reception terminal 8, where wireless communication is performed using IEEE802.11 wireless LAN technology. Specifically, the first wireless transmission terminal 3 is an AP (access point: parent device), and the first, second and third wireless reception terminals 6, 7 and 8 are STAs (station: child device). Similarly, the second wireless transmission terminal 4 is in a parent-child relationship with the fourth wireless reception terminal 9, the fifth wireless reception terminal 10, and the sixth wireless reception terminal 11, where wireless communication is performed using IEEE802.11 wireless LAN technology. Specifically, the second wireless transmission terminal 4 is an AP (access point: parent device), and the fourth, fifth and sixth wireless reception terminals 9, 10 and 11 are STAs (station: child device).

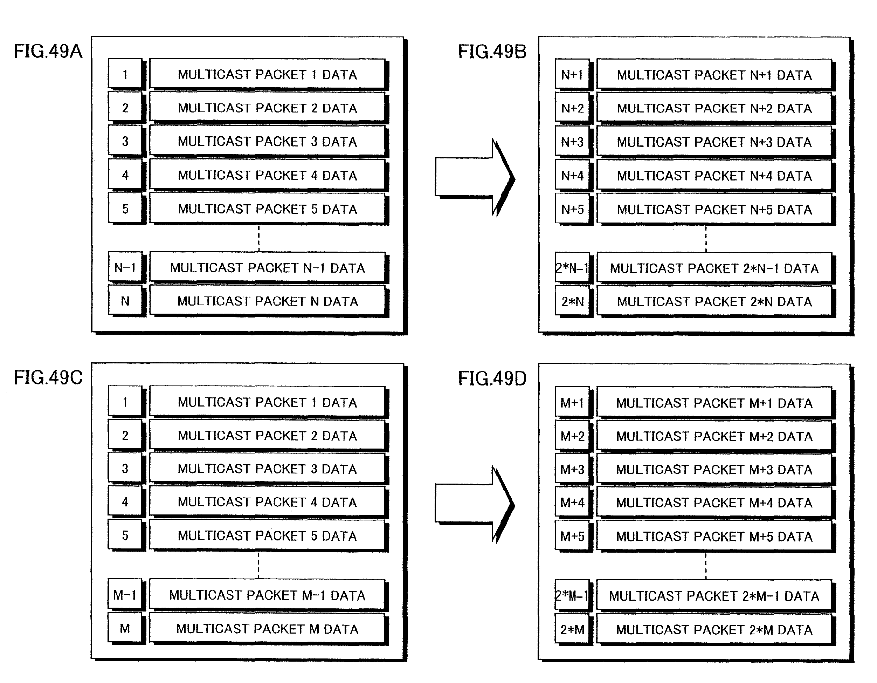

What differs from the system of Fig.2 is the structure of the multicast groups. The first, second, third and fourth wireless reception terminals 6, 7, 8 and 9 constitute the first multicast group 12 that receives the same multicast packets, and the fifth and sixth wireless reception terminals 10 and 11 constitute the second multicast group that receives the same multicast packets. Specifically, the first multicast group 12 includes the fourth wireless reception terminal 9, which is not in a parent-child relationship with the first wireless transmission terminal 3. This second wireless transmission terminal has under its management both a wireless reception terminal belonging to the first multicast group 12 and the wireless reception terminals belonging to the second multicast group 13. In this case, given that data distributed to the first multicast group 12 is not limited to being the same as data distributed to the second multicast group, the memory unit 17 of the second transmission terminal 4 has, as shown in Fig.49, transmission buffers for the two groups, including transmission buffers (a) and (b) for the first multicast group 12, and transmission buffers (c) and (d) for the secondmulticast group 13, thereby handling operations for performing retransmission to both of the groups. In this case, any of the operations described in embodiment 1 need only be performed a plurality of times simultaneously.

According to this structure, even if a transmission terminal has more than one multicast groups under its control, providing a plurality of transmission buffers and performing retransmission processing enables an improvement in the reliability of transmissions to all of the multicast groups.
Note that broadcast packets may be substituted for the multicast packets of any of the above-mentioned embodiments. Also, part or all of the constituent elements of all of the embodiments may be realized by a computer program stored in ROM and ROM and executed by a computer.

### INDUSTRIAL APPLICABILITY

A wireless multicast technique pertaining to the present invention has a feature of using priorities of packets, and is useful in AV distribution and the like which requires multicast transmission to be performed at the highest priority. The present invention is also applicable in data distribution and the like.

## Claims

1. A wireless transmission method for performing Mac layer multicast or broadcast transmission between a transmission terminal and a reception terminal, comprising the steps of:
in the transmission terminal,
temporarily storing a plurality of data clusters that are higher than a Mac layer;
attaching sequence numbers to the plurality of data clusters in one-to-one correspondence; and
transmitting the plurality of data clusters, to which the sequence numbers have been attached, with use of secured bandwidth-type or high priority-type multicast packets or broadcast packets;
in the reception terminal,
receiving and temporarily storing the plurality of data clusters that have been transmitted in the transmission step;
detecting that a data cluster from among the received data clusters is missing by referring to the sequence numbers attached in the transmission terminal;
requesting retransmission of the missing data cluster; and
in the transmission terminal,
retransmitting the missing data cluster.

2. The wireless transmission method of claim 1, wherein
in the retransmission step, the missing data cluster is transmitted at a priority that is equal to a priority of the secured bandwidth-type or high priority-type multicast packets or the broadcast packets, a next lower priority, or a further lower priority.

3. The wireless transmission method of claim 1 or 2, wherein
the retransmission step includes one of a first substep of performing the retransmission with use of a unicast packet, and a second substep of performing the retransmission to a plurality of reception terminals with use of a multicast or broadcast packet.

4. The wireless transmission method of claim 3, wherein
in the first substep, at least part of the plurality of data clusters is combined, and the combined part of the data clusters is retransmitted with use of the unicast packet.

5. The wireless transmission method of claim 1, wherein
in the retransmission request step, retransmission request data is transmitted at a priority that is equal to a priority of the secured bandwidth-type or high priority-type multicast packets or the broadcast packets, a next lower priority, or a further lower priority.

6. The wireless transmission method of claim 1, wherein
the retransmission request step includes one of a first substep of transmitting retransmission request data with use of a unicast packet, and a second substep of transmitting the retransmission request data with use of a multicast or broadcast packet.

7. The wireless transmission method of claim 5 or 6, wherein
in the retransmission request step, if a multicast or broadcast packet including retransmission request data is received from another reception terminal, the reception terminal judges whether the received retransmission request data pertains to the missing data cluster, and cancels retransmission request transmission if the judgment is in the affirmative.

8. The wireless transmission method of any of claims 1 to 7, wherein
in the retransmission step, a time for retransmission is restricted.

9. The wireless transmission method of claim 8, wherein
in the retransmission step, the transmission terminal retransmits, with use of a single unicast packet, retransmission request data that includes a plurality of sequence numbers of data clusters that have been detected as missing.

10. The wireless transmission method of claim 9, wherein
in the retransmission step, a time for retransmission is restricted.

11. A multicast transmission system used in a network communication system for transmitting intermixed stream data and asynchronous data between a transmission terminal and a plurality of reception terminals, the stream data being audio, video or the like, and asynchronous data being Internet data or the like, wherein
a stream transmission period in which the stream data is transmitted in a necessary transmission bandwidth that has been secured in advance, and an asynchronous transmission period in which the asynchronous data is transmitted are provided in a communication cycle,
the transmission terminal multicast-distributes the stream data to the plurality of reception terminals in the stream transmission period,
each of the reception terminals receives the stream data, performs error judgment on the received stream data, and, if the stream data has not been received properly, transmits a retransmission request for the stream data to the transmission terminal in the asynchronous transmission period, and
on receipt of the retransmission request, the transmission terminal multicast-retransmits the stream data in the stream transmission period of a next instance of the communication cycle.

12. The multicast transmission system of claim 11, wherein
the transmission terminal and each of the reception terminals transmit asynchronous data including the retransmission request in the asynchronous transmission period after waiting a respective time period obtained as a product of a predetermined time period and a randomly selected natural number.

13. The multicast transmission system of claim 12, wherein
the natural number randomly selected before transmission of the asynchronous data that includes the transmission request is smaller than a natural number randomly selected before transmission of other asynchronous data.

14. A multicast communication method used in a transmission terminal that multicast-distributes stream data to a plurality of reception terminals, comprising the following steps performed in a given cycle:
a multicast transmission step of transmitting the stream data with use of multicast packets;
an arrival confirmation step of confirming whether distribution of the stream data to each of the reception terminals was successful, and obtaining a result of the confirmation as an arrival confirmation result; and
a retransmission step of, in accordance with the arrival confirmation result, retransmitting the stream data whose distribution failed, wherein
in the given cycle, steps performed in the transmission terminal before the arrival confirmation step are ended if a remaining time of the given cycle is anticipated to be less than or equal to a threshold, and processing of the transmission terminal moves to a next step.

15. The multicast communication method of claim 14, wherein the retransmission step includes:
a multicast retransmission step of multicast-retransmitting the stream data whose distribution failed, and
the multicast retransmission step is performed before the multicast transmission step in the given cycle.

16. The multicast communication method of claim 14, wherein the retransmission step includes:
a unicast retransmission step of unicast-retransmitting the stream data whose distribution failed, and
the unicast retransmission step is performed after the multicast transmission step and the arrival confirmation step in the given cycle.

17. The multicast communication method of claim 14, wherein the retransmission step includes:
a multicast retransmission step of multicast-retransmitting the stream data whose distribution failed; and
a unicast retransmission step of unicast-retransmitting the stream data whose distribution failed,
the multicast retransmission step is performed first in the given cycle,
the multicast transmission step is performed second, the arrival confirmation step is performed third,
the unicast retransmission step is performed fourth, and
the unicast retransmission step ends if the given cycle has passed, and processing moves to a next instance of the given cycle.

18. The multicast communication method of claim 17, wherein
the multicast retransmission step prioritizes retransmission of, from among the multicast packets, a multicast packet that many of the reception terminals failed to receive, and ends retransmission when retransmission of all of the stream data whose distribution failed is complete or the remaining time of the given cycle is less than or equal to the threshold, and
the unicast retransmission step prioritizes retransmission of, from among the multicast packets, a multicast packet that few of the reception terminals failed to receive, and ends retransmission when retransmission of all of the stream data whose distribution failed is complete or the given cycle has ended.

19. The multicast communication method of claim 14, wherein
the arrival confirmation step individually inquires of each of the reception terminals by unicast whether distribution was successful, or collectively inquires of the plurality of reception terminals by multicast whether distribution was successful.

20. The multicast communication method of claim 14, wherein the retransmission step includes:
a multicast retransmission step of multicast-retransmitting the stream data whose distribution failed,
the multicast retransmission step and the multicast transmission step are performed before the arrival confirmation step in the given cycle, and
the arrival confirmation step begins when the remaining time of the given cycle is less than or equal to the threshold.
